# EUROPÄISCHE PATENTSCHRIFT

(11) **EP 0 681 055 B1**
(45) Veröffentlichungstag und Bekanntmachung des Hinweises auf die Patenterteilung: **09.08.2000**
(21) Anmeldenummer: 95106116.7
(22) Anmeldetag: 24.04.1995
(51) Int. Cl.: D06P 3/58, C09B 67/22

(54) **Verfahren zum Färben oder Bedrucken von hydroxylgruppenhaltigen Fasermaterialien**
Process for dyeing or printing fibrous material having hydroxyl groups
Procédé pour teindre ou imprimer des matériaux fibreux ayant des groupements hydroxyl

(30) Priorität: 05.05.1994 DE 4415779
(43) Veröffentlichungstag der Anmeldung: 08.11.1995
(73) Patentinhaber: BAYER AG, 51368 Leverkusen (DE)
(72) Erfinder: Reddig, Wolfram, Dr., D-51373 Leverkusen (DE); Wolff, Joachim, Dr., D-51519 Odenthal (DE); Hanxleden, Ulrich, D-51377 Leverkusen (DE)

(56) Entgegenhaltungen:
- EP-A- 0 425 907
- EP-A- 0 485 329
- EP-A- 0 549 529
- WO-A-93/18224

## Beschreibung

Die vorliegende Erfindung betrifft ein Verfahren zum Färben oder Bedrucken von hydroxylgruppenhaltigen Fasermaterialien mit Farbstoffmischungen nach dem Dichromieprinzip.

Für das Färben oder Bedrucken von textilen Fasermaterialien nach dem Dichromieprinzip benötigt man unter anderem Farbstoffe mit möglichst gleichmäßigem Farbaufbau bei gleichzeitiger Nuancenkonstanz in verschiedenen Konzentrationen und einer guten Kombinierbarkeit, um gefärbte/bedruckte textile Fasermaterialien zu erhalten, die den Anforderungen weitgehend genügen. Mischungen aus einem gelb- oder orangefärbenden zusammen mit einem blau- und/oder rotfärbenden Farbstoff sind bekannt aus EP-A-549 529.

Mit den bisher verwendeten Farbstoffen/Farbstoffmischungen war dieses Ziel nicht immer zu erreichen, insbesondere bezüglich Kombinierbarkeit, Ziehgeschwindigkeit, Ziehgrad, speziell in tiefen, klaren Tönen, Faser- und Flächenegalität sowie Allgemeinechtheiten, wie z.B. Naßechtheit, und es war deshalb die Aufgabe der vorliegenden Erfindung, verbesserte Verfahren zum Färben oder Bedrucken von hydroxylgruppenhaltigen Fasermaterialien, insbesondere nach dem Dichromieprinzip bereitzustellen.

Die vorliegende Erfindung betrifft ein Verfahren zum Färben oder Bedrucken von hydroxylgruppenhaltigen Fasermaterialien, welches dadurch gekennzeichnet ist, daß man mindestens einen blaufärbenden Farbstoff der Formel 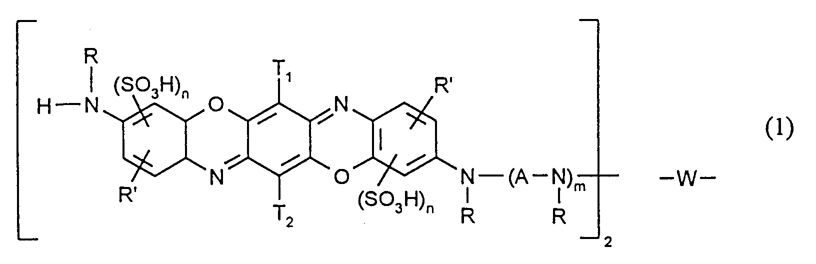 zusammen mit mindestens einem gelbfärb enden und/oder mindestens einem rotfärbenden und/oder mindestens einem marineblau- oder schwarzfärbenden Farbstoff verwendet, wobei
- R =: Wasserstoff oder gegebenenfalls substituiertes Alkyl, insbesondere C₁-C₄-Alkyl
- R' =: Wasserstoff oder Substituent
- T₁, T₂ =: Wasserstoff Chlor, Brom, gegebenenfalls substituiertes C₁-C₄-Alkyl, C₁-C₄-Alkoxy, Phenyl oder Phenoxy
- W =: Brückenglied der Formel 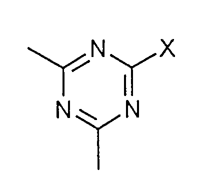 worin
- X =: H oder bei triazinverbrückten Farbstoffen üblicher Substituent, 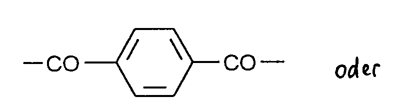 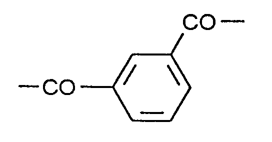
- A =: gegebenenfalls substituierter Alkylen-, Cycloalkylen-, Arylen- oder Aralkylenrest
- m, n =: 0 oder 1,
wobei Substituenten und Indices gleicher Bezeichnung unterschiedliche Bedeutungen haben können.

Wenn n = 1, steht die Sulfogruppe in o-Stellung zum Substituenten -NR-.

Weiterhin betrifft die vorliegende Erfindung Farbstoffmischungen enthaltend wenigstens einen blaufärbenden Farbstoff der Formel (I) zusammen mit mindestens einem gelbfärbenden und/oder mindestens einem rotfärbenden und/oder mindestens einem marineblau- oder schwarzfärbenden Farbstoff.

Bei den Brückengliedern W kann es sich um die bei Farbstoffen üblichen Brückenglieder handeln, die z.B. aus EP-A-361 186 (= US-A-4 990 615), DE-A-4 005 551 (= US-A-5 122 605), DE-A-3 936 183, DE-A-3 939 700 und EP-A-485 329 (= US-A-5 268 475) bekannt sind.

Beispiele für R sind: CH₃, C₂H₅, n-C₃H₇, i-C₃H₇, n-C₄H₉, n-C₆H₁₃, die beispielsweise durch OH, OCH₃, OC₂H₅, COOH, SO₃H, OSO₃H, CN, Cl substituiert sein können.

Substituenten der gegebenenfalls substituierten C₁-C₄-Alkyl- und C₁-C₄-Alkoxyreste T₁ bzw. T₂ sind beispielsweise C₁-C₄-Alkoxy oder OSO₃H.

Substituenten der gegebenenfalls substituierten Phenyl- und Phenoxyreste T₁ bzw. T₂ sind beispielsweise Cl, Br, C₁-C₄-Alkyl, C₁-C₄-Alkoxy und SO₃H.

Geeignete Substituenten R' sind beispielsweise folgende: Halogen wie Cl, C₁-C₄-Alkyl, C₁-C₄-Alkoxy, COOH.

Beispiele für Substituenten X sind: Halogenatome wie Fluor, Chlor oder Brom; die Sulfonsäuregruppe, niederes Alkyl, wie Methyl, Ethyl, n-Propyl, i-Propyl, n-Butyl oder t-Butyl, eine Thioethergruppe beispielsweise eine solche der allgemeinen Formel -S-R₁ oder eine Ethergruppe beispielsweise eine solche der allgemeinen Formel -O-R₂, in welchen
- R₁: einen Substituenten aus der Gruppe Alkyl oder substituiertes Alkyl, wie beispielsweise durch Substituenten aus der Gruppe Hydroxy, niederes Alkoxy, Sulfato, Sulfo, Carboxy und Phenyl substituiertes Phenyl, wie beispielsweise durch Substituenten aus der Gruppe Nitro, Sulfo und Carboxy substituiertes Phenyl, bedeutet und
- R₂: ein Wasserstoffatom ist oder die obengenannte Bedeutung von R₁ besitzt, eine gegebenenfalls substituierte Aminogruppe beispielsweise eine solche der allgemeinen Formel -NR₃R₄, in welcher
- R₃: ein Wasserstoffatom, ein aliphatischer Rest, ein araliphatischer Rest oder ein cycloaliphatischer Rest ist, wie beispielsweise ein niederer Alkylrest, der durch ein oder zwei Substituenten aus der Gruppe Hydroxy, Sulfato, niederes Alkoxy, Sulfo, Carboxy und Phenyl substituiert sein kann oder ein Cyclohexylrest und
- R₄: für ein Wasserstoffatom, einen aliphatischen Rest, beispielsweise einen niederen Alkylrest, der durch Hydroxy, niederes Alkoxy, Sulfato, Sulfo und Carboxy substituiert sein kann oder für einen gegebenenfalls substituierten aromatischen Rest, wie beispielsweise für einen Phenyl-oder Naphthylrest, der durch ein oder zwei Substituenten aus der Gruppe Hydroxy, Carboxy, Sulfo, niederes Alkyl und niederes Alkoxy substituiert sein kann oder für einen gegebenenfalls substituierten araliphatischen Rest, wie beispielsweise einen niederen Alkylrest, der durch Phenyl oder Naphthyl substituiert ist oder für eine Hydroxy- oder eine niedere Alkoxygruppe oder für eine gegebenenfalls substituierte Aminogruppe, wie beispielsweise die Aminogruppe oder eine Phenylamino- oder niedere Alkylaminogruppe, steht oder in welcher
- R₃ und R₄: zusammen mit dem Stickstoffatom einen heterocyclischen Ring mit einem Alkylenrest von 2 bis 8, vorzugsweise 5 bis 7, C-Atomen oder einen, zwei oder drei niedere Alkylenreste und 1 oder 2 Heteroatome, wie beispielsweise ein Stickstoffatom oder Sauerstoffatom, enthaltenden heterocyclischen Ring bilden, wie beispielsweise den Morpholin-, Piperidin-oder Piperazin-Ring.

Bei A als gegebenenfalls substituiertem Alkylenrest handelt es sich z.B. um einen gegebenenfalls substituierten C₂-C₆-Alkylenrest und bevorzugt um einen unsubstituierten oder z.B. durch Hydroxy, Sulfo, Sulfato, C₁-C₄-Alkoxy, Carboxy, Cyano, Halogen, Phenyl, Sulfophenyl oder C₂-C₅-Alkoxycarbonyl substituierten und/oder gegebenenfalls durch 1 bis 2 Gruppen -O-, -N(R'')-, worin R'' C₁-C₄-Alkyl, Acetyl oder insbesondere Wasserstoff bedeutet, -S-, -SO₂- oder einen cycloaliphatischen oder heterocyclisch-aliphatischen Rest unterbrochenen C₂-C₆-Alkylenrest.

Beispiele für geeignete Alkylenreste A sind 1,2-Ethylen, 1,2- und 1,3-Propylen, 1-Ethyl-1,2-ethylen, 2-Hydroxy-1,3-propylen, 2-Sulfato-1,3-propylen, 1- und 2-Phenyl-1,3-propylen, 2-(4'-Sulfophenyl)-1,3-propylen, 1,4-, 2,3- und 2,4-Butylen, 1,2-Dimethyl-1,2-ethylen, 1-Phenyl-1,2-ethylen, 2-Methyl-1,3-propylen, 2,2-Dimethyl-1,3-propylen, 1-Chlor-2,3-propylen, 1,5- und 2,4-pentylen, 2-Methyl-2,4-pentylen, 1-Carboxy-1,5-pentylen, 2,3-Diphenyl-1,4-butylen, 1-Methoxycarbonyl-1,5-pentylen, 1,6- und 2,5-Hexylen, 2-Carboxy-1,3-propylen, 2-Methoxy-1,3-propylen, ein Rest der Formel -CH₂-CH₂-Z'-CH₂-CH₂-, worin Z' -O-, -S-, -SO₂-, -NH- oder -N(CH₃)- bedeutet oder ein Rest der Formel

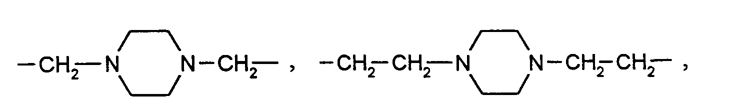

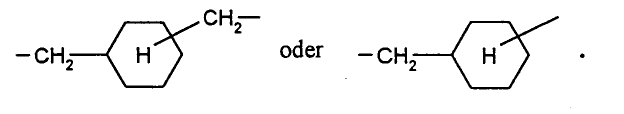

A steht als Alkylenrest besonders bevorzugt für einen unsubstituierten oder durch Hydroxy, Sulfo, Sulfato, Methoxy, Carboxy oder Sulfophenyl substituierten C₂-C₄-Alkylenrest und insbesondere bevorzugt für einen unsubstituierten oder durch Hydroxy oder Sulfato substituierten 1,2-Ethylen oder 1,2- oder 1,3-Propylenrest. In einer besonders bevorzugten Ausführungsform der Erfindung steht A für 1,2-Ethylen, 1,2- oder 1,3-Propylen oder für 2-Sulfato-1,3-propylen.

Bei A als gegebenenfalls substituiertem Cycloalkylen handelt es sich z.B. um gegebenenfalls substituiertes C₅-C₉-Cycloalkylen und bevorzugt um unsubstituiertes oder einfach oder mehrfach durch C₁-C₃-Alkyl subsitituiertes Cyclopentylen oder Cyclohexylen; besonders bevorzugt steht hierbei A für unsubstituiertes oder durch 1 bis 4 Methylgruppen substituiertes Cyclohexylen.

Beispiele für geeignete cycloaliphatische Reste A sind:
1,3- und 1,4-Cyclohexylen, 4-Methyl-1,3-cyclohexylen, 2-Methyl-1,3-cyclohexylen, 5,5-Dimethyl-1,3-cyclohexylen, 2-Methyl-1,4-cyclohexylen, 4,6-Dimethyl-1,3-cyclohexylen und 4-Methyl-1,2-cyclohexylen.

Steht A für einen bivalenten Arylrest, so kann dies z.B. ein unsubstituierter oder z.B. durch C₁-C₄-Alkyl, C₁-C₄-Alkoxy, Sulfo, Halogen oder Carboxy substituierter Phenylen-, Biphenylen oder Naphthylenrest sein.

Beispiele für Arylenreste A sind: 1,3- und 1,4-Phenylen, 2-Sulfo-1,4-phenylen, 2,5-Disulfo-1,4-phenylen, 4-Sulfo-1,3-phenylen, 2-Methyl-1,4-phenylen, 2-Carboxy-1,4-phenylen, 2-Methoxy-1,4-phenylen, 4,8-Disulfo-2,6-naphthylen, 8-Sulfo-2,6-naphthylen, 1,4-Naphthylen und 1,1'-Biphenyl-4,4'-diyl.

A steht als Arylenrest vorzugsweise für einen unsubstituierten oder durch Sulfo, Methyl, Methoxy oder Carboxy substituierten 1,3- oder 1,4-Phenylenrest oder für einen unsubstituierten oder durch Sulfo substituierten Naphthylenrest.

Bei A als Arylenrest handelt es sich besonders bevorzugt um unsubstituiertes oder durch Sulfo substituiertes 1,3- oder 1,4-Phenylen.

Bedeutet A einen gegebenenfalls substituierten Aralkylenrest, so kann die z.B. ein C₁-C₆-Alkylen-phenylen-, ein Phenylen-C₁-C₆-alkylen-phenylen, ein C₁-C₃-Alkylenphenylen-C₁-C₃-alkylen- oder ein Methylen-naphthylen-methylenrest sein, wobei in diesen Aralkylenresten das Alkylen gegebenenfalls wie zuvor angegeben substituiert und/oder durch eine der zuvor genannten Heterogruppen unterbrochen sein kann und das Phenylen und Naphthylen gegebenenfalls noch 1 oder 2 Substituenten ausgewählt aus der Gruppe Sulfo, Carboxy, Sulfamoyl, Carbamoyl, Methyl, Ethyl, Methoxy, Ethoxy, Nitro, Chlor, Amino, N-Methyl- und N-Ethylamino, N,N'-Dimethyl- und N,N'-Diethylamino und Phenylamino tragen kann.

Beispiele für geeignete Aralkylenreste A sind:

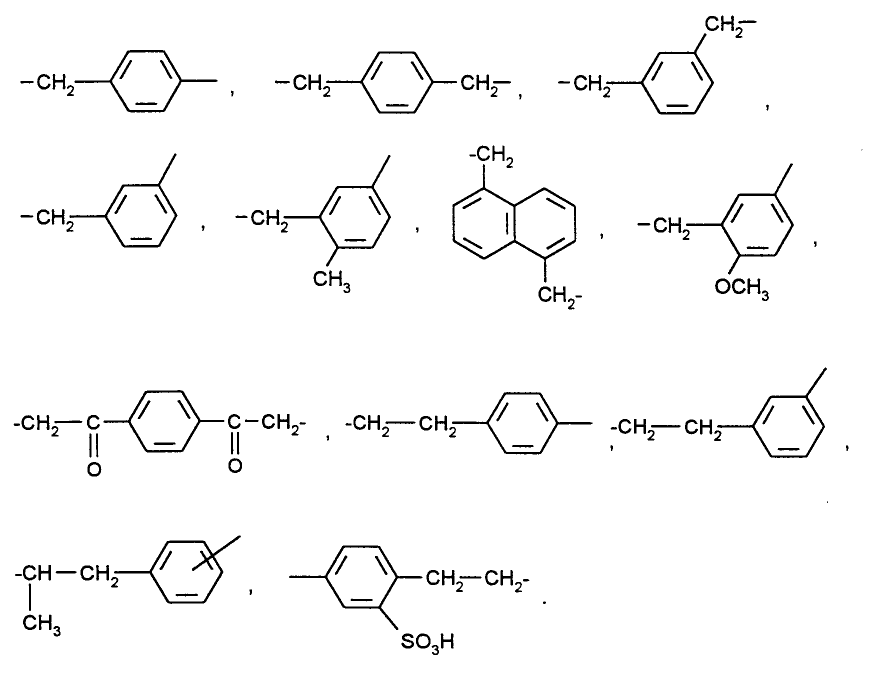

A stellt als Aralkylenrest bevorzugt einen C₁-C₃-Alkylen-phenylen- oder C₁-C₂-Alkylen-phenylen-C₁-C₂-alkylenrest dar, der im Phenylteil unsubstituiert oder z.B. durch Methyl, Methoxy, Chlor oder Sulfo substituiert ist.

A bedeutet vorzugsweise einen unsubstituierten oder durch Hydroxy, Sulfo, Sulfato, Methoxy, Carboxy oder Sulfophenyl substituierten C₂-C₄-Alkylenrest, -CH₂-CH₂-Z'-CH₂-CH₂- worin Z' -O-, -S-, -SO₂-, -NH- oder -N(CH₃)- bedeutet, einen unsubstituierten oder durch 1 bis 4 Methylgruppen substituierten Cyclohexylenrest, einen unsubstituierten oder durch Sulfo substituierten 1,3-oder 1,4-Phenylenrest oder einen C₁-C₃-Alkylenphenylen- oder C₁-C₂-Alkylen-phenylen-C₁-C₂-alkylenrest, worin das Phenylen jeweils unsubstituiert oder durch Methyl, Methoxy, Chlor oder Sulfo substituiert ist.

Verbindungen, bei denen m = 1 ist, sind beispielsweise beschrieben in der EP-A-485 329.

Der obige Formelrest R₁, vorzugsweise nicht jedoch der Formelrest R₂, kann auch den Benzthiazolyl-(2)-Rest bedeuten.

Aliphatische Reste sind ganz generell beispielsweise gegebenenfalls substituierte Alkylreste mit 1 bis 10 C-Atomen, die gegebenenfalls durch Heteroatome bzw. Heteroatomgruppierungen unterbrochen sein können, beispielsweise durch O, N, S, CONH, SO₂NH, SO₂.

Niedere Alkyl- bzw. Alkoxyreste sind solche mit 1 bis 4 C-Atomen.

Im Rahmen der Formel (1) bevorzugte Farbstoffe entsprechen der Formel 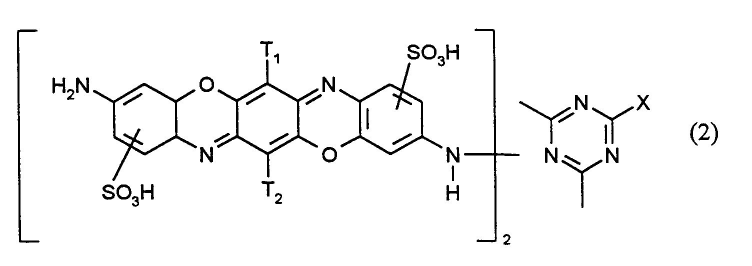 worin T₁, T₂ und X die angegebene Bedeutung haben. Weiterhin sind Farbstoffe der Formeln (1) oder (2) bevorzugt, in denen T₁, T₂ = Cl oder OCH₃.

Bevorzugt stellt X ein Chloratom oder eine Sulfogruppe oder einen Rest der Formel -S-R₁ oder -O-R₂ dar, in welchen R₁ bevorzugt einen Phenylrest, der durch Chlor oder Nitro substituiert sein kann, oder einen niederen Alkylrest, der durch Hydroxy oder Carboxy substituiert sein kann, bedeutet und R₂ bevorzugt ein Wasserstoffatom oder ein niederer Alkylrest oder ein Phenylrest ist, der durch Sulfo oder Carboxy substituiert sein kann. Der Formelrest X bedeutet weiterhin bevorzugt eine Aminogruppe der Formel -NR₃R₄, in welcher R₃ bevorzugt ein Wasserstoffatom oder eine niedere Alkylgruppe bedeutet, die durch eine Carboxy- oder Sulfogruppe substituiert sein kann und in welcher R₄ bevorzugt ein Wasserstoffatom oder eine niedere Alkylgruppe bedeutet, die durch eine Hydroxy-, Sulfato-, Carboxy-, Sulfo-, niedere Alkoxy-Gruppe, einen Phenylrest oder einen Cyclohexylrest substituiert sein kann.

Weiterhin bevorzugt sind Aminreste -NR₃R₄, in denen R₃ und R₄ gegebenenfalls unter Einschluß eines weiteren Heteroatoms einen Ring bilden.

Beispiele für bevorzugte Reste X sind:

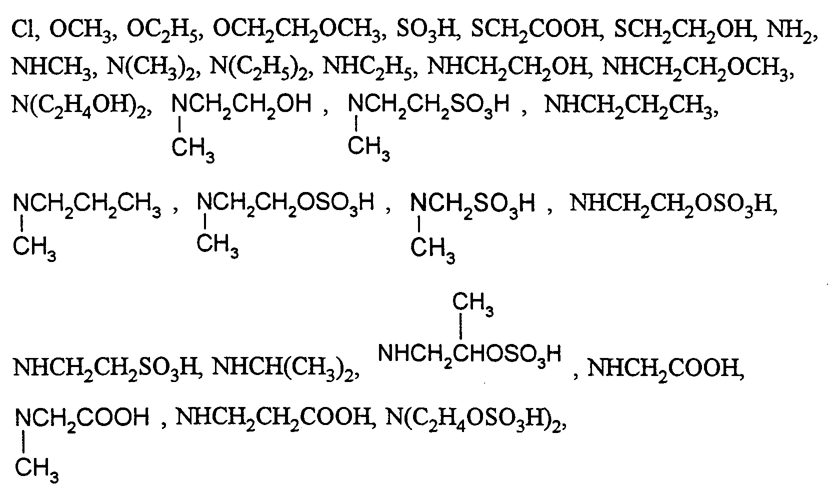

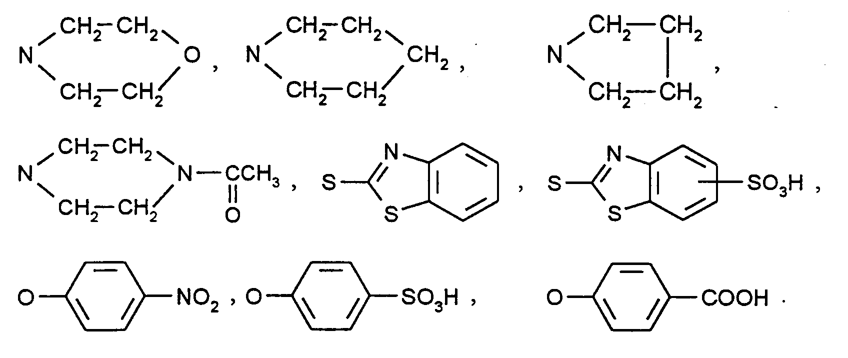

Als Farbstoffe der Formel (2) sind für das erfindungsgemäße Verfahren die Farbstoffe der Formeln 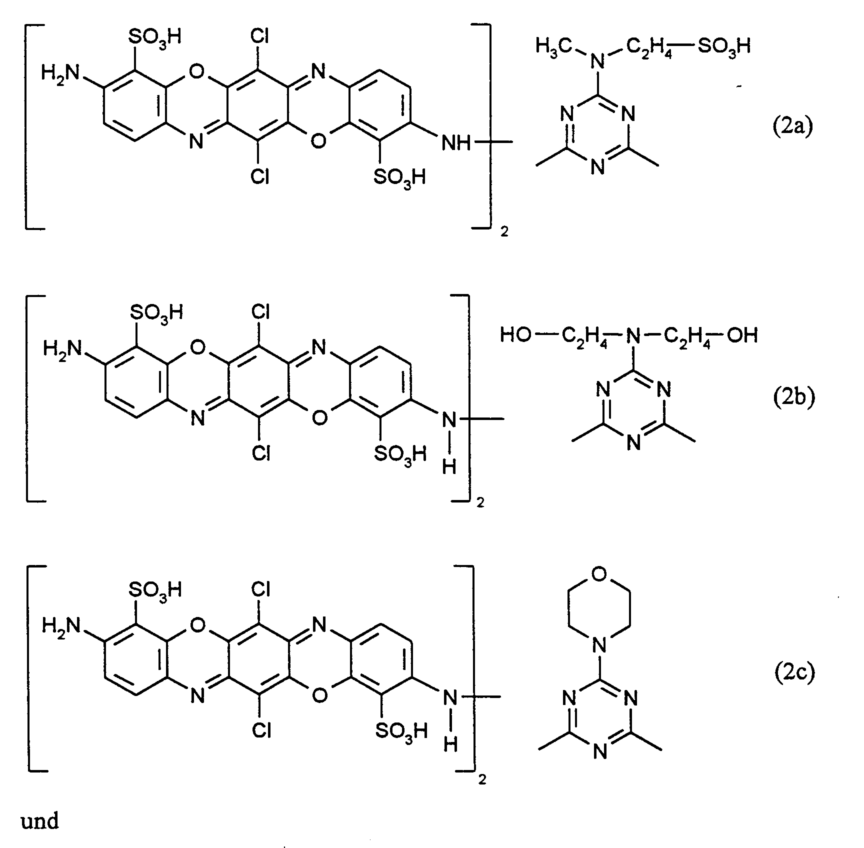 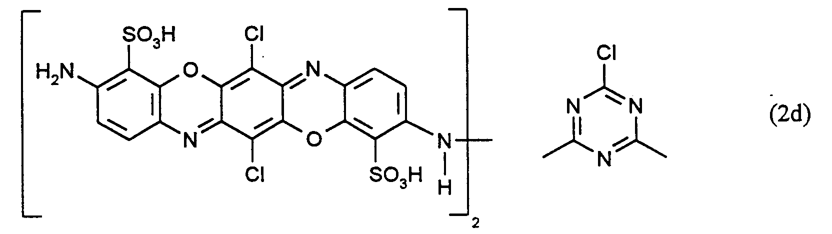 insbesondere der Farbstoff der Formel (2a) von besonderem Interesse.

Andere besonders bevorzugte Farbstoffe der Formel (I) sind:

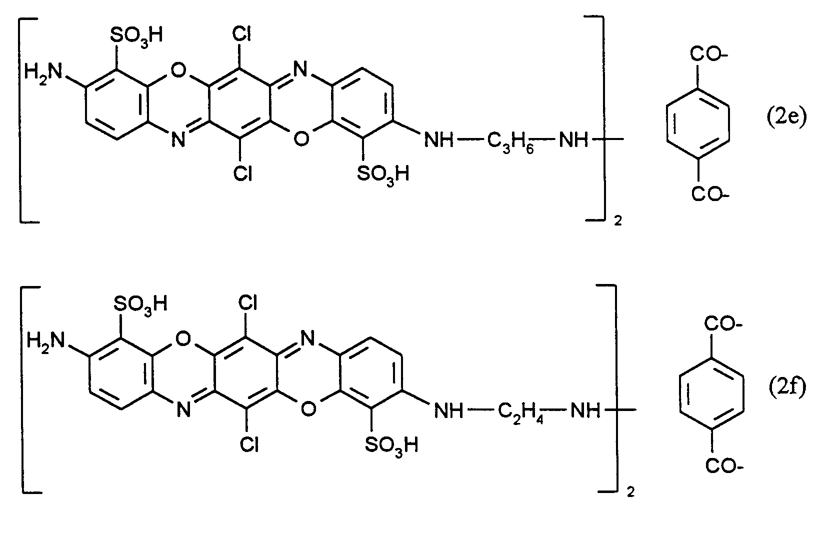

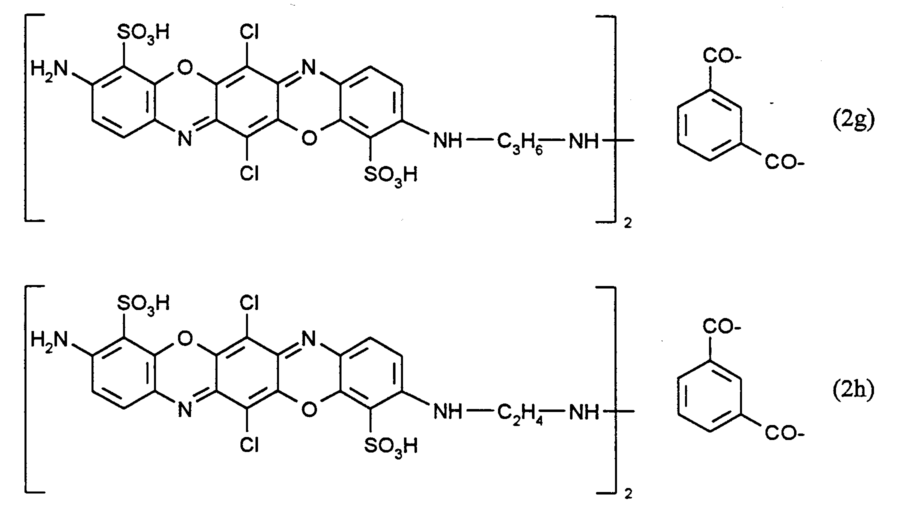

Als gelbfärbende Farbstoffe verwendet man in den erfindungsgemäßen Verfahren vorzugsweise mindestens einen Farbstoff der Formeln (3) und (4) 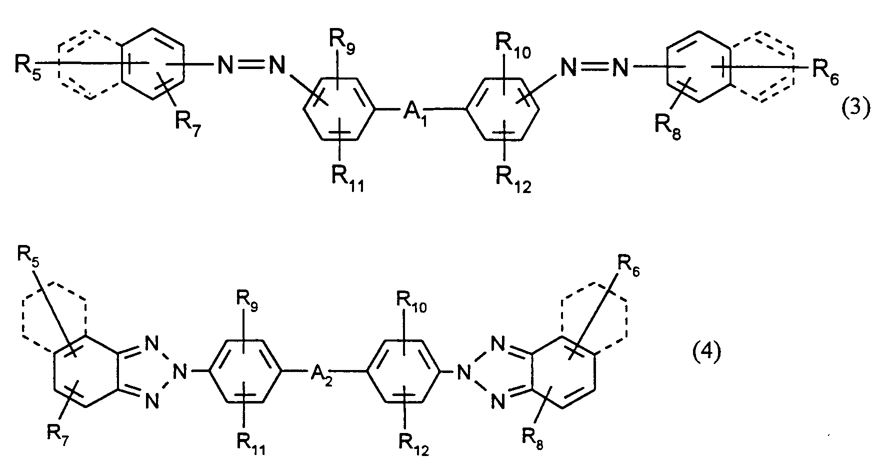 worin
- R₅ und R₆: Wasserstoff, C₁-C₈-Alkyl, C₁-C₈-Alkoxy, Halogen, Carboxy, Sulfo, Ureido, gegebenenfalls im Alkylteil substituiertes C₂-C₆-Alkanoylamino oder gegebenenfalls substituiertes Arylazo,
- R₇, R₈, R₉, R₁₀, R₁₁ und R₁₂,: Wasserstoff, C₁-C₈-Alkyl, C₁-C₈-Alkoxy, Halogen, Carboxy, Sulfo, Ureido oder gegebenenfalls im Alkylteil substituiertes C₂-C₆-Alkanoylamino bedeuten und
- A₁: ein Rest der Formel

―CH=CH― (5)

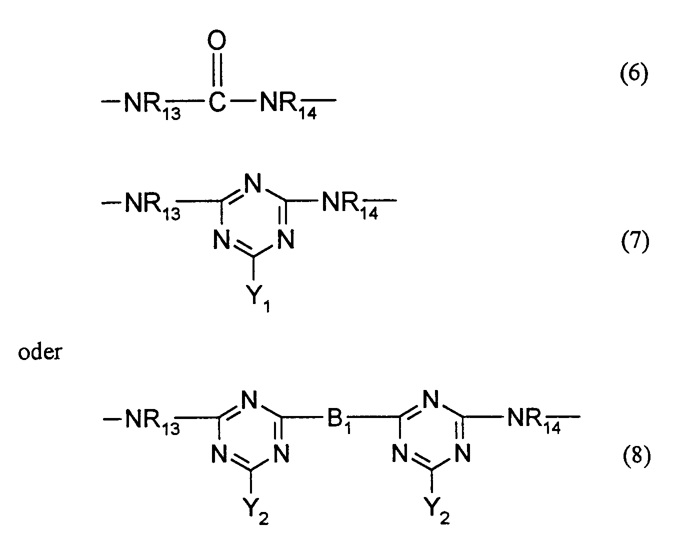

und
- A₂: ein Rest der Formel 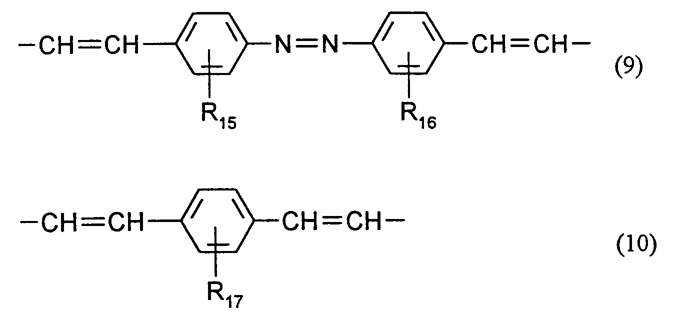 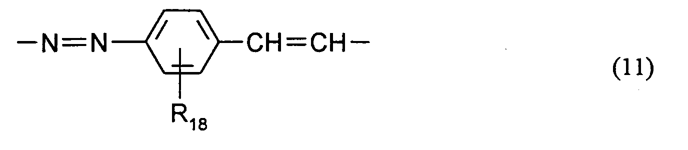 ist, wobei
- R₁₃ und R₁₄: Wasserstoff oder gegebenenfalls substituiertes C₁-C₈-Alkyl,
- Y₁: im Rest der Formel (7) und Y₂ im Rest der Formel (8) Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl bedeuten,
- B₁: im Rest der Formel (8) ein Brückenglied ist und
- R₁₅, R₁₆, R₁₇ und R₁₈: Wasserstoff, C₁-C₈-Alkyl, C₁-C₈-Alkoxy, Halogen, Carboxy, Sulfo, Ureido oder gegebenenfalls im Alkylteil substituiertes C₂-C₆-Alkanoylamino bedeuten.

Als Halogen kommen für R₅, R₆, R₇, R₈, R₉, R₁₀, R₁₁ und R₁₂ in den Formeln (3) und (4) und R₁₅, R₁₆, R₁₇ und R₁₈ in den Formeln (9) bis (11) unabhängig voneinander z.B. Fluor, Brom oder insbesondere Chlor in Betracht.

Als C₁-C₈-Alkyl kommen für R₅, R₆, R₇, R₈, R₉, R₁₀, R₁₁ und R₁₂ in den Formeln (3) und (4), R₁₃ und R₁₄ in den Formeln (6) bis (8) und R₁₅, R₁₆, R₁₇ und R₁₈ in den Formeln (9) bis (11) unabhängig voneinander z.B. Methyl, Ethyl, Propyl, Isopropyl, Butyl, sek.-Butyl, tert.-Butyl, Isobutyl, Pentyl, Hexyl, Heptyl und Octyl in Betracht. Vorzugsweise sind R₅ bis R₁₈ C₁-C₈-Alkyl.

Die Reste R₁₃ und R₁₄ in den Formeln (6) bis (8) als C₁-C₈-Alkyl können substituiert sein, z.B. durch C₁-C₄-Alkoxy, C₁-C₄-Alkoxycarbonyl, Hydroxy, Halogen, wie z.B. Chlor oder Fluor, Carboxy, Cyan, Sulfo oder Sulfato.

Als Beispiele seien Carboxymethyl, β-Carboxyethyl, Methoxycarbonylmethyl, Ethoxycarbonylmethyl, β-Methoxyethyl, β-Ethoxyethyl, β-Chlorethyl, γ-Chlorpropyl, β-Hydroxyethyl, β-Hydroxybutyl, β-Cyanethyl, Sulfomethyl, β-Sulfoethyl, β-Sulfatoethyl genannt.

Vorzugsweise haben R₁₃ und R₁₄ die gleichen Bedeutungen. Bevorzugt sind R₁₃ und R₁₄ Wasserstoff oder C₁-C₄-Alkyl, insbesondere Wasserstoff.

Als C₁-C₈-Alkoxy kommt für R₅, R₆, R₇, R₈, R₉, R₁₀, R₁₁ und R₁₂ in den Formeln (3) und (4) und R₁₅, R₁₆, R₁₇ und R₁₈ in den Formeln (9) bis (11) insbesondere C₁-C₄-Alkoxy, wie Methoxy, Ethoxy, Propoxy, Isopropoxy, Butoxy, sek.-Butoxy, Isobutoxy oder tert.-Butoxy in Betracht.

Als C₂-C₈-Alkoxy kommt für R₅, R₆, R₇, R₈, R₉, R₁₀, R₁₁ und R₁₂ in den Formeln (3) und (4) und R₁₅, R₁₆, R₁₇ und R₁₈ in den Formeln (9) bis (11), insbesondere C₂-C₄-Alkanoylamino, wie z.B. Acetylamino oder Propionylamino, in Betracht. Als im Alkylteil substituiertes C₂-C₆-Alkanoylamino kommen z.B. die durch Carboxy oder insbesondere Hydroxy substituierten Reste in Betracht.

Als Arylazo kommen für R₅ und R₆ in der Formel (3) unabhängig voneinander z.B. Naphthylazo- oder vorzugsweise Phenylazoreste in Betracht, wobei die genannten Reste jeweils unsubstituiert oder z.B. durch Sulfo, C₁-C₄-Alkyl, C₁-C₄-Alkoxy und/oder Halogen weitersubstituiert sein können. Insbesondere handelt es sich dabei um einen unsubstituierten oder durch Sulfo, Methyl, Methoxy und/oder Chlor substituierten Phenylazorest.

Beispiele für Substituenten Y₁ in der Formel (7) und Y₂ in der Formel (8) sind Hydroxy, Methoxy, Ethoxy, n- oder iso-Propoxy, Chlor, Methylthio, Ethylthio, Amino, Methylamino, Ethylamino, Carboxymethylamino, β-Hydroxyethylamino, N,N-Di-β-hydroxyethylamino, β-Sulfoethylamino, Phenylamino, o-, m- oder p-Methylphenylamino, o-, m- oder p-Methoxyphenylamino, o-, m- oder p-Chlorphenylamino, o-, m- oder p-Sulfophenylamino, 2,4- oder 2,5-Disulfophenylamino, o-Carboxyphenylamino, N-Ethyl-N-phenylamino, N-Methyl-N-phenylamino und Morpholino.

Bevorzugt sind Y₁ und Y₂ unabhängig voneinander Chlor, Amino, unsubstituiertes oder im Alkylteil durch Hydroxy substituiertes N-Mono- oder N,N-Di-C₁-C₄-Alkylamino, Phenylamino oder Morpholino, insbesondere Morpholino oder Chlor.

Als Brückenglieder B₁ in Formel (8) kommen z.B. die Reste der Formeln

-NR₁₃-(CH₂)₂₋₄NR₁₄- (12)

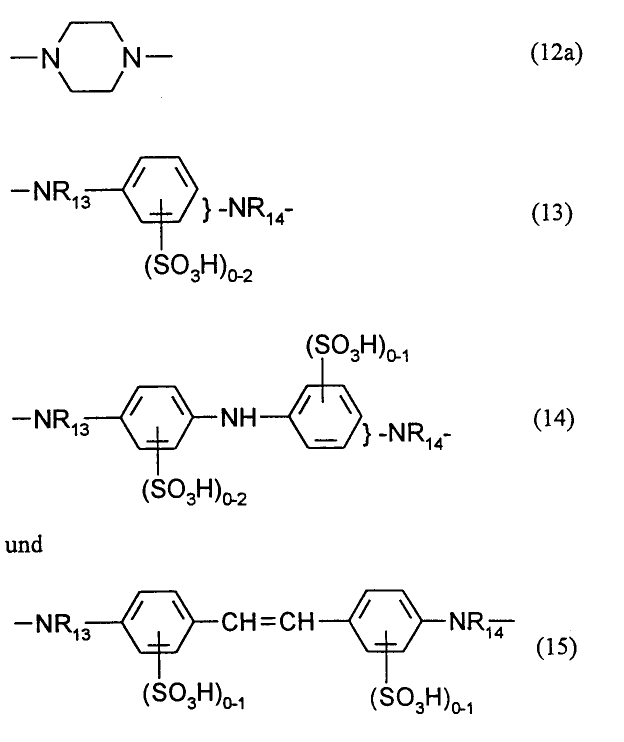

in Betracht, wobei R₁₃ und R₁₄ die zuvor angegebenen Bedeutungen und Bevorzugungen haben. Vorzugsweise ist B₁ ein Rest der Formel (12a).

Bevorzugt verwendet man Farbstoffe der Formeln (3) und (4), worin R₅, R₆, R₇, R₈, R₉, R₁₀, R₁₁ und R₁₂ und R₁₅, R₁₆, R₁₇ und R₁₈ in den Formeln (9) bis (11) Wasserstoff, C₁-C₄-Alkyl, C₁-C₄-Alkoxy, C₂-C₄-Alkanoylamino, Halogen oder Sulfo sind, R₅, R₆, R₇ und R₈ in den Formeln (3) und (4) und R₁₅, R₁₆, R₁₇ und R₁₈ in den Formeln (9) bis (11) sind insbesondere Wasserstoff oder Sulfo.

Besonders bevorzugt verwendet man Farbstoffe der Formeln (3), (4) und (9) bis (11), worin R₅, R₆, R₇, R₈, R₁₅, R₁₆, R₁₇ und R₁₈ Wasserstoff oder Sulfo, R₉, R₁₀, R₁₁ und R₁₂ Wasserstoff, C₁-C₄-Alkyl, C₁-C₄-Alkoxy, C₂-C₄-Alkanoylamino, Halogen oder Sulfo sind, B₁ ein Rest der Formel (12a) ist und Y₁ und Y₂ Chlor, Amino, unsubstituiertes oder im Alkylteil durch Hydroxy substituiertes N-Mono- oder N,N-Di-C₁-C₄-Alkylamino, Phenylamino oder Morpholino, insbesondere Morpholino oder Chlor, sind.

Als Farbstoffe der Formeln (3) und (4) sind für das erfindungsgemäße Verfahren die Farbstoffe der Formeln (16) bis (25) 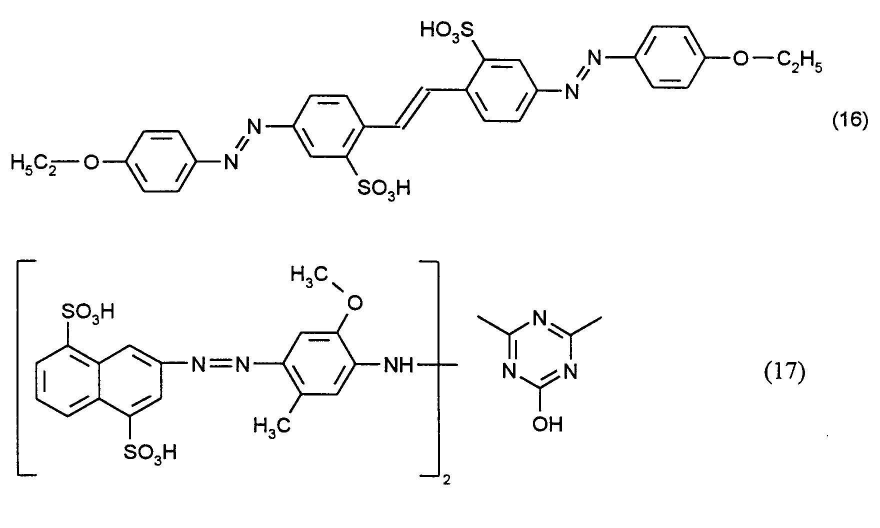 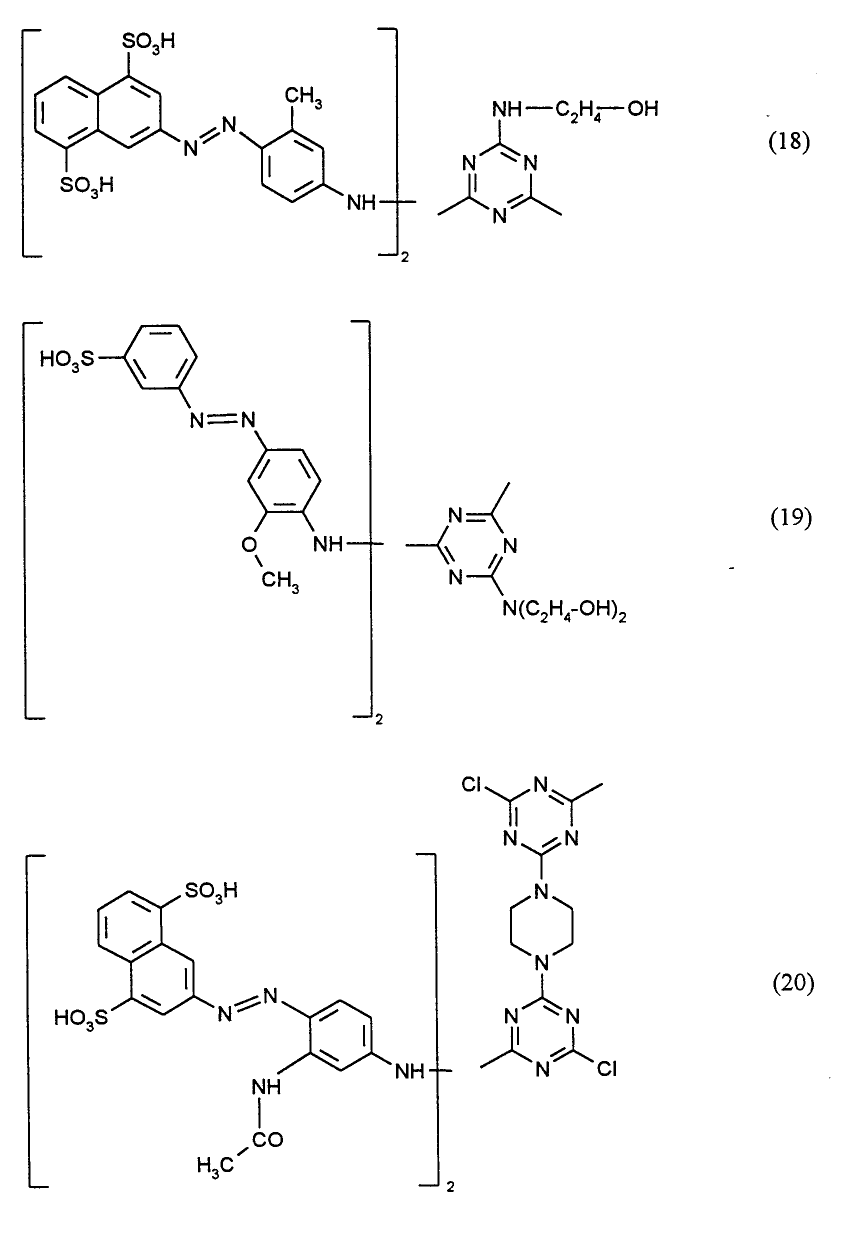 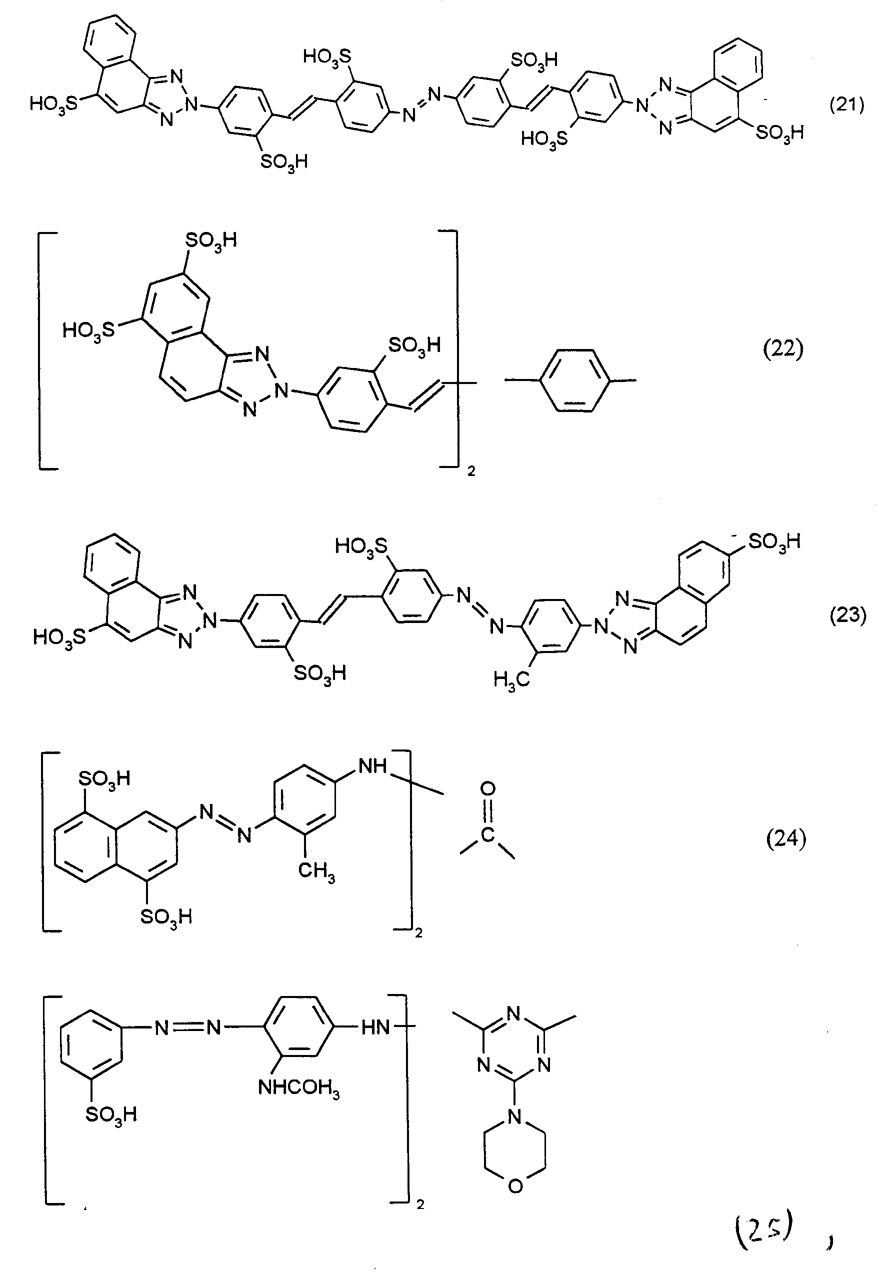 insbesondere die Farbstoffe (18), (19), (23) und (25) von besonderem Interesse.

Als rotfärbende Farbstoffe verwendet man für das erfindungsgemäße Verfahren vorzugsweise mindestens einen Farbstoff der Formeln (26) bis (31) 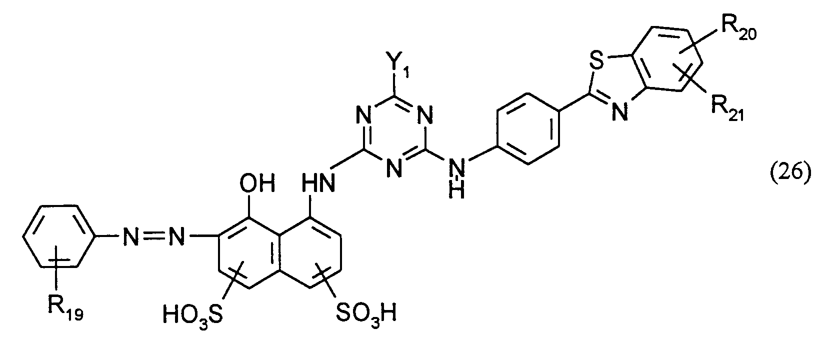 worin R₁₉, R₂₀ und R₂₁ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und für Y₁ die oben genannten Bedeutungen und Bevorzugungen gelten, 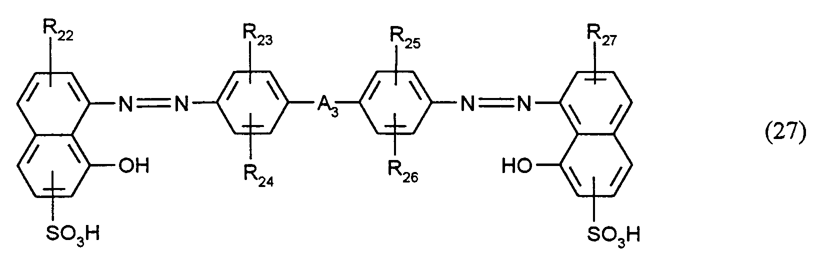 worin R₂₂, R₂₃, R₂₄, R₂₅, R₂₆ und R₂₇ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und A₃ ein Rest der Formel
-NH-, 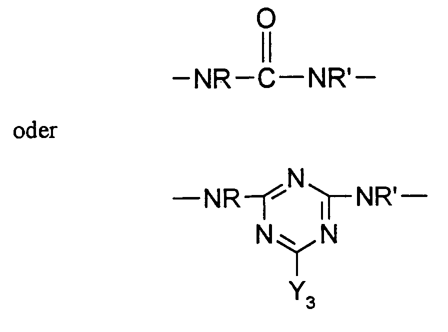 ist, wobei R und R' Wasserstoff oder gegebenenfalls substituiertes C₁-C₈-Alkyl und Y₃ Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl bedeuten, 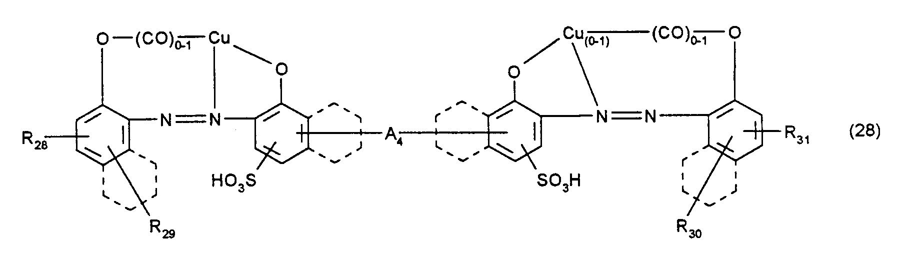 worin R₂₈, R₂₉, R₃₀ und R₃₁ Wasserstoff gegebenenfalls substituiertes C₁-C₄-Alkyl oder C₁-C₈-Alkoxy, Halogen, Carboxy, Sulfo, Ureido, Sulfamoyl oder gegebenenfalls im Alkylteil substituiertes C₂-C₆-Alkanoylamino sind und A₄ die oben unter Formel (27) für A₃ angegebenen Bedeutungen hat, 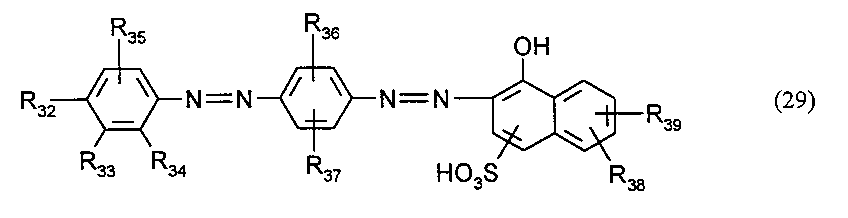 worin R₃₂, R₃₃, R₃₄, R₃₅, R₃₆, R₃₇, und R₃₈ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind und R₃₉ gegebenenfalls im Phenylring substituiertes Benzoylamino oder ein gegebenenfalls im Phenylring weitersubstituierter Rest der Formel 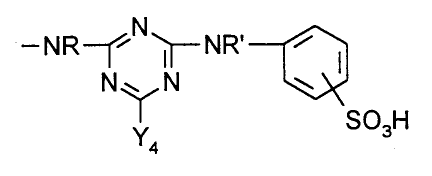 ist, wobei R und R' Wasserstoff oder gegebenenfalls substituiertes C₁-C₈-Alkyl sind und Y₄ die oben unter Formel (27) für Y₃ angegebenen Bedeutungen hat, 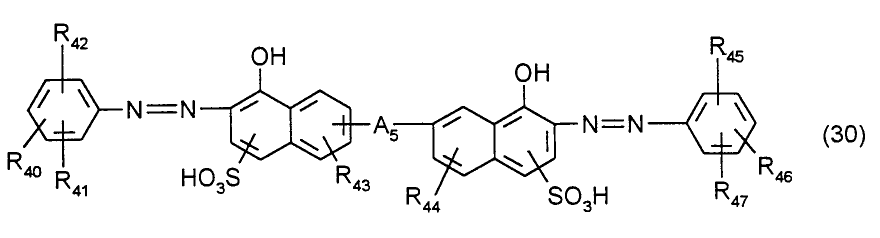 worin R₄₀, R₄₁, R₄₂, R₄₃, R₄₄, R₄₅, R₄₆ und R₄₇ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind, wobei R₄₀ und R₄₆ zusätzlich gegebenenfalls im Phenylring substituiertes Phenylazo bedeuten können und A₅ die oben unter Formel (27) für A₃ angegebenen Bedeutungen hat oder ein Rest der Formel 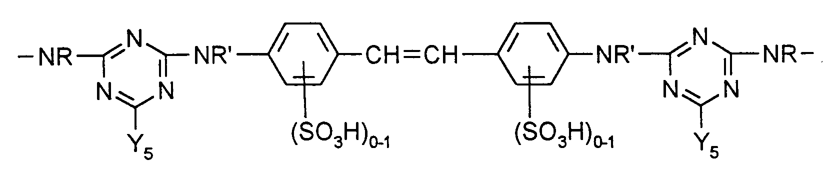 ist, wobei R und R' Wasserstoff oder gegebenenfalls substituiertes C₁-C₈-Alkyl sind und Y₅ die oben unter Formel (27) für Y₃ angegebenen Bedeutungen hat, 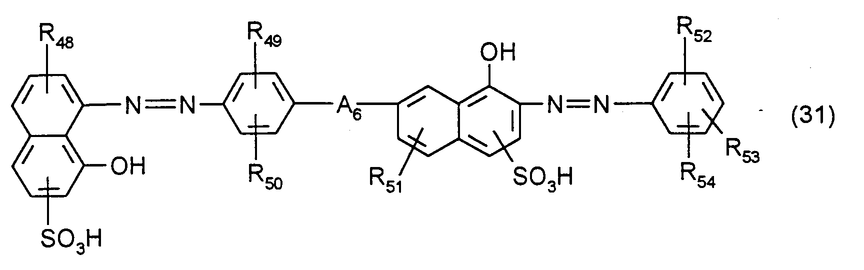 worin R₄₈, R₄₉, R₅₀, R₅₁, R₅₂, R₅₃ und R₅₄ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind, wobei R₅₃ zusätzlich gegebenenfalls im Phenylring substituierter Phenylazo bedeuten kann und A₆ die oben unter Formel (27) für A₃ angegebenen Bedeutungen hat.

Als Halogen kommen für R₁₉, R₂₀ und R₂₁ in Formel (26), R₂₂, R₂₃, R₂₄, R₂₅, R₂₆ und R₂₇ in der Formel (27), R₂₈, R₂₉, R₃₀ und R₃₁ in Formel (28), R₃₂, R₃₃, R₃₄, R₃₅, R₃₇, und R₃₈ in Formel (29), R₄₀, R₄₁, R₄₂, R₄₃, R₄₄, R₄₅, R₄₆ und R₄₇ in Formel (30) und R₄₈, R₄₉, R₅₀, R₅₁, R₅₂, R₅₃ und R₅₄ in Formel (31) unabhängig voneinander z.B. Fluor, Brom oder insbesondere Chlor in Betracht.

Als gegebenenfalls substituiertes C₁-C₈-Alkyl kommt für die oben genannten Substituenten der Farbstoffe der Formeln (26) bis (31) sowie für R und R' insbesondere C₁-C₄-Alkyl, wie Methyl, Ethyl, Propyl, Isopropyl, Butyl, sek.-Butyl, tert.-Butyl oder Isobutyl, sowie die z.B. durch C₁-C₄-Alkoxy, C₁-C₄-Alkoxy-carbonyl, Hydroxy, Halogen, wie z.B. Chlor oder Fluor, Carboxy, Cyan, Sulfo oder Sulfato substituierten Reste in Betracht.

Für R und R' gelten die zuvor angegebenen Bedeutungen und Bevorzugungen.

Als gegebenenfalls substituiertes C₁-C₈-Alkoxy kommt für die oben genannten Substituenten der Farbstoffe der Formeln (26) bis (31) insbesondere C₁-C₄-Alkoxy, wie Methoxy, Ethoxy, Propoxy, Isopropoxy, Butoxy, sek.-Butoxy, Isobutoxy oder tert.-Butoxy, sowie die z.B. durch Hydroxy oder Carboxy substituierten Reste in Betracht.

Als C₂-C₆-Alkanoylamino kommt für die oben genannten Substituenten der Farbstoffe der Formeln (26) bis (31) insbesondere C₂-C₄-Alkanoylamino, wie z.B. Acetylamino oder Propionylamino, in Betracht. Als im Alkylteil substituiertes C₂-C₆-Alkanoylamino kommen z.B. die durch Hydroxy substituierten Reste in Betracht.

R₃₉ in der Bedeutung als Benzoylamino oder als Rest der Formel 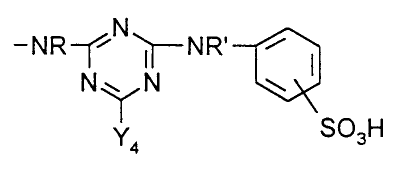 sowie Reste R₄₀, R₄₆ und R₅₃ in der Bedeutung als Phenylazo können unsubstituiert oder im Phenylring substituiert sein. Als Beispiele für Substituenten seien Halogen, Amino, Sulfo, Carboxy, Ureido, gegebenenfalls im Alkylteil durch Hydroxy weitersubstituiertes C₂-C₄-Alkanoylamino, C₁-C₄-Alkyl, gegebenenfalls durch Hydroxy weitersubstituiertes C₁-C₄-Alkoxy sowie gegebenenfalls im Phenylring durch Carboxy, Halogen, Sulfo, C₁-C₄-Alkyl oder C₁-C₄-Alkoxy weitersubstituiertes Benzoylamino oder Phenylamino, insbesondere Halogen, Sulfo oder C₁-C₄-Alkyl, genannt.

Für Y₃, Y₄ und Y₅ gelten die oben für Y₁ und Y₂ genannten Bedeutungen und Bevorzugungen.

Als rotfärbende Farbstoffe verwendet man für das erfindungsgemäße Verfahren bevorzugt mindestens einen Farbstoff der Formeln (32) bis (44) 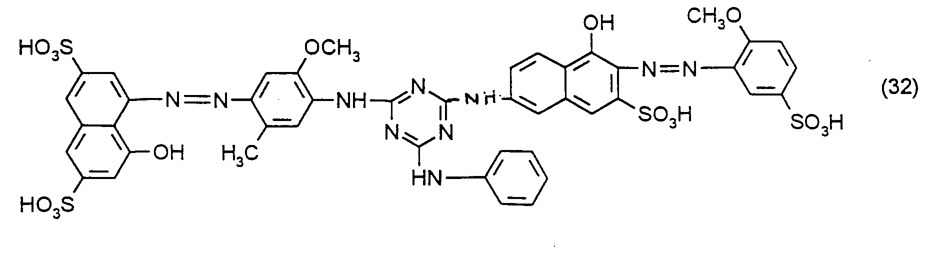 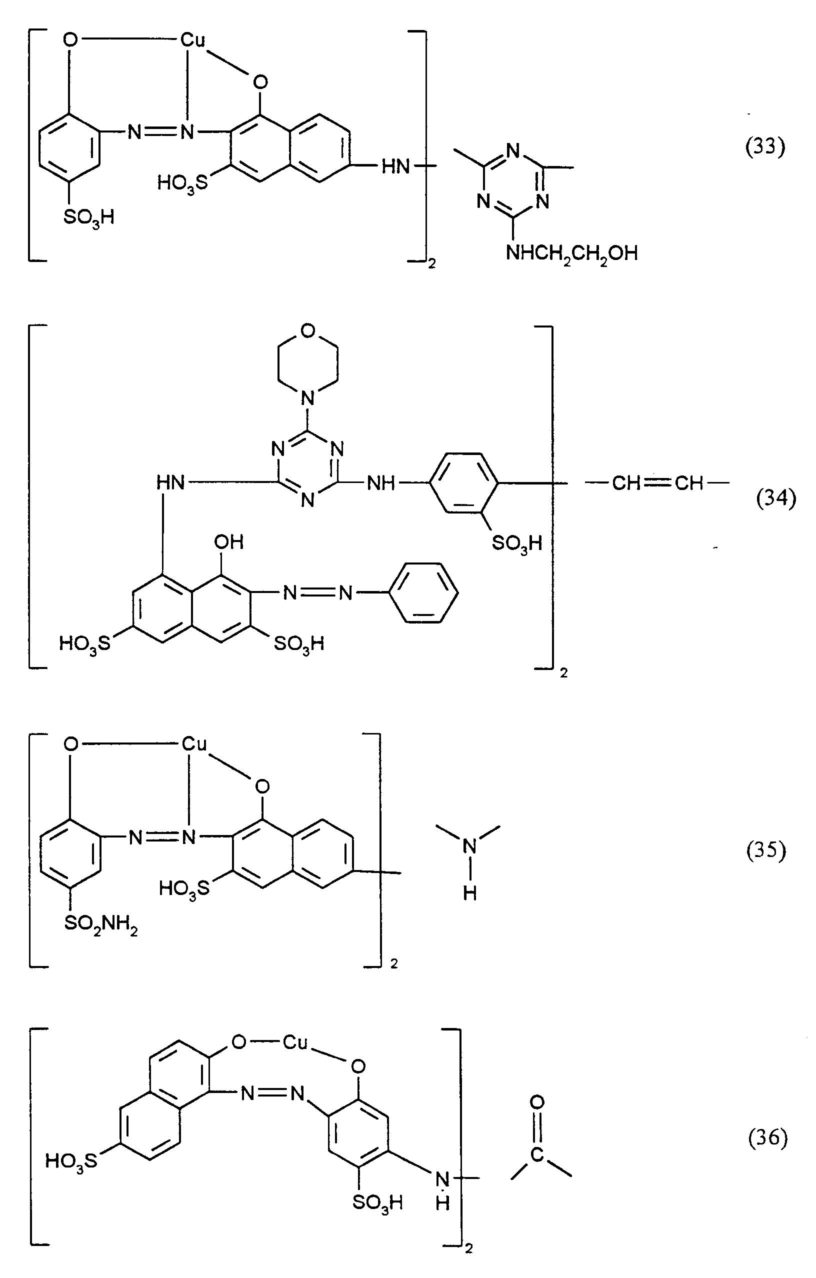 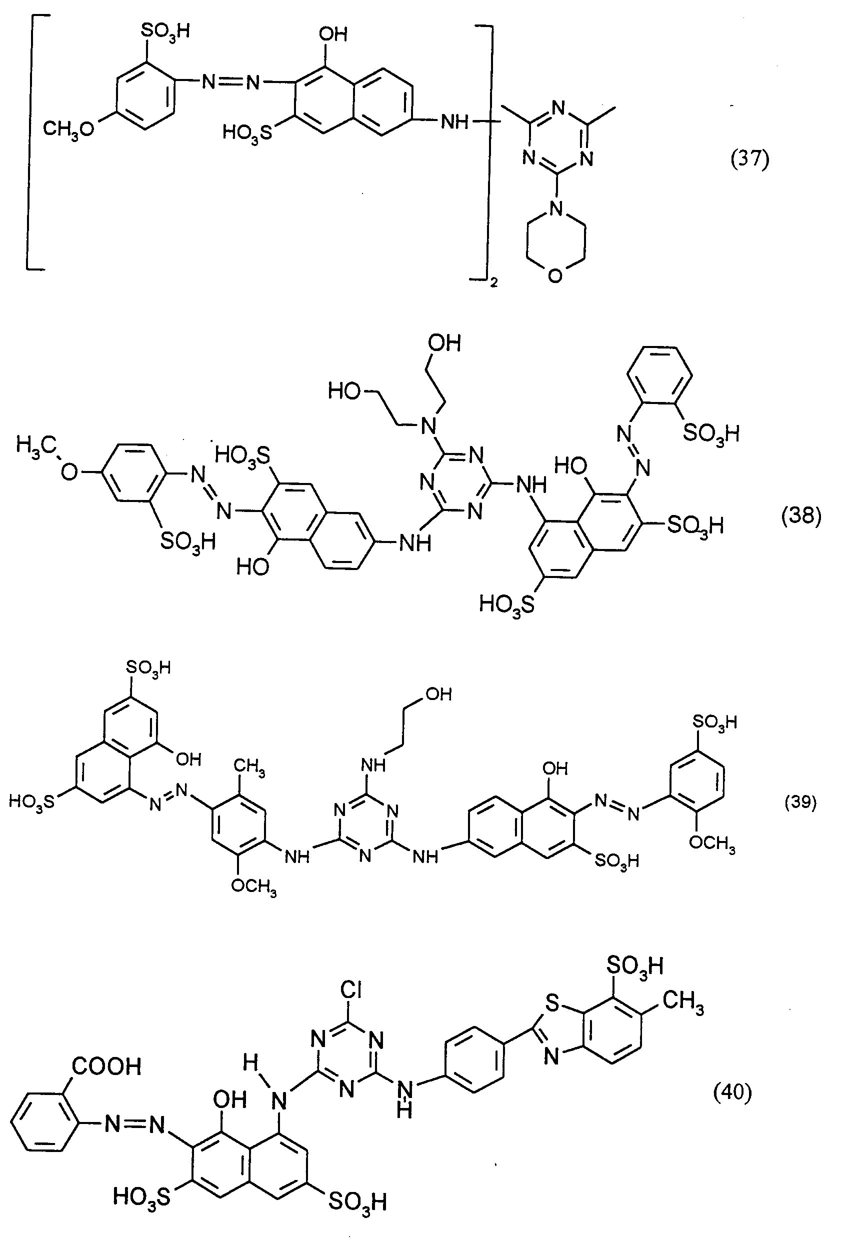 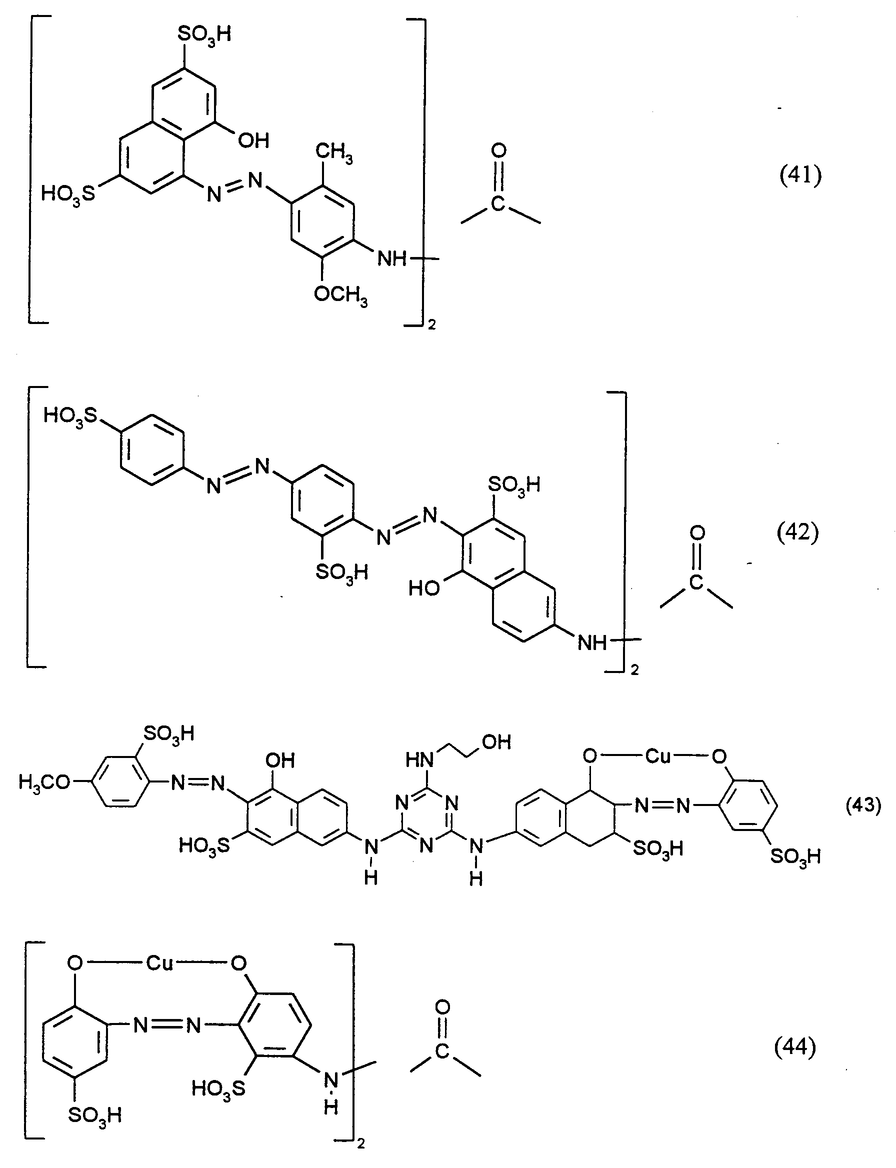 insbesondere Farbstoffe der Formeln (32), (35), (37) bis (40) und (43).

Als marineblau- oder schwarzfärbende Farbstoffe verwendet man in dem erfindungsgemäßen Verfahren vorzugsweise mindestens einen Farbstoff der Formeln (45) bis (48) 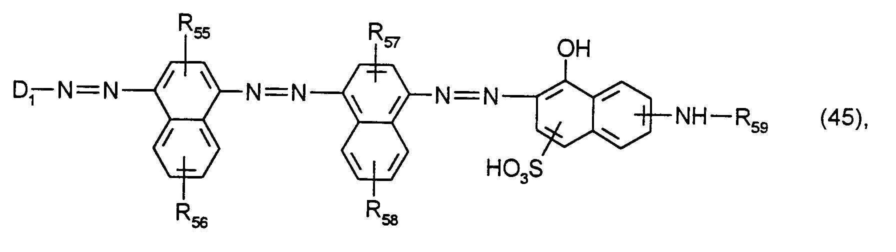 worin D₁ gegebenenfalls substituiertes Phenyl oder Naphthyl, R₅₅, R₅₆, R₅₇ und R₅₈ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und R₅₉ Wasserstoff gegebenenfalls substituiertes C₁-C₈-Alkyl, gegebenenfalls im Alkylteil substituiertes C₂-C₆-Alkanoyl oder gegebenenfalls im Phenylring substituiertes Phenyl oder Benzoyl bedeutet, 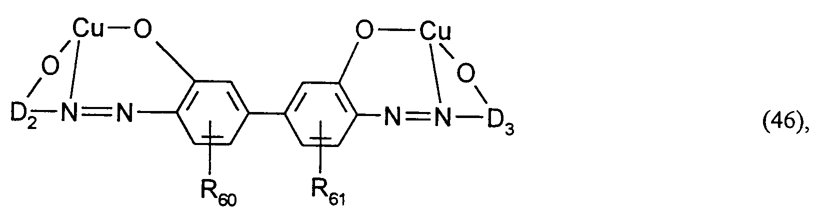 worin D₂ und D₃ gegebenenfalls substituiertes Naphthyl und R₆₀ und R₆₁ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten, 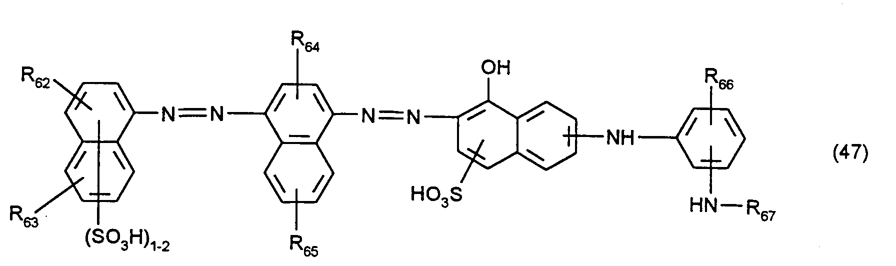 worin R₆₂, R₆₃, R₆₄, R₆₅ und R₆₆ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und R₆₇ Wasserstoff gegebenenfalls substituiertes C₁-C₈-Alkyl, gegebenenfalls substituiertes C₂-C₆-Alkanoyl oder gegebenenfalls im Phenylring substituiertes Phenyl oder Benzoyl bedeutet, 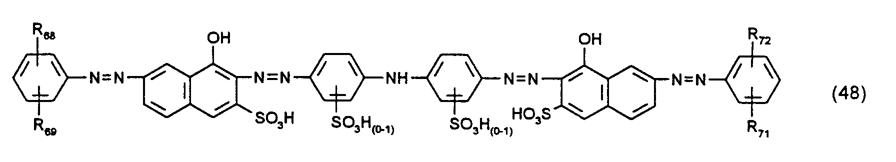 worin R₆₈, R₆₉, R₇₀ und R₇₁ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten.

Als Halogen kommen für R₅₅, R₅₆, R₅₇, R₅₈ in der Formel (45), R₆₀ und R₆₁ in der Formel (46), R₆₂, R₆₃, R₆₄, R₆₅ und R₆₆ in der Formel (47) und R₆₈, R₆₉, R₇₀ und R₇₁ in der Formel (48) unabhängig voneinander z.B. Fluor, Brom oder insbesondere Chlor in Betracht.

Als gegebenenfalls substituiertes C₁-C₈-Alkyl kommen für R₅₅, R₅₆, R₅₇, R₅₈ in der Formel (45), R₆₀ und R₆₁ in der Formel (46), R₆₂, R₆₃, R₆₄, R₆₅ und R₆₆ in der Formel (47) und R₆₈, R₆₉, R₇₀ und R₇₁ in der Formel (48) insbesondere C₁-C₄-Alkyl wie z.B. Methyl, Ethyl, Propyl, Isopropyl, Butyl, sek.-Butyl, tert.-Butyl, Isobutyl, sowie die z.B. durch C₁-C₄-Alkoxy, C₁-C₄-Alkoxycarbonyl, Hydroxy, Halogen, wie z.B. Chlor oder Fluor, Carboxy, Cyan, Sulfo oder Sulfato substituierten Reste in Betracht.

Als C₁-C₈-Alkoxy kommen für R₅₅, R₅₆, R₅₇, R₅₈ in der Formel (45), R₆₀ und R₆₁ in der Formel (46), R₆₂, R₆₃, R₆₄, R₆₅ und R₆₆ in der Formel (47) und R₆₈, R₆₉, R₇₀ und R₇₁ in der Formel (48) insbesondere C₁-C₄-Alkoxy, wie Methoxy, Ethoxy, Propoxy, Isopropoxy, Butoxy, sek.-Butoxy, Isobutoxy oder tert.-Butoxy in Betracht.

Als C₂-C₆-Alkanoylamino kommen für R₅₅, R₅₆, R₅₇, R₅₈ in der Formel (45), R₆₀ und R₆₁ in der Formel (46), R₆₂, R₆₃, R₆₄, R₆₅ und R₆₆ in der Formel (47) und R₆₈, R₆₉, R₇₀ und R₇₁ in der Formel (48) insbesondere C₂-C₄-Alkanoylamino, wie z.B. Acetylamino oder Propionylamino, in Betracht. Als im Alkylteil substituiertes C₂-C₆-Alkanoylamino kommen z.B. die durch Carboxy oder insbesondere Hydroxy substituierten Reste in Betracht.

Als C₂-C₆-Alkanoyl kommt für R₅₉ in Formel (45) und R₆₇ in Formel (47) insbesondere C₂-C₄-Alkanoyl, wie z.B. Acetyl oder Propionyl, in Betracht. Als im Alkylteil substituiertes C₂-C₆-Alkanoyl kommen z.B. die durch Hydroxy substituierten Reste in Betracht.

Die Reste D₁ in der Bedeutung als Phenyl oder Naphthyl, D₂ und D₃ als Naphthyl, R₅₉ und R₆₇ als Phenyl oder Benzoyl können unsubstituiert oder substituiert sein. Als Beispiele für Substituenten seien Halogen, Amino, Sulfo, Carboxy, Ureido, gegebenenfalls im Alkylteil durch Hydroxy weitersubstituiertes C₂-C₄-Alkanoylamino, C₁-C₄-Alkyl, gegebenenfalls durch Hydroxy oder Carboxy weitersubstituiertes C₁-C₄-Alkoxy sowie gegebenenfalls im Phenylring durch Carboxy, Halogen, Sulfo, C₁-C₄-Alkyl oder C₁-C₄-Alkoxy weitersubstituiertes Benzoylamino oder Phenylamino genannt.

Als marineblau- oder schwarzfärbende Farbstoffe verwendet man für das erfindungsgemäße Verfahren bevorzugt mindestens einen Farbstoff der Formeln (49) bis (56) 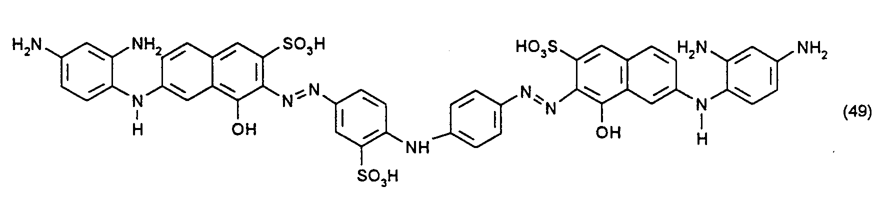 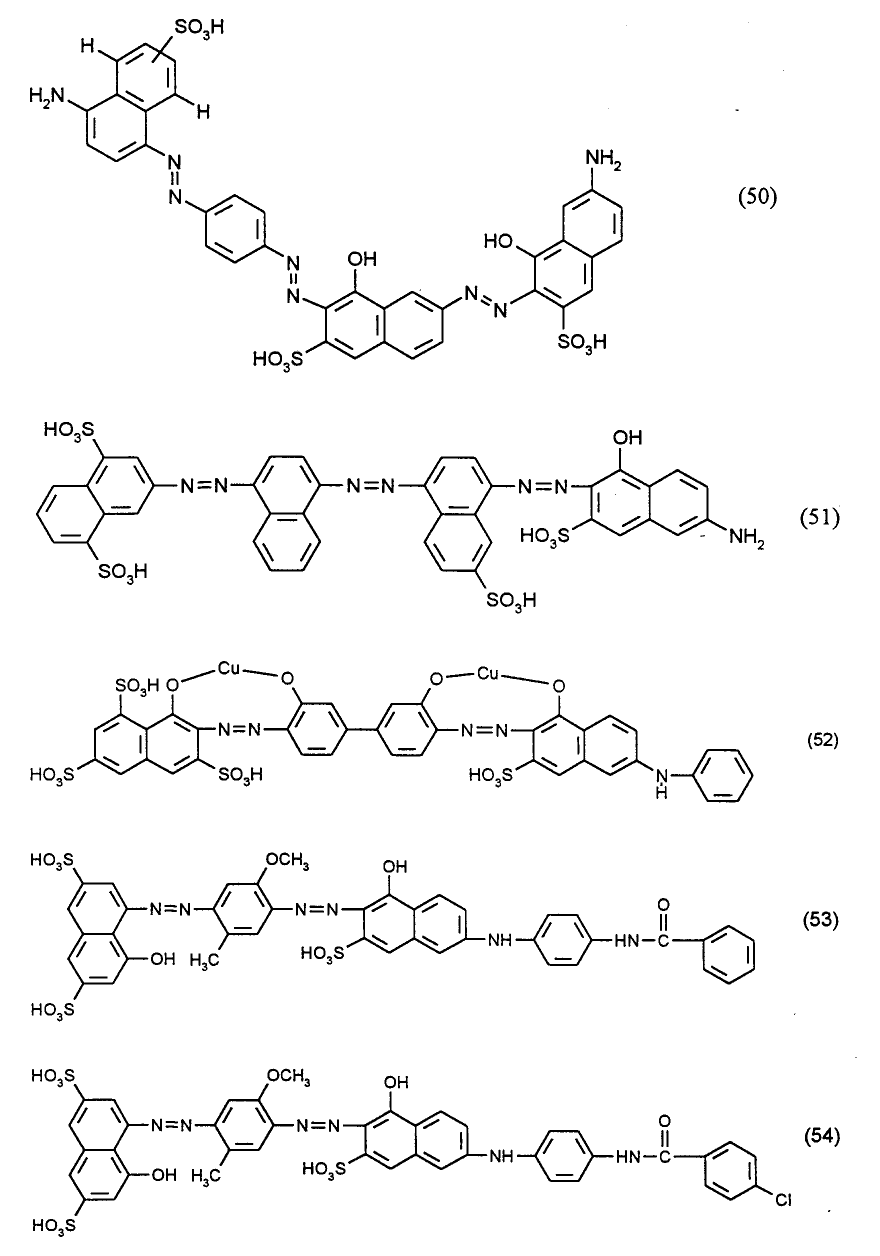 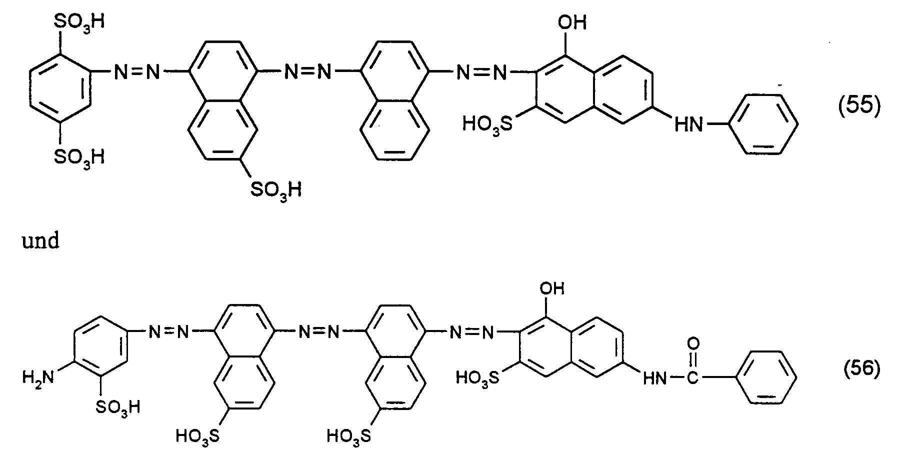 insbesondere Farbstoffe der Formeln (49) bis (52).

Besonders bevorzugt verwendet man mindestens einen blaufärbenden Farbstoff der Formel (1) zusammen mit mindestens einem gelbfärbenden Farbstoff der Formeln (16) bis (25) oder mindestens einem rotfärbenden Farbstoff der Formeln (26) bis (31) oder mindestens einem marineblau- oder schwarzfärbenden Farbstoff der Formeln (49) bis (56).

Ganz besonders bevorzugt verwendet man mindestens einen blaufärbenden Farbstoff der Formeln (2a) bis (2h) zusammen mit mindestens einem gelbfärbenden Farbstoff der Formeln (18), (19), (23) oder (25) oder mindestens einem rotfärbenden Farbstoff der Formeln (32), (35), (37) bis (40) oder (43) oder mindestens einem marineblau- oder schwarzfärbenden Farbstoff der Formeln (49) bis (52), wobei als blaufärbender Farbstoff vorzugsweise die Farbstoffe der Formeln (2a) oder (2b) in Betracht kommen.

In einer besonders wichtigen Ausführungsform des erfindungsgemäßen Verfahrens verwendet man einen blaufärbenden Farbstoff der Formel (2a) zusammen mit einem gelbfärbenden Farbstoff der Formel (19) oder zusammen mit einem rotfärbenden Farbstoff der Formeln (38) oder (40) oder zusammen mit einem marineblau- oder schwarzfärbenden Farbstoff der Formeln (49), (51) oder (52).

Das Verfahren der vorliegenden Erfindung ist insbesondere zum Dichromie-Färben oder Bedrucken geeignet, wobei man mindestens einen blaufärbenden Farbstoff der Formel (1) zusammen mit mindestens einem gelbfärbenden Farbstoff oder mindestens einem rotfärbenden Farbstoff oder mindestens einem marineblau-oder schwarzfärbenden Farbstoff verwendet. Für die zum Dichromie-Färben oder Bedrucken zu verwendenden Farbstoffe gelten hierbei die zuvor angegebenen Bedeutungen und Bevorzugungen.

Unter Dichromie ist dabei die additive Farbmischung von passend gewählten gelb-, rot- und blaufärbenden Farbstoffen in den zur Erzielung der gewünschten Nuance notwendigen Mengen zu verstehen.

Die für das erfindungsgemäße Verfahren verwendeten blaufärbenden Farbstoffe der Formel (1) sowie die gelbfärbenden Farbstoffe der Formeln (3) und (4) und die rotfärbenden Farbstoffe der Formeln (26) bis (31) und die marineblau-oder schwarzfärbenden Farbstoffe der Formeln (45) bis (48) sind bekannt oder können in Analogie zu bekannten Farbstoffen hergestellt werden.

Bezüglich ihrer färberischen Eigenschaften können die für das erfindungsgemäße Verfahren verwendeten blaufärbenden Farbstoffe der Formel (1) sowie die gelbfärbenden Farbstoffe der Formeln (3) und (4) und die rotfärbenden Farbstoffe der Formeln (26) bis (31) und die marineblau- oder schwarzfärbenden Farbstoffe der Formeln (45) bis (48) als direktziehende oder Direktfarbstoffe (C.I. direct dyes) bezeichnet werden.

Die für das erfindungsgemäße Verfahren verwendeten blaufärbenden Farbstoffe der Formel (1), die gelbfärbenden, die rotfärbenden und die marineblau- oder schwarzfärbenden Farbstoffe liegen entweder in der Form ihrer freien Sulfonsäure oder vorzugsweise als deren Salze wie z.B. der Alkali-, Erdalkali- oder Ammoniumsalze oder als Salze eines organischen Amins vor.

Als Beispiele seien die Natrium-, Kalium-, Lithium- oder Ammoniumsalze oder das Salz des Triethanolamins genannt.

Für das erfindungsgemäße Verfahren können die Mengen, in denen die blaufärbenden Farbstoffe der Formel (1), die gelbfärbenden, die rotfärbenden und die marineblau-oder schwarzfärbenden Farbstoffe in den Färbebädern oder Druckpasten verwendet werden, je nach der gewünschten Farbtiefe schwanken, im allgemeinen haben sich Mengen von 0,01 bis 10 Gew.-%, insbesondere 0,1 bis 6 Gew.-%, bezogen auf das Färbegut, als vorteilhaft erwiesen.

Als hydroxylgruppenhaltige Fasermaterialien, insbesondere textile Fasermaterialien, welche gemäß dem erfindungsgemäßen Verfahren gefärbt oder bedruckt werden können, kommen z.B. solche aus cellulosischen Fasern, wie Baumwolle, Leinen oder Hanf, insbesondere Baumwolle, sowie Celluloseregeneratfasern, wie z.B. Zellwolle, Rayon oder Viskose, in Betracht.

Unter hydroxylgruppenhaltigen Fasermaterialien werden ebenfalls solche Fasermaterialien enthaltende Mischfasern verstanden. Als solche kommen z.B. Mischfasern, welche neben cellulosischen Fasermaterialien noch natürliche oder synthetische Polyamidfasermaterialien oder Polyacryl- oder Polyesterfasermaterialien enthalten, in Betracht. Als Beispiele seien Wolle/Baumwoll-, Polyamid/Baumwoll-, Polyacryl/Baumwoll- oder insbesondere Polyester/Baumwoll-Mischfasern genannt.

Die textilen Fasermaterialien können in den verschiedensten Verarbeitungszuständen vorliegen, wie z.B. als Faser, Garn, Gewebe oder Gewirke.

Das erfindungsgemäße Verfahren eignet sich zum Färben, z.B. nach der Ausziehmethode oder der Foulardmethode, sowie zum Bedrucken gemäß den allgemein üblichen hierzu verwendeten Verfahren.

Bevorzugt ist das Färben nach der Ausziehmethode. Das Färben erfolgt hierbei in der Regel bei einer Temperatur von 60 bis 110°C, insbesondere 90 bis 105°C, bei einem pH-Wert von z.B. bis 10, insbesondere 7 bis 9, vorzugsweise aus wäßriger Flotte bei einem Flottenverhältnis von 1:5 bis 1:80, insbesondere 1:10 bis 1:20.

In einer besonders interessanten Ausführungsform des erfindungsgemäßen Verfahren erfolgt das Färben in Gegenwart eines Salzes, wie z.B. in Gegenwart eines Alkalihalogenids, insbesondere eines Alkalichlorids, oder eines Alkalisulfats. Hierbei wird die Salzmenge kurz vor oder nach Erreichung der Färbetemperatur als ganzes oder portionsweise zugegeben. Als Bereich kurz vor Erreichung der Färbetemperatur ist beispielsweise der Bereich des Aufheizens zur Erreichung der Färbetemperatur zu verstehen, wie z.B. der Bereich der Temperatur von 80 bis 98°C. Vorzugsweise wird das Salz hierbei direkt bei Erreichung der Färbetemperatur zugegeben. Die Verwendung einer von der Gesamtmenge der eingesetzten Farbstoffe abhängenden Gesamtmenge an Salz hat sich für diese Ausführungsform des erfindungsgemäßen Verfahrens als vorteilhaft erwiesen. Hierbei wird in der Regel eine mit der Gesamtmenge der eingesetzten Farbstoffe zunehmende Gesamtmenge an Salz verwendet. Bis zu einer Gesamtmenge an Farbstoff von 1 % werden hierbei z.B. 6 bis 12 g/l Salz verwendet, bis zu einer Gesamtmenge an Farbstoff von 2 % werden z.B. 12 bis 20 g/l Salz und oberhalb einer Gesamtmenge an Farbstoff von 2 % werden beispielsweise 20 bis 40 g/l Salz verwendet. Die Mengenangaben der Farbstoffe sind hierbei Gewichtsprozente, bezogen auf das eingesetzte Fasermaterial, und entsprechen in der Regel den Farbstoffen, wie sie nach der Synthese, z.B. durch Aussalzen, erhalten werden.

Für diese Ausführungsform des erfindungsgemäßen Verfahrens ist das Färben nach der Ausziehmethode bevorzugt.

Ebenfalls können Fasermaterialien, insbesondere textile Fasermaterialien, aus Mischfasern, wie z.B. aus Wolle/Baumwoll-, Polyamid/Baumwoll-, Polyacryl/Baumwoll-oder insbesondere Polyester/Baumwoll-Mischfasern durch Einbad-Färbeverfahren und in Gegenwart von Farbstoffen für die jeweils anderen Fasertypen gefärbt werden.

So können Fasergemische aus Synthesefasern und cellulosischen Fasermaterialien, insbesondere Polyester/Baumwoll-Mischgewebe, in Gegenwart eines Dispersionsfarbstoffs für die Synthesefasern unter den Färbebedingungen für die Synthesefasern gefärbt werden. Als Synthesefasern kommen insbesondere Polyesterfasern in Betracht. Falls gemäß dieser Ausführungsform in Gegenwart von Salzen, wie z.B. einem Alkalihalogenid oder einem Alkalisulfat, gefärbt wird, so ist die Zugabe der Gesamtmenge des Salzes zu Beginn des Färbeprozesses bevorzugt.

Die für das erfindungsgemäße Verfahren verwendeten Farbstoffe sind gut mit anderen Farbstoffen, insbesondere Dispersionsfarbstoffen kombinierbar. Die für das erfindungsgemäße Verfahren verwendeten Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 120 bis 130°C, aus wäßriger Flotte und bei einem pH-Wert von 4 bis 7,5, vorzugsweise von 5 bis 7, färben.

Damit ist es möglich, übliche Dispersionsfarbstoffe zusammen mit den für das erfindungsgemäße Verfahren verwendeten Farbstoffen in einem einstufigen, einbadigen Verfahren zum Färben von Polyester/Baumwoll-Mischfasern (Mischgewebe) einzusetzen, wobei beide Faserarten gleichmäßig und echt durch den jeweiligen Farbstoff angefärbt werden. Verwendet man einen Dispersionsfarbstoff mit gleicher Nuance wie das für das erfindungsgemäße Verfahren verwendete Farbstoffgemisch sie aufweist, so ist auch möglich, Ton-in-Ton-Färbungen zu erhalten.

Gemäß dieser Ausführungsform des erfindungsgemäßen Verfahrens kann man das Färben von textilen Mischfasern (Mischgeweben), z.B. solchen aus Polyester-und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die für das erfindungsgemäße Verfahren verwendeten Farbstoffe zeichnen sich durch gleichmäßigen Farbaufbau bei gleichzeitiger Nuancenkonstanz in verschiedenen Konzentrationen und eine gute Kombinierbarkeit aus. Es werden Färbungen und Drucke mit guter Faser- und Flächenegalität und guten Allgemeinechtheiten, insbesondere guten Reib-, Naß-, Naßreib-, Schweiß- und Lichtechtheiten, erhalten. Sofern nötig, kann man die Naßechtheiten, insbesondere die Waschechtheit, der erhaltenen Färbungen und Drucke durch eine Nachbehandlung mit sogenannten Fixiermitteln noch wesentlich verbessern.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

### Beispiel 1

10 Teile eines nicht mercerisierten Baumwollgewebes werden mit einem Teil eines nichtionogenen Netzmittels bei einer Temperatur von 80°C benetzt. Das so vorbehandelte Baumwollgewebe wird abgequetscht und in eine 40°C warme Farbstofflösung, welche in deionisiertem Wasser 0,5 % des blaufärbenden Farbstoffs der Formel 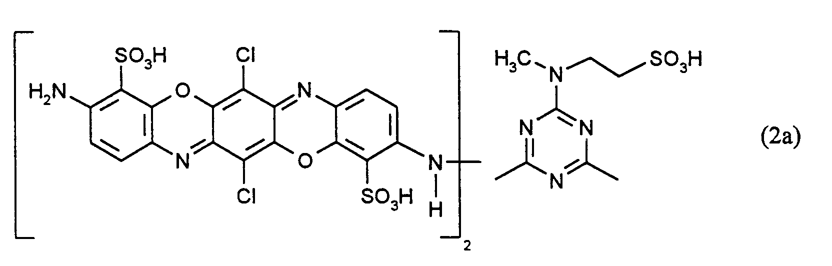 und 0,3 % des gelbfärbenden Farbstoffs der Formel 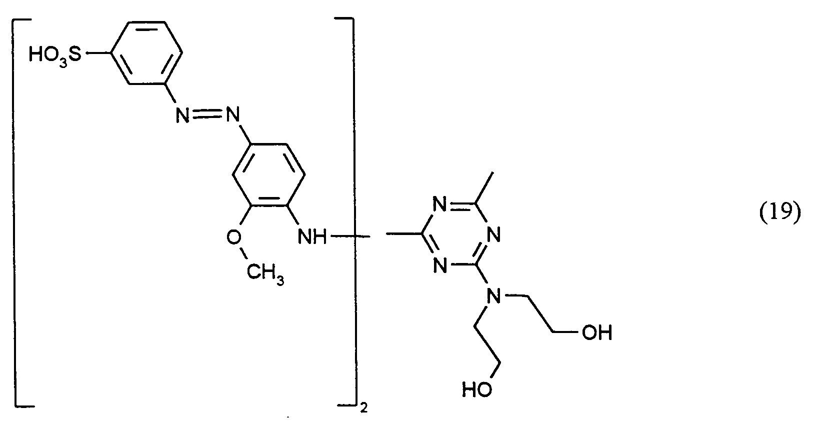 bezogen auf das Gewicht des Baumwollgewebes enthält, bei einem Flottenverhältnis von 1:20 eingetragen. Man beläßt das Färbebad 10 Minuten bei einer Temperatur von 40°C, erhöht dann die Temperatur des Färbebades mit einer Aufheizrate von 2°C/min auf Kochtemperatur und gibt nach 10 Minuten Färben bei dieser Temperatur 5 g/l Natriumsulfat zu. Man färbt weitere 20 Minuten bei Kochtemperatur, kühlt danach mit einer Abkühlrate von 2°C/min auf eine Temperatur von ca. 80 bis 85°C ab und beläßt das Färbebad 15 Minuten bei dieser Temperatur. Anschließend wird das gefärbte Baumwollgewebe aus dem Bad herausgenommen, bei Raumtemperatur zweimal je 5 Minuten mit Wasser gespült, abgequetscht und bei einer Temperatur von ca. 80 bis 90°C im Trockenschrank getrocknet. Man erhält ein in einer grünen Nuance egal gefärbtes Baumwollgewebe, welches gute Allgemeinechtheiten aufweist. Zur Verbesserung der Naßechtheiten, insbesondere der Waschechtheit kann das erhaltene Baumwollgewebe mit kationischen Fixiermitteln nachbehandelt werden.

### Beispiele 2 bis 18

Verfährt man wie in Beispiel 1 angegeben, verwendet jedoch anstelle der dort beschriebenen Farbstoffe die in der folgenden Tabelle in Spalte 2 angegebenen Farbstoffe in den aufgeführten Mengen, anstelle von 5 g/l Natriumsulfat die in Spalte 3 angegebene Natriumsulfatmenge, so erhält man ein in der Spalte 4 angegebenen Nuance gefärbtes Baumwollgewebe.

**Tabelle 1**

| Beispiel | Farbstoffe | Natriumsulfat | Nuance |
|---|---|---|---|
| 2 | 0,5 % (2a) | 5 g/l | blau |
| | 0,3 % (51) | | |
| 3 | 0,5 % (2a) | 5 g/l | hellblau |
| | 0,2 % (40) | | |
| 4 | 0,5 % (2a) | 5 g/l | rötlich-blau |
| | 0,1 % (36) | | |
| 5 | 0,5 % (2a) | 5 g/l | blauviolett |
| | 0,3 % (34) | | |
| 6 | 0,5 % (2a) | 5 g/l | grauviolett |
| | 0,3 % (37) | | |
| 7 | 0,27 % (2a) | 3 g/l | hellblau |
| | 0,046 % (40) | | |
| 8 | 0,05 % (2a) | 10 g/l | ziegelrot |
| | 1,14 % (39) | | |
| 9 | 0,23 % (2a) | 10 g/l | rotbraun |
| | 0,8 % (39) | | |
| 10 | 0,23% (2a) | 3 g/l | mint |
| | 0,05 % (19) | | |
| 11 | 0,02% (2a) | 3 g/l | altrosa |
| | 0,34 % (37) | | |
| 12 | 0,17 % (2a) | 4 g/l | flieder |
| | 0,3 % (37) | | |
| 13 | 0,68 % (2a) | 25 g/l | dunkelviolett |
| | 1,9 % (37) | | |
| 14 | 0,75 % (2a) | 15 g/l | blauviolett |
| | 0,45 % (40) | | |
| 15 | 0,9 % (2a) | 25 g/l | marineblau |
| | 1,5 % (51) | | |
| 16 | 0,6 % (2a) | 20 g/l | nachtblau |
| | 1,5 % (51) | | |
| 17 | 0,9 % (2a) | 30 g/l | dunkelgrün |
| | 0,24 % (19) | | |
| 18 | 0,45 % (2a) | 35 g/l | anthrazit |
| | 2,7 % (49) | | |

### Beispiel 19

100 Teile gut eingenetzter Polyester/Baumwoll-Webware, welche auf 100 Teile 50 Teile Polyester und 50 Teile Baumwolle enthält, werden bei einer Temperatur von 40°C in eine Hochtemperatur-Jetfärbeanlage gegeben. Das Flottenverhältnis beträgt 1:10. Anschließend addiert man 1 g/l eines Egalisierhilfsmittels, 11,6 Teile des Farbstoffs der Formel (2a), 2,7 Teile des Farbstoffs (19), 0,55 Teile eines gelbfärbenden Dispersionsfarbstoffes der Formel 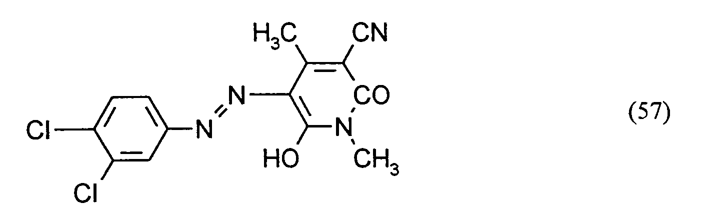 0,125 Teile eines gelbbraun färbenden Dispersionsfarbstoffes der Formel 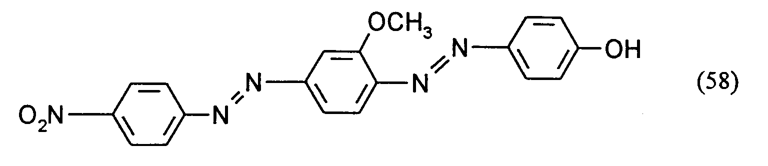 und 0,5 Teile eines blaufärbenden Dispersionsfarbstoffes der Formel 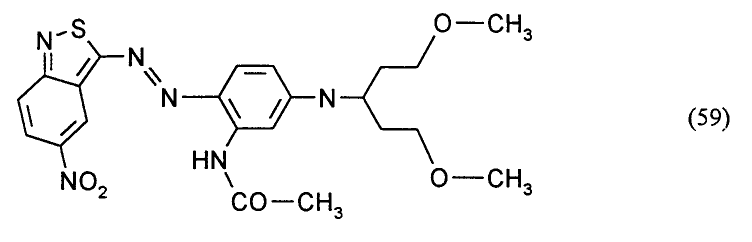 und stellt den pH-Wert mit Essigsäure auf einen Wert von 5,5 bis 6 ein.

Die Färbeflotte wird 5 Minuten bei einer Temperatur von 40°C belassen und anschließend werden 5 g/l Natriumsulfat zugegeben. Dann wird das Färbebad mit einer Aufheizrate von 1,5°C/min auf eine Temperatur von 130°C erhitzt, diese Temperatur 30 Minuten gehalten und anschließend wird mit einer Abkühlrate von 1,5°C/min auf eine Temperatur von 80°C abgekühlt. Das Färbebad wird 20 Minuten bei der Temperatur von 80°C belassen. Nun wird das Färbebad abgelassen und das gefärbte Material zweimal je 5 Minuten mit 30°C warmen Wasser gewaschen. Zur Fertigstellung der Färbung wird das Färbegut in üblicher Weise getrocknet oder mit einem geeigneten kationischen Nachbehandlungsmittel veredelt.

Das erhaltene Färbegut weist eine grünblaue Färbung von ausgezeichneter Egalität auf.

## Patentansprüche

1. Verfahren zum Färben oder Bedrucken von hydroxylgruppenhaltigen Fasermaterialien, dadurch gekennzeichnet, daß man mindestens einen blaufärbenden Farbstoff der Formel 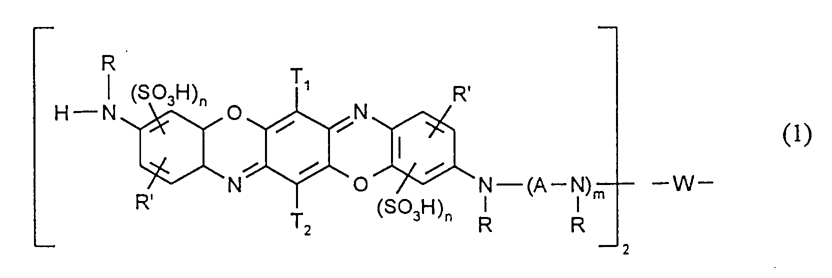 worin
R = Wasserstoff oder gegebenenfalls substituiertes Alkyl
R' = Wasserstoff oder Substituent
T₁, T₂ = Wasserstoff Chlor, Brom, gegebenenfalls substituiertes C₁-C₄-Alkyl, C₁-C₄-Alkoxy, Phenyl oder Phenoxy
W = Brückenglied der Formel 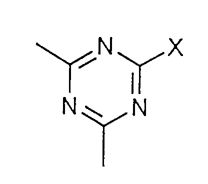 worin
X = H oder bei triazinverbrückten Farbstoffen üblicher Substituent, 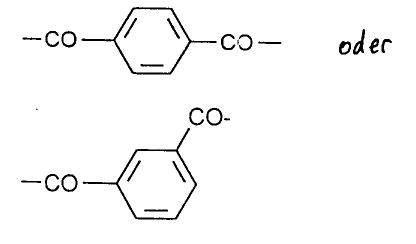
A = gegebenenfalls substituierter Alkylen-, Cycloalkylen-, Arylen- oder Aralkylenrest,
m,n = 0 oder 1, wobei die n-indizierte Sulfogruppe bei n = 1 in o-Stellung zu -NR- steht
bedeutet, zusammen mit mindestens einem gelbfärbendem und/oder mindestens einem rotfärbenden und/oder mindestens einem marineblau- oder schwarzfärbendem Farbstoff verwendet, wobei Substituenten und Indices gleicher Bezeichnung gleiche oder unterschiedliche Bedeutungen haben.

2. Verfahren gemäß Anspruch 1, dadurch gekennzeichnet, daß der blaufärbende Farbstoff der Formel 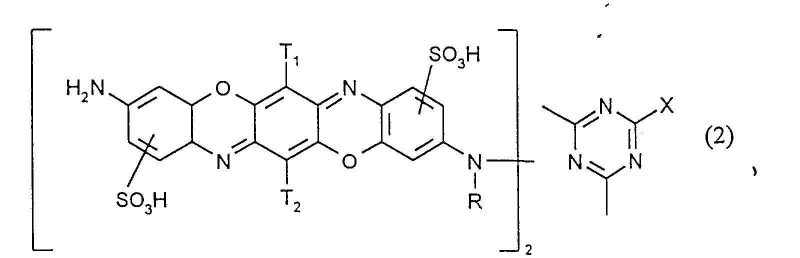 worin T₁, T₂, R und X die in Anspruch 1 angegebene Bedeutung haben, entspricht.

3. Verfahren gemäß wenigstens einen der vorhergehenden Ansprüche, dadurch gekennzeichnet, daß in dem Farbstoff der Formel (1) T₁ = T₂ = Cl oder OCH₃ ist.

4. Verfahren gemäß Anspruch 2, dadurch gekennzeichnet, daß in dem Farbstoff der Formel (2) X = Halogen, Sulfo, C₁-C₄-Alkyl, eine Thioether-, Ether- oder gegebenenfalls substituierte Aminogruppe ist.

5. Verfahren gemäß wenigstens einen der vorhergehenden Ansprüche, dadurch gekennzeichnet, daß man als Farbstoff der Formel (1) wenigstens einen Farbstoff der Formel 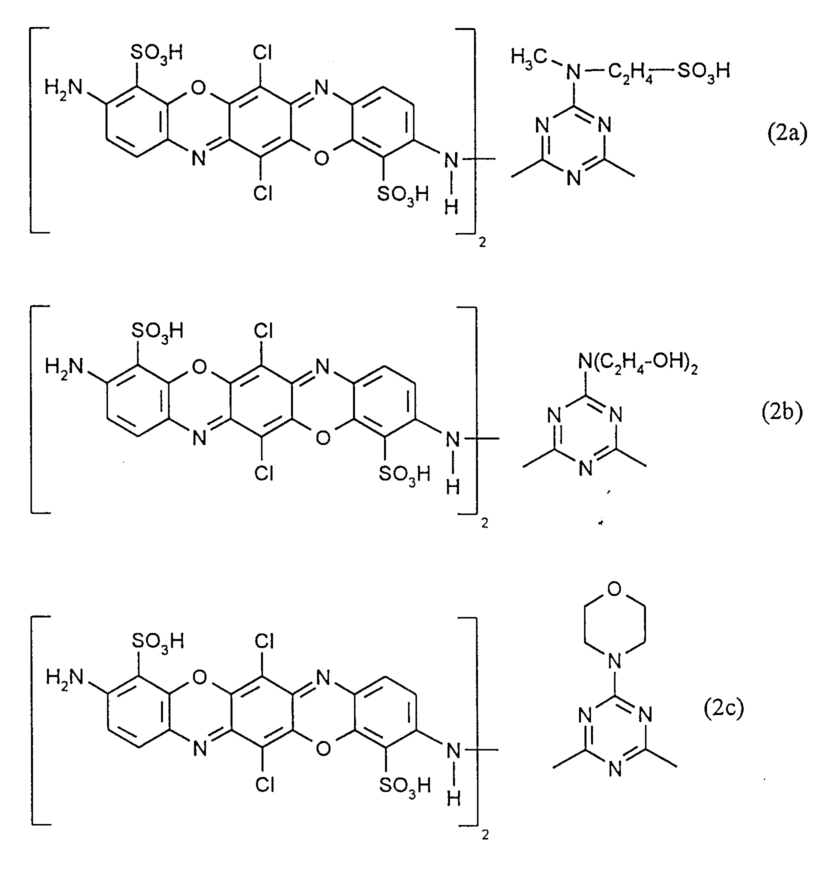 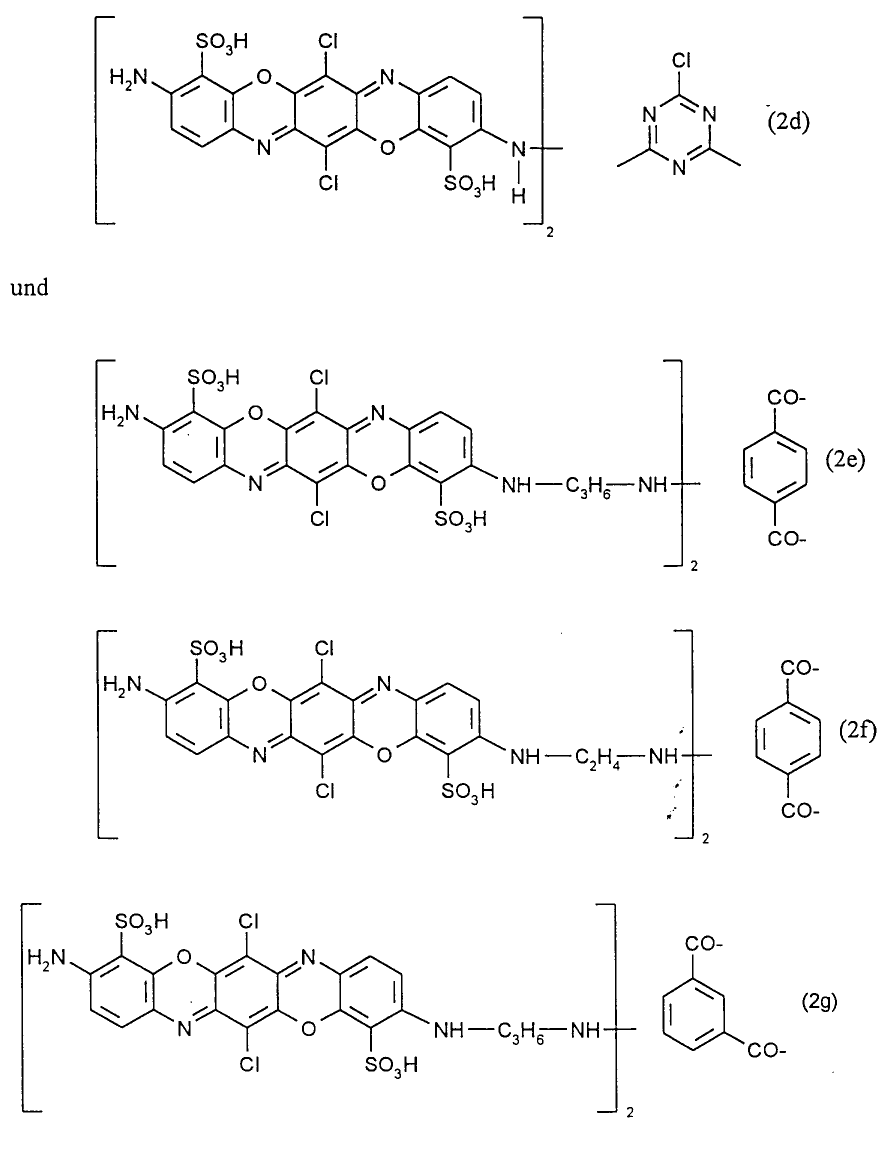 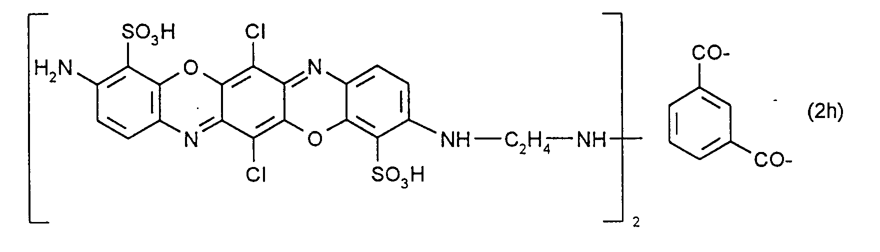 verwendet.

6. Verfahren gemäß wenigstens einem der vorhergehenden Ansprüche, dadurch gekennzeichnet, daß man als gelbfärbenden Farbstoff mindestens einen Farbstoff der Formeln (3) und (4) 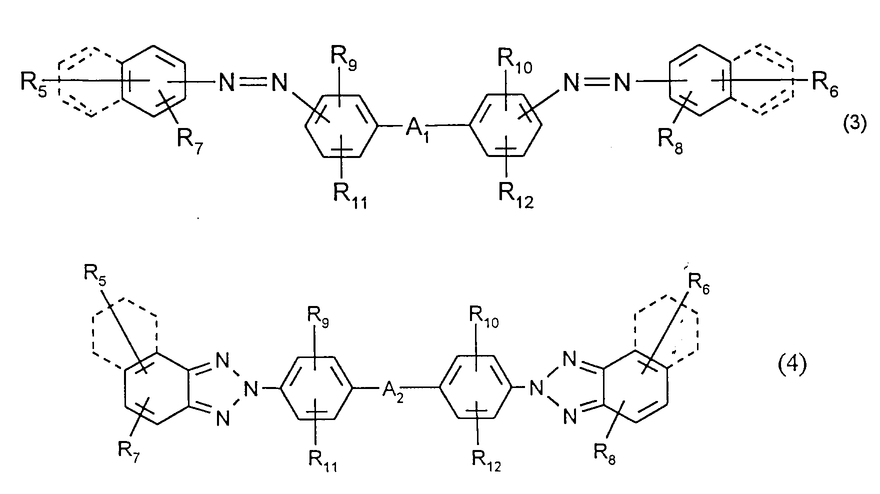 worin R₅ und R₆ Wasserstoff C₁-C₈-Alkyl, C₁-C₈-Alkoxy, Halogen, Carboxy, Sulfo, Ureido, gegebenenfalls im Alkylteil substituiertes C₂-C₆-Alkanoylamino oder gegebenenfalls substituiertes Arylazo, R₇, R₈, R₉, R₁₀, R₁₁ und R₁₂, Wasserstoff C₁-C₈-Alkyl, C₁-C₈-Alkoxy, Halogen, Carboxy, Sulfo, Ureido oder gegebenenfalls im Alkylteil substituiertes C₂-C₆-Alkanoylamino bedeuten und A₁ ein Rest der Formel
―CH=CH― (5) 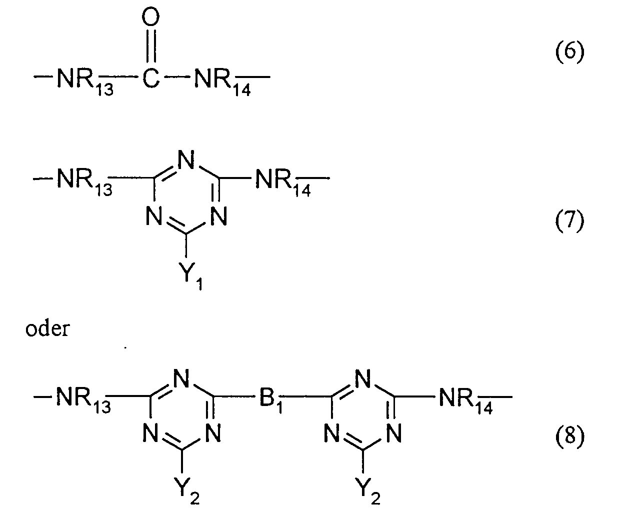
und A₂ ein Rest der Formel 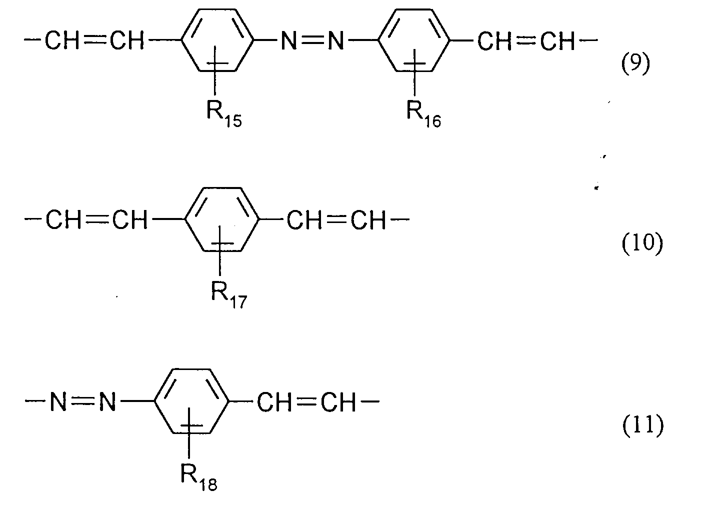 ist, wobei R₁₃ und R₁₄ Wasserstoff oder gegebenenfalls substituiertes C₁-C₈-Alkyl, Y₁ im Rest der Formel (7) und Y₂ im Rest der Formel (8) Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁ -C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl bedeuten und B₁ im Rest der Formel (8) ein Brückenglied ist und R₁₅, R₁₆, R₁₇ und R₁₈ Wasserstoff, C₁-C₈-Alkyl, C₁-C₈-Alkoxy, Halogen, Carboxy, Sulfo, Ureido oder gegebenenfalls im Alkylteil substituiertes C₂-C₆-Alkanoyl amino bedeuten, verwendet.

7. Verfahren gemäß wenigstens einem der vorhergehenden Ansprüche, dadurch gekennzeichnet, daß man als Farbstoff der Formeln (3) und (4) einen Farbstoff der Formeln (16) bis (25) 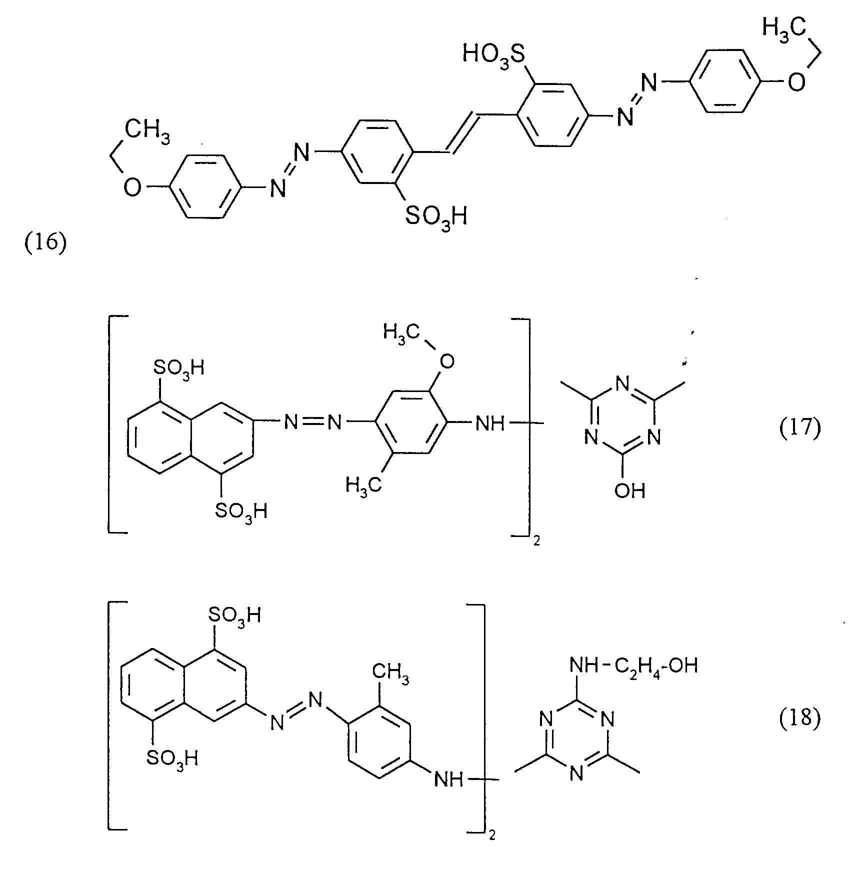 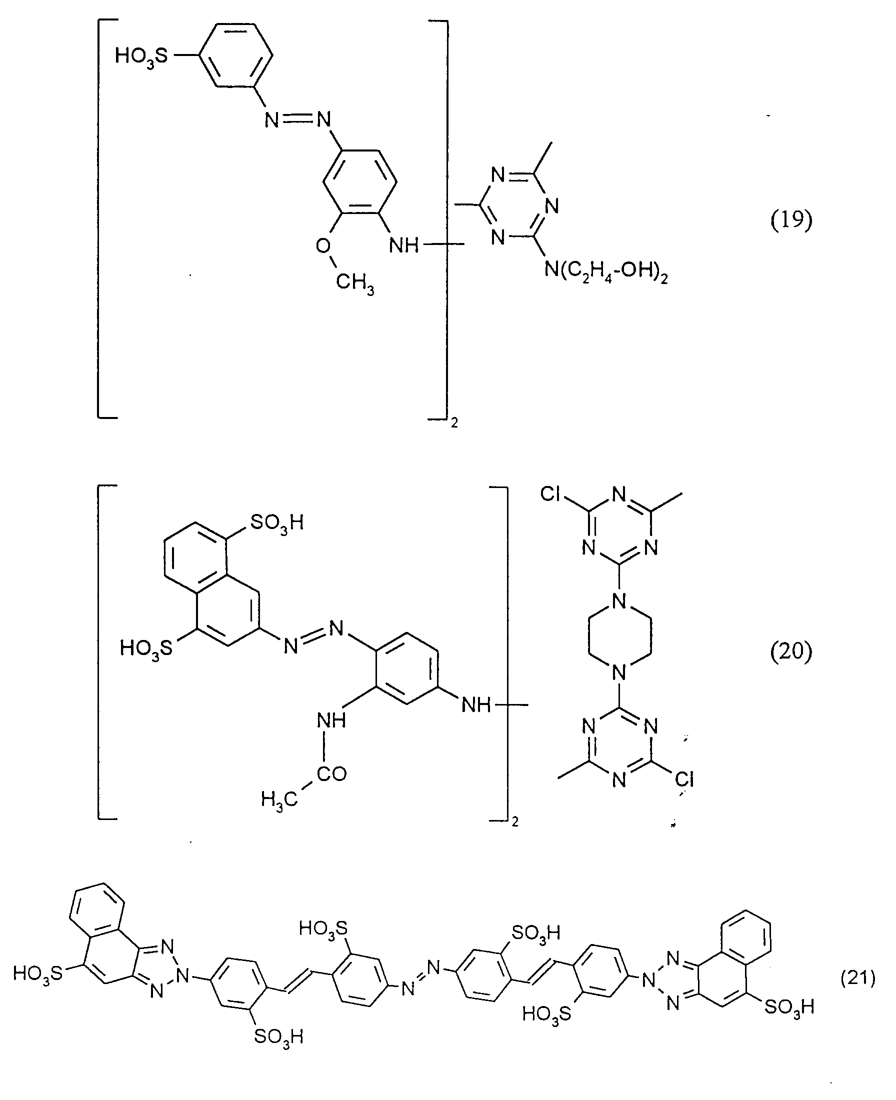 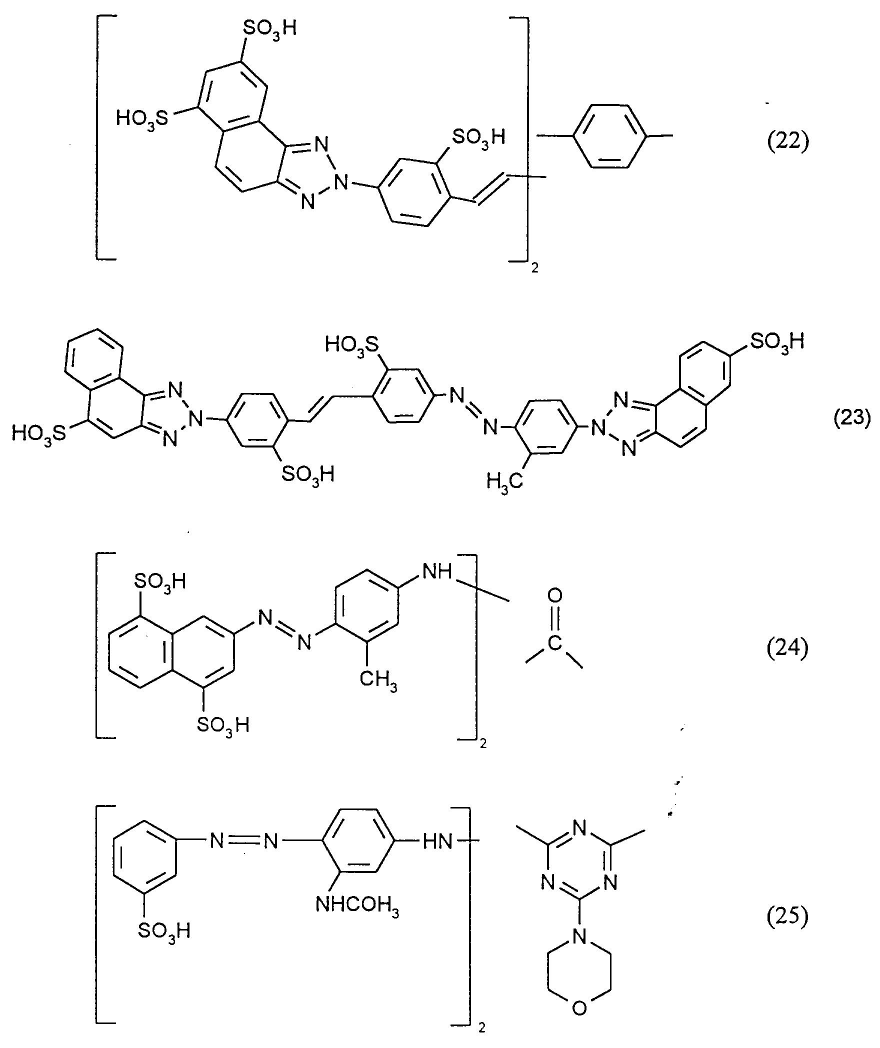 verwendet.

8. Verfahren gemäß wenigstens einem der vorhergehenden Ansprüche, dadurch gekennzeichnet, daß man als rotfärbenden Farbstoff mindestens einen Farbstoff der Formeln (26) bis (31) 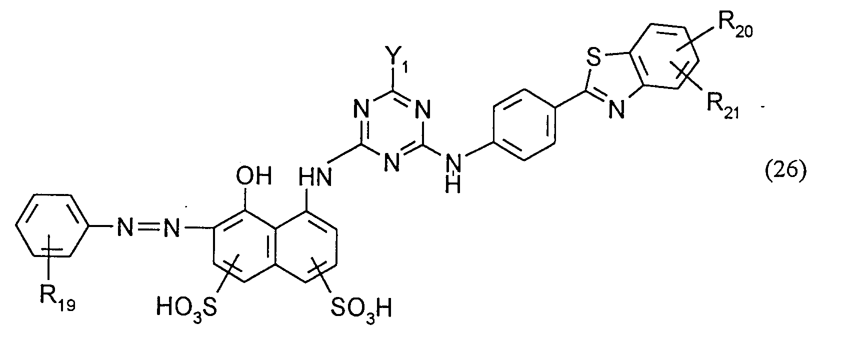 worin R₁₉, R₂₀ R₂₁ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituierter C₂-C₆-Alkanoylamino bedeuten und für Y₁ die in Anspruch 7 genannten Bedeutungen und Bevorzugungen gelten, 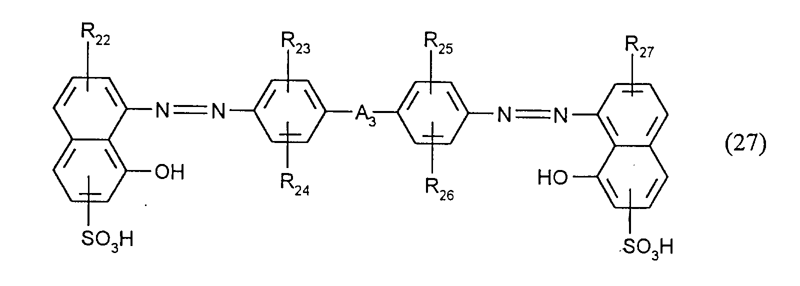 worin R₂₂, R₂₃, R₂₄, R₂₅, R₂₆ und R₂₇ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und A₃ ein Rest der Formel
-NH-, 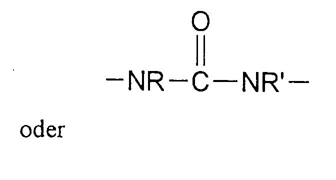 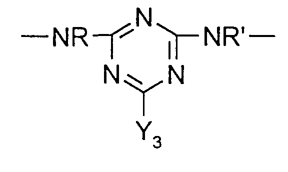 ist, wobei R und R' Wasserstoff oder gegebenenfalls substituiertes C₁-C₈-Alkyl und Y₃ Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/ oder Halogen substituiertes Phenylamino oder N-C₁-C₄-Alkyl-N-phenylamino, Morpholino oder 3-Carboxy- oder 3-Cärbamoylpyridin-1-yl bedeuten, 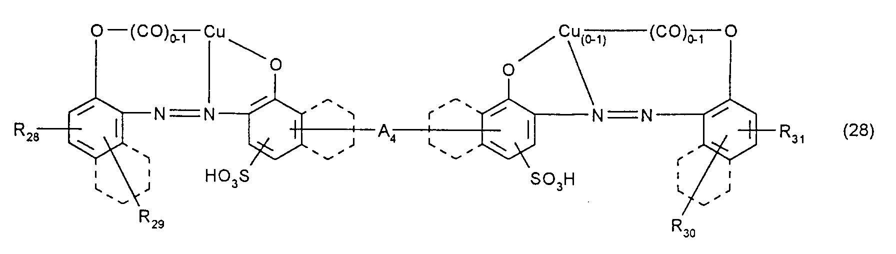 worin R₂₈, R₂₉, R₃₀ und R₃₁ Wasserstoff gegebenenfalls substituiertes C₁-C₄-Alkyl oder C₁-C₈-Alkoxy, Halogen, Carboxy, Sulfo, Ureido, Sulfamoyl oder gegebenenfalls im Alkylteil substituiertes C₂-C₆-Alkanoylamino sind und A₄ die oben unter Formel (27) für A₃ angegebenen Bedeutungen hat, 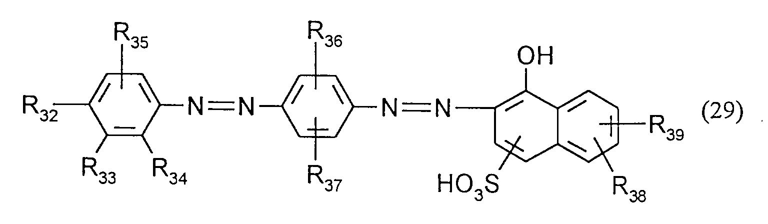 worin R₃₂, R₃₃, R₃₄, R₃₅, R₃₆, R₃₇ und R₃₈ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind und R₃₉ gegebenenfalls im Phenylring substituiertes Benzoylamino oder ein gegebenenfalls im Phenylring weitersubstituierter Rest der Formel 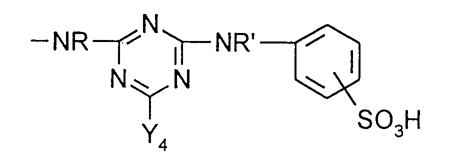 ist, wobei R und R' Wasserstoff oder gegebenenfalls substituiertes C₁-C₈-Alkyl und Y₄ die oben unter Formel (27) für Y₃ angegebenen Bedeutungen hat, 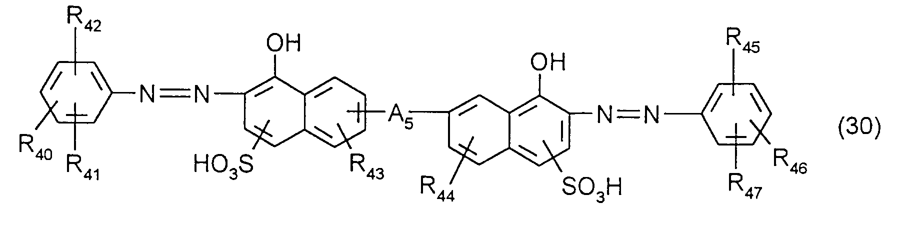 worin R₄₀, R₄₁, R₄₂, R₄₃, R₄₄, R₄₅, R₄₆ und R₄₇ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino sind, wobei R₄₀ und R₄₆ zusätzlich gegebenenfalls im Phenylring substituiertes Phenylazo bedeuten können, und A₅ die oben unter Formel (27) für A₃ angegebenen Bedeutungen hat oder ein Rest der Formel 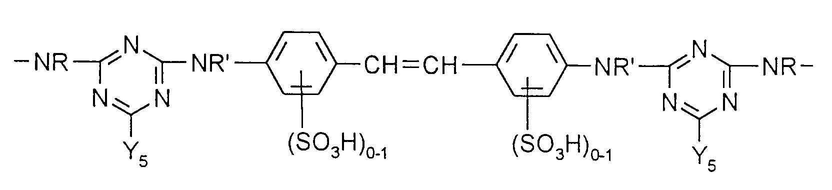 ist, wobei R und R' Wasserstoff oder gegebenenfalls substituiertes C₁-C₈-Alkyl sind und Y₅ die oben unter Formel (27) für Y₃ angegebenen Bedeutungen hat, 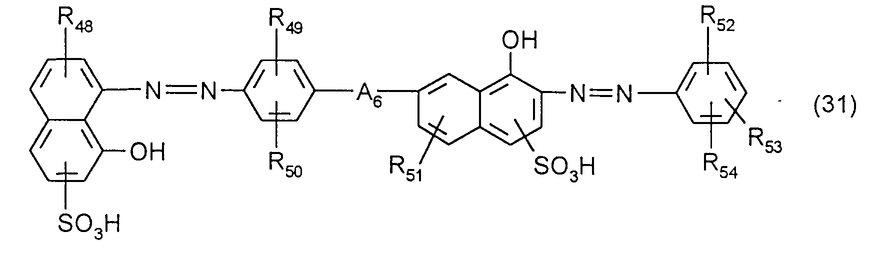 worin R₄₈, R₄₉, R₅₀, R₅₁, R₅₂, R₅₃ und R₅₄ Wasserstoff, gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten, wobei R₅₃ zusätzlich gegebenenfalls im Phenylring substituiertes Phenylazo bedeuten kann und A₆ die oben unter Formel (27) für A₃ angegebenen Bedeutungen hat, verwendet.

9. Verfahren gemäß wenigstens einem der vorhergehenden Ansprüche, dadurch gekennzeichnet, daß man als rotfärbenden Farbstoff mindestens einen Farbstoff der Formeln (32) bis (44) 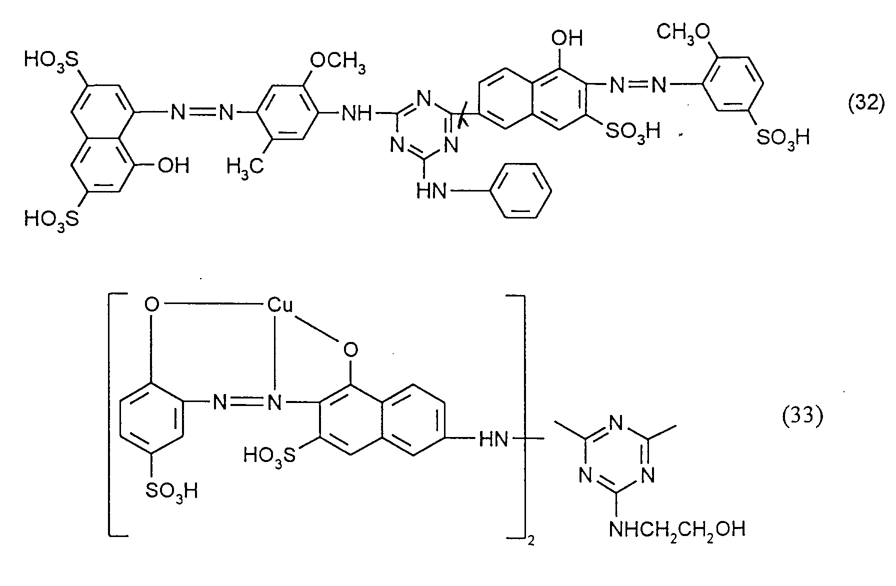 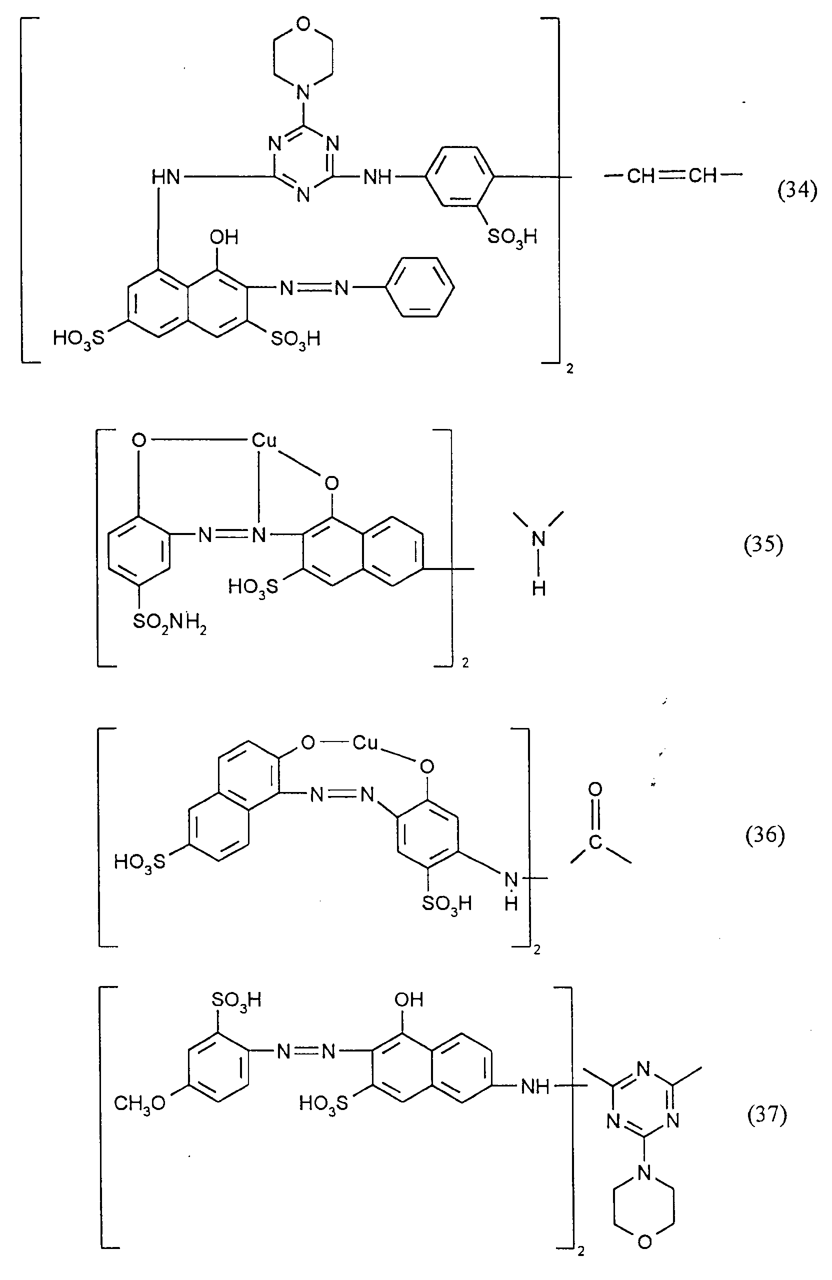 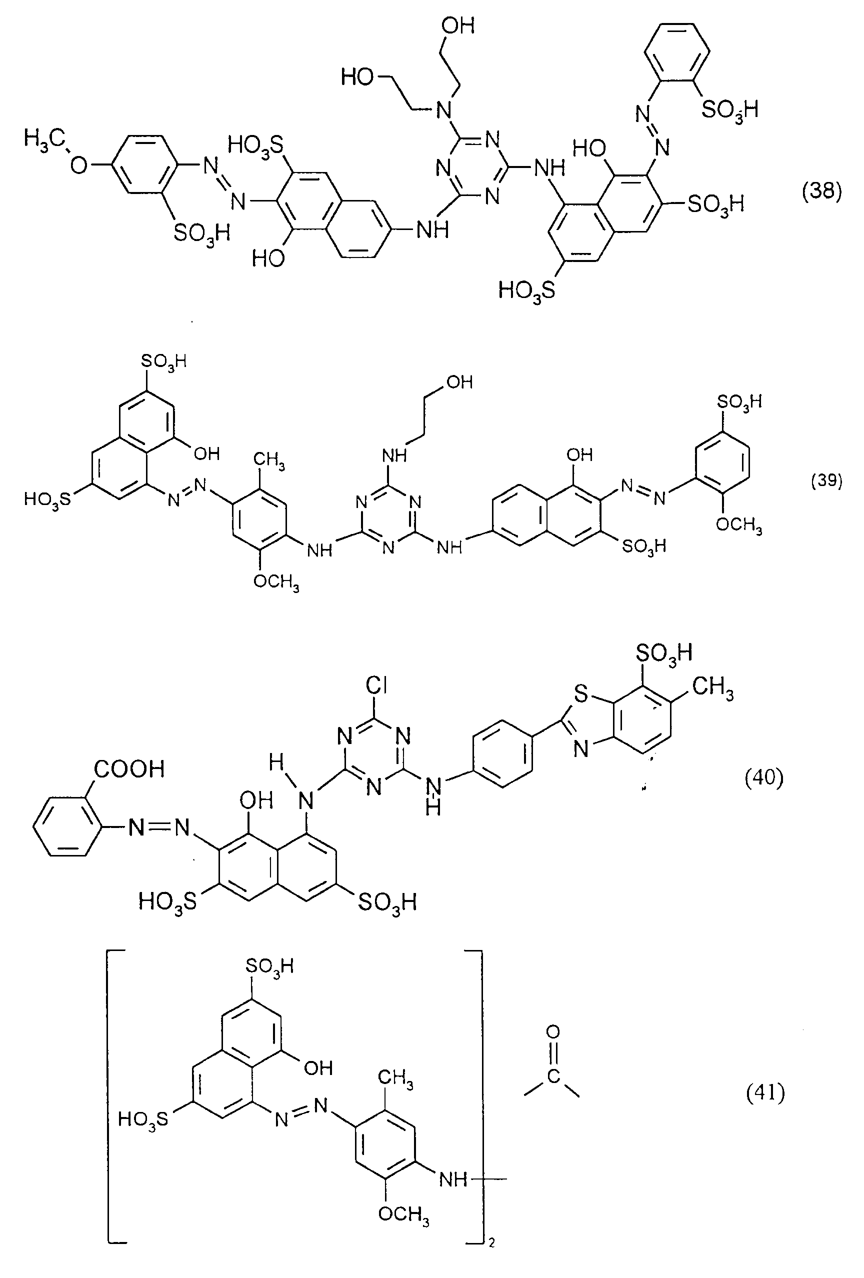 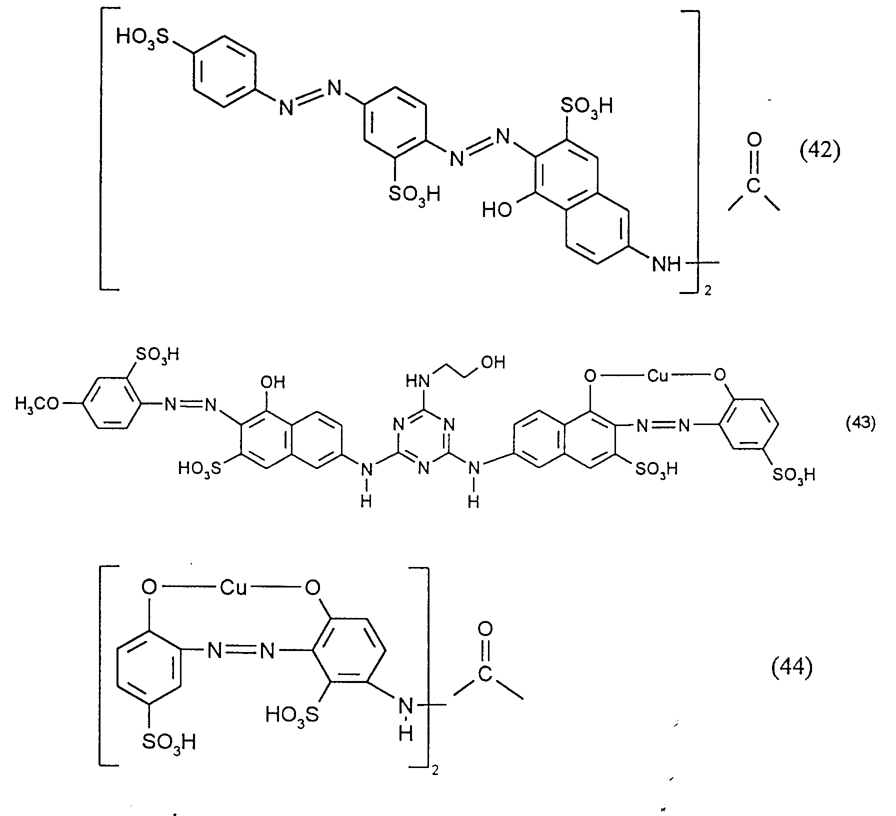 verwendet.

10. Verfahren gemäß wenigstens einem der vorhergehenden Ansprüche, dadurch gekennzeichnet, daß man als marineblau- oder schwarzfärbenden Farbstoff mindestens einen Farbstoff der Formeln (45) bis (48) 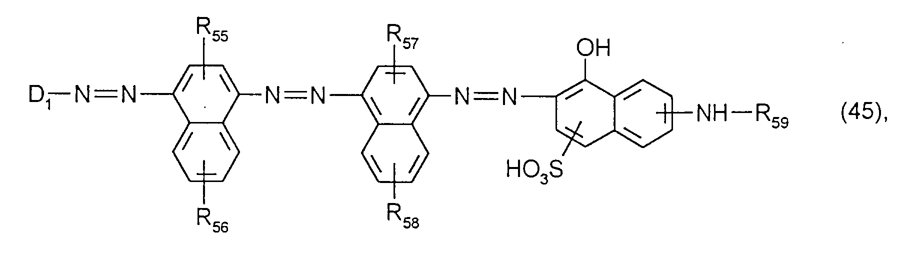 worin D₁ gegebenenfalls substituiertes Phenyl oder Naphthyl, R₅₅, R₅₆, R₅₇ und R₅₈ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und R₅₉ Wasserstoff, gegebenenfalls substituiertes C₁-C₈-Alkyl, gegebenenfalls im Alkylteil substituiertes C₂-C₆-Alkanoyl oder gegebenenfalls im Phenylring substituiertes Phenyl oder Benzoyl bedeutet, 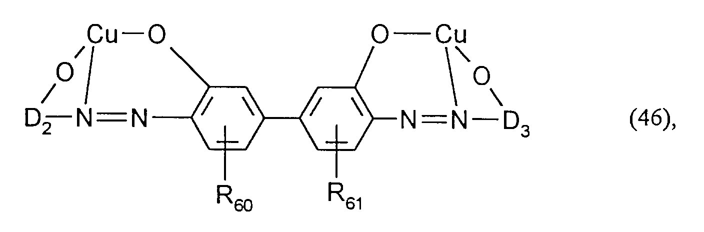 worin D₂ und D₃ gegebenenfalls substituiertes Naphthyl und R₆₀ und R₆₁ Wasserstoff gegebenenfalls substituiertes C₁-C₈-Alkyl oder C₁-C₈-Alkoxy, Halogen, Carboxy, Sulfo, Ureido oder gegebenenfalls im Alkylteil subsituiertes C₂-C₆-Alkanoylamino bedeuten, 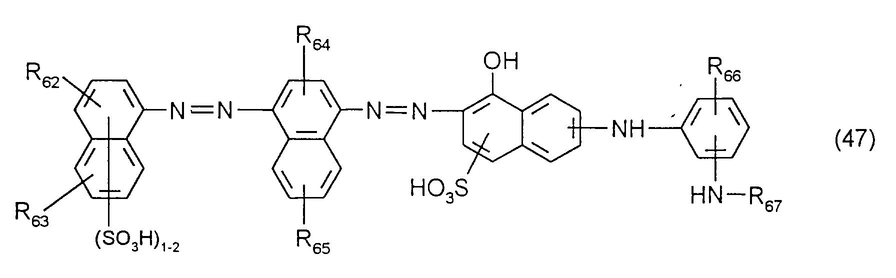 worin R₆₂, R₆₃, R₆₄, R₆₅ und R₆₆ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten und R₆₇ Wasserstoff gegebenenfalls substituiertes C₁-C₈-Alkyl, gegebenenfalls substituiertes C₂-C₆-Alkanoyl oder gegebenenfalls im Phenylring substituiertes Phenyl oder Benzoyl bedeutet, 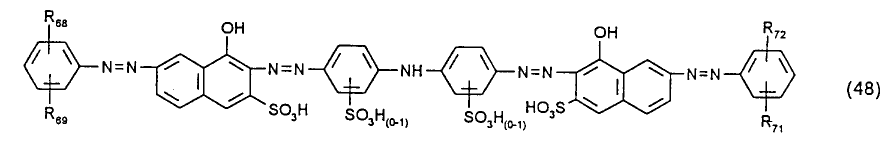 worin R₆₈, R₆₉, R₇₀ und R₇₁ Wasserstoff gegebenenfalls substituiertes C₁-C₈-Alkyl oder C₁-C₈-Alkoxy, Halogen, Carboxy, Sulfo, Ureido oder gegebenenfalls im Alkylteil substituiertes C₂-C₆-Alkanoylamino bedeuten, verwendet.

11. Verfahren gemäß wenigstens einem der vorhergehenden Ansprüche, dadurch gekennzeichnet, daß man als marineblau- oder schwarzfärbenden Farbstoff mindestens einen Farbstoff der Formeln (49) bis (56) 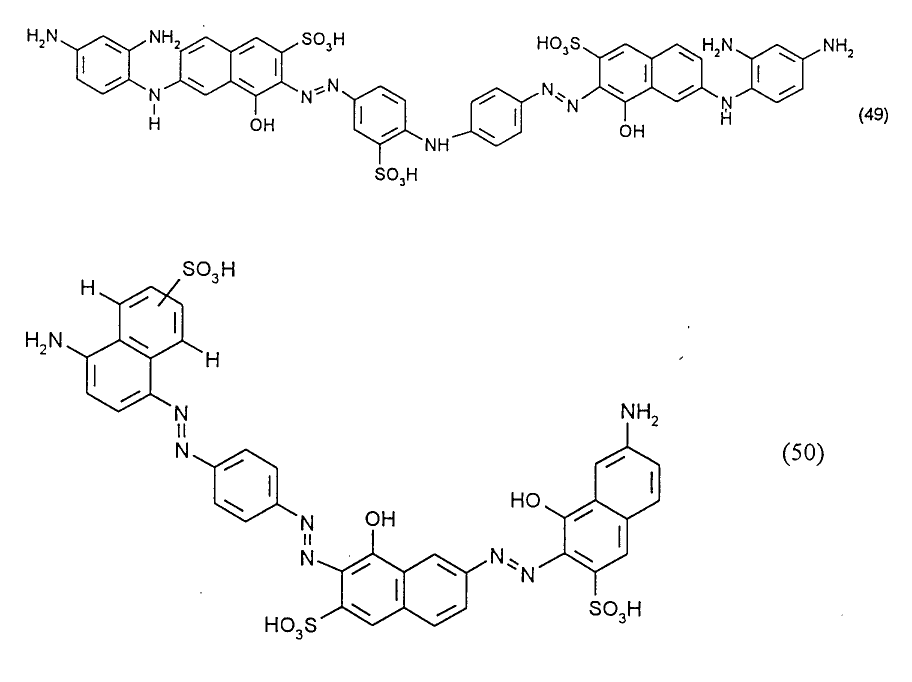 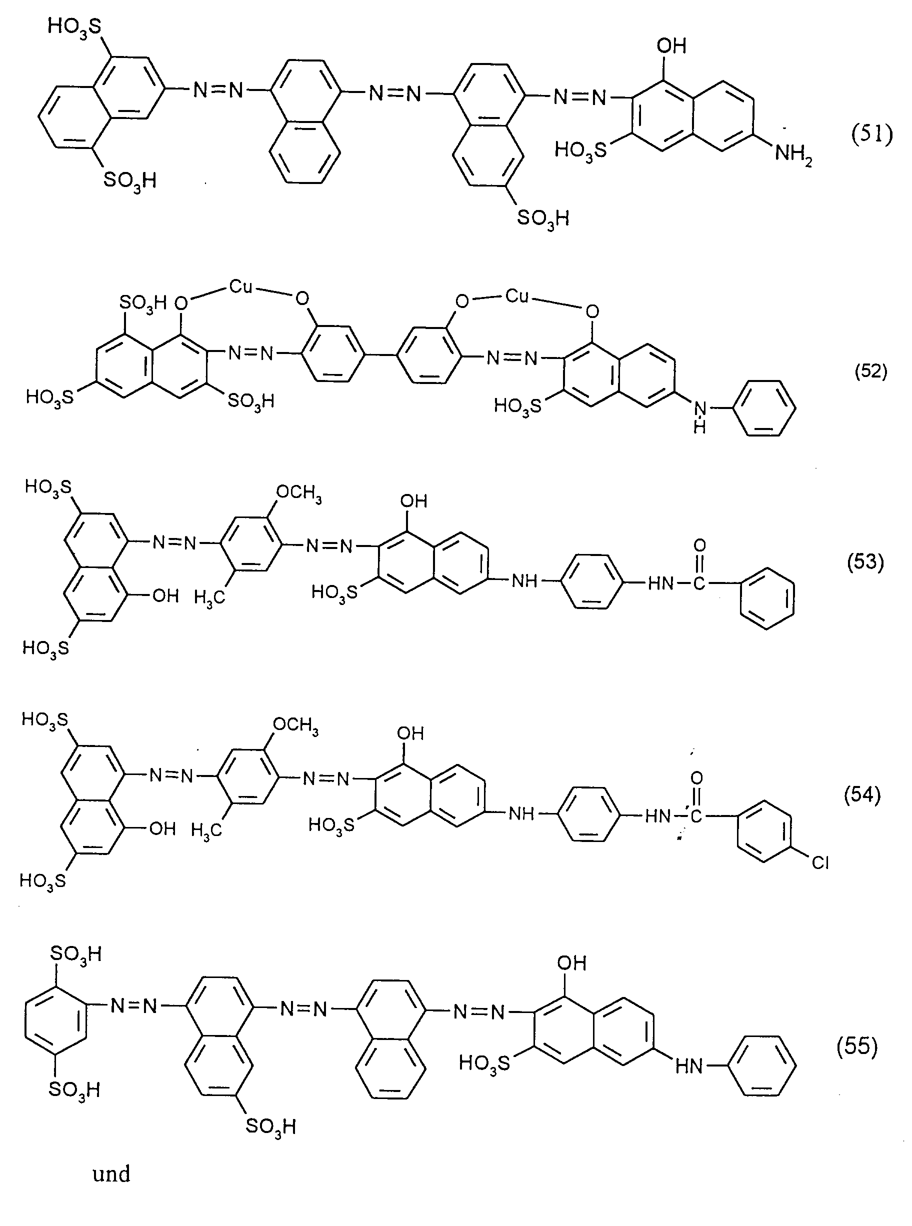 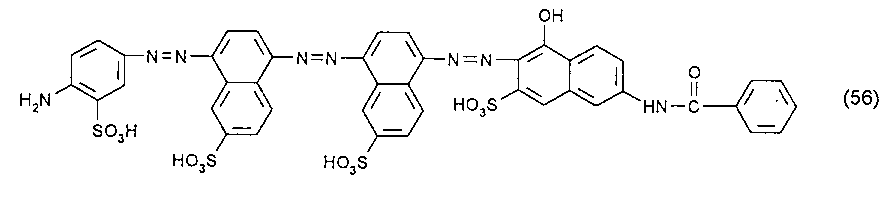 verwendet.

12. Verfahren gemäß wenigstens einem der vorhergehenden Ansprüche, dadurch gekennzeichnet, daß man in Gegenwart eines Salzes, insbesondere eines Alkalihalogenids oder eines Alkalisulfats, färbt, wobei die Salzmenge kurz vor oder nach Erreichung der Färbetemperatur zugegeben wird.

13. Verfahren gemäß wenigstens einem der vorhergehenden Ansprüche, dadurch gekennzeichnet, daß man Fasergemische aus Synthesefasern und cellulosischen Fasermaterialien, insbesondere Polyester/Baumwoll-Mischgewebe, in Gegenwart eines Dispersionsfarbstoffes für die Synthesefasern unter den Färbebedingungen für die Synthesefasern färbt.

14. Verfahren gemäß Anspruch 13, dadurch gekennzeichnet, daß man Polyester/Baumwoll-Mischgewebe in einem einstufigen, einbadigen Verfahren färbt, wobei man neben einer Farbstoffmischung gemäß wenigstens einem der vorhergehenden Ansprüche einen Dispersionsfarbstoff verwendet und aus wäßriger Flotte bei Temperaturen im Bereich von 100 bis 150°C, vorzugsweise 120 bis 130°C, und einem pH-Wert zwischen 4 und 7,5 färbt.

15. Material, welches Substrate enthält, die gemäß wenigstens einem der vorhergehenden Ansprüche gefärbt worden sind.

16. Farbstoffmischung enthaltend mindestens einen blaufärbenden Farbstoff der Formel 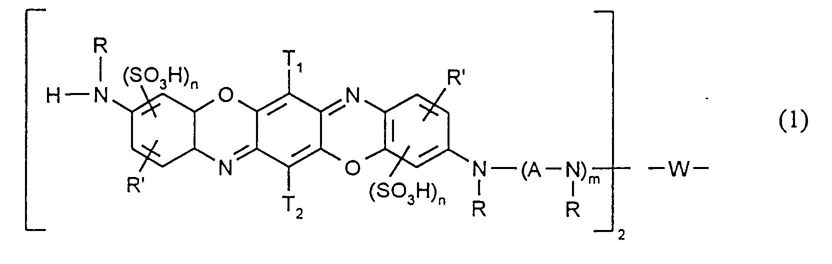 worin
R = Wasserstoff oder gegebenenfalls substituiertes Alkyl
R' = Wasserstoff oder Substituent
T₁, T₂ = Wasserstoff Chlor, Brom, gegebenenfalls substituiertes C₁-C₄-Alkyl, C₁-C₄-Alkoxy, Phenyl oder Phenoxy
W = Brückenglied der Formel 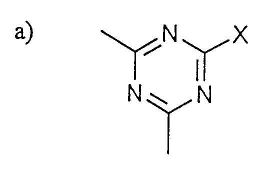 worin
X = H oder bei triazinverbrückten Farbstoffen üblicher Substituent, 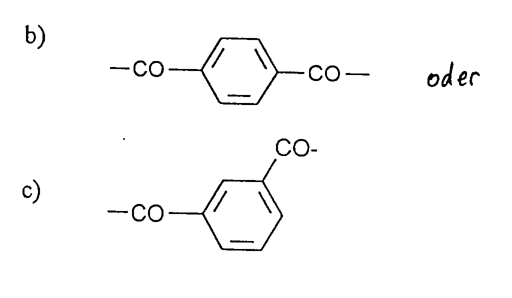
A = gegebenenfalls substituierter Alkylen-, Cycloalkylen-, Arylen- oder Aralkylenrest,
m,n = 0 oder 1, wobei die n-indizierte Sulfogruppe bei n = 1 in o-Stellung zu -NR- steht
bedeutet, zusammen mit mindestens einem gelbfärbendem und/oder mindestens einem rotfärbenden und/oder mindestens einem marineblau- oder schwarzfärbendem Farbstoff, wobei Substituenten und Indices gleicher Bezeichnung gleiche oder unterschiedliche Bedeutungen haben.

## Claims

1. Process for dyeing or printing fibre materials containing hydroxyl groups, characterized in that at least one blue-dyeing dyestuff of the formula 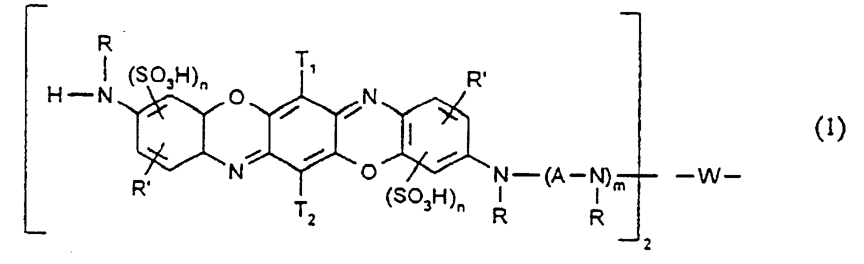 wherein
R = hydrogen or optionally substituted alkyl,
R' = hydrogen or a substituent,
T₁ and T₂ = hydrogen, chlorine, bromine, optionally substituted C₁-C₄-alkyl, C₁-C₄-alkoxy, phenyl or phenoxy,
W = a bridge member of the formula 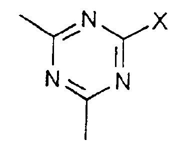 wherein
X = H or a substituent customary in dyestuffs bridged by triazine, 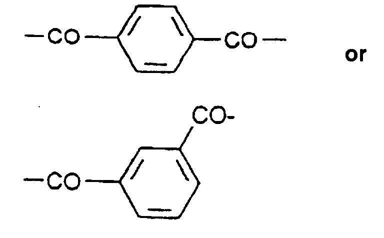
A = an optionally substituted alkylene, cycloalkylene, arylene or aralkylene radical and
m and n = 0 or 1, wherein the sulpho group with the n index, where n = 1, is in the o-position relative to -NR-,
is used together with at least one yellow-dyeing and/or at least one red-dyeing and/or at least one navy blue- or black-dyeing dyestuff, the substituents and indices which have the same designation having the same or different meanings.

2. Process according to Claim 1, characterized in that the blue-dyeing dyestuff corresponds to the formula 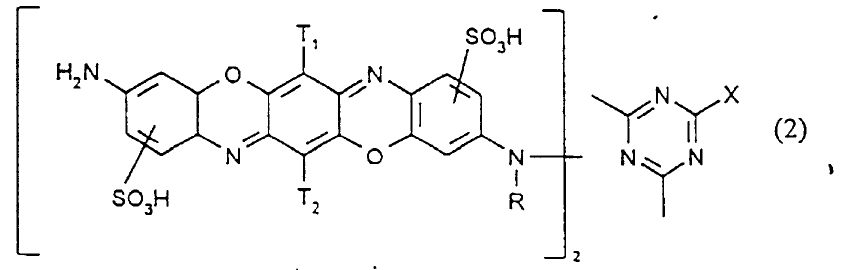 in which T₁, T₂, R and X have the meaning given in Claim 1.

3. Process according to at least one of the preceding claims, characterized in that in the dyestuff of the formula (1), T₁ = T₂ = Cl or OCH₃.

4. Process according to Claim 2, characterized in that in the dyestuff of the formula (2), X is halogen, sulpho, C₁-C₄-alkyl or a thioether, ether or optionally substituted amino group.

5. Process according to at least one of the preceding claims, characterized in that the dyestuff of the formula (1) used is at least one dyestuff of the formula

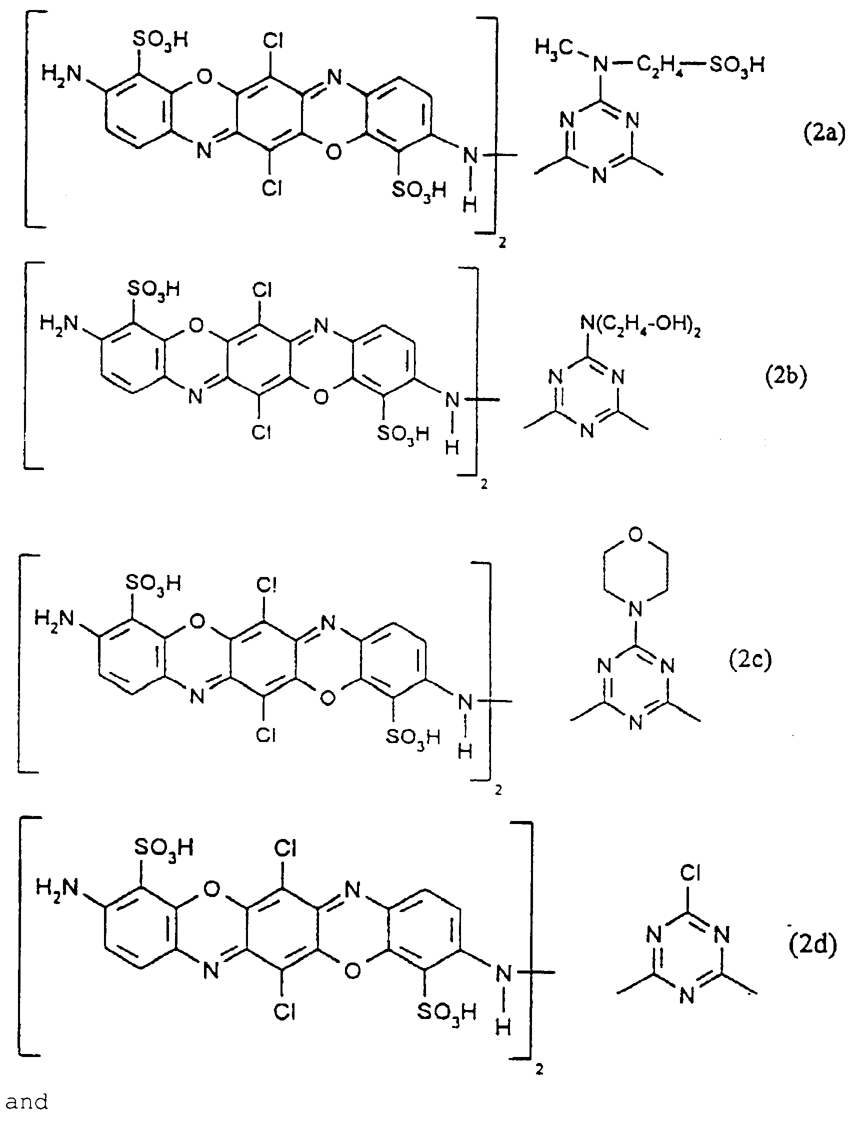

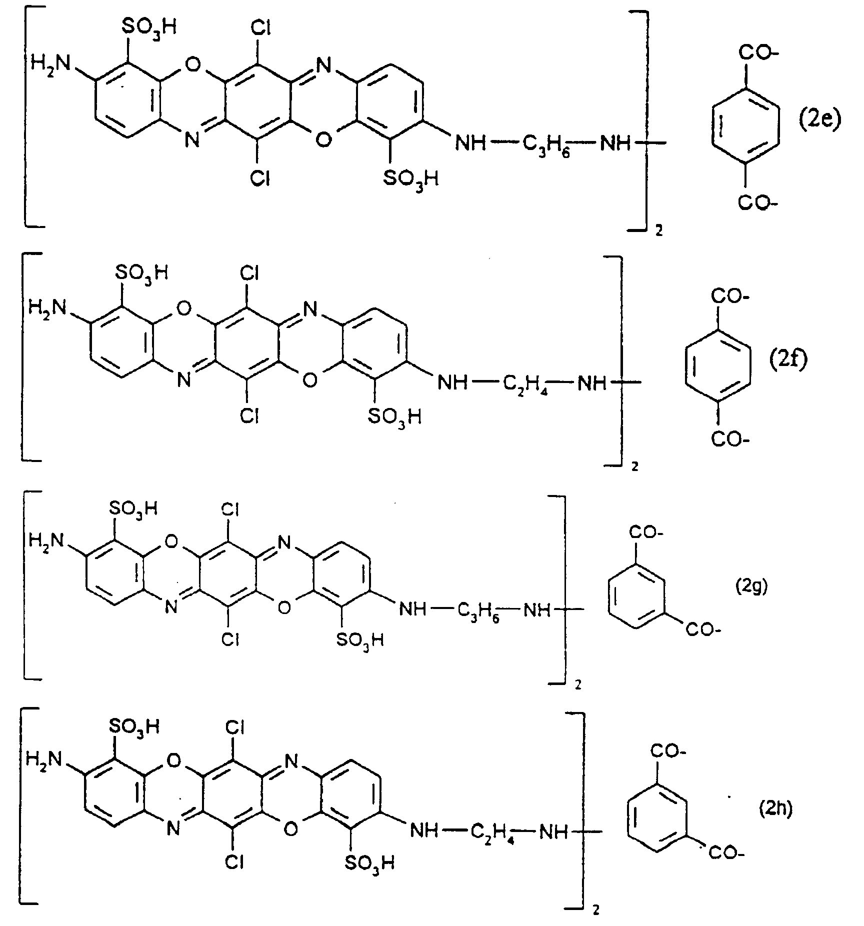

6. Process according to at least one of the preceding claims, characterized in that the yellow-dyeing dyestuff used is at least one dyestuff of the formulae (3) and (4) 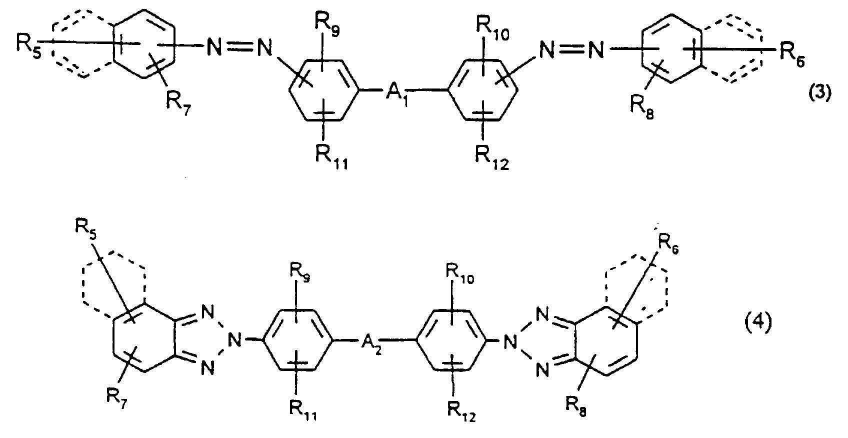 wherein R₅ and R₆ denote hydrogen, C₁-C₈-alkyl, C₁-C₈-alkoxy, halogen, carboxyl, sulpho, ureido, C₂-C₆-alkanoylamino which is optionally substituted in the alkyl part, or optionally substituted arylazo, R₇, R₈, R₉, R₁₀, R₁₁ and R₁₂ denote hydrogen, C₁-C₈-alkyl, C₁-C₈-alkoxy, halogen, carboxyl, sulpho, ureido or C₂-C₆-alkanoylamino which is optionally substituted in the alkyl part and A₁ is a radical of the formula
―CH=CH― (5) 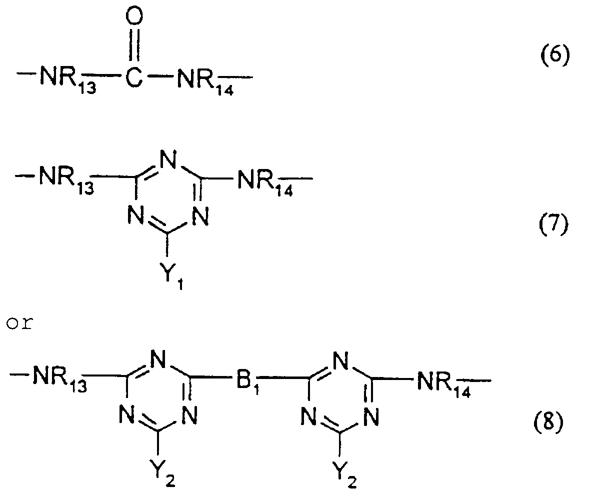
and A₂ is a radical of the formula 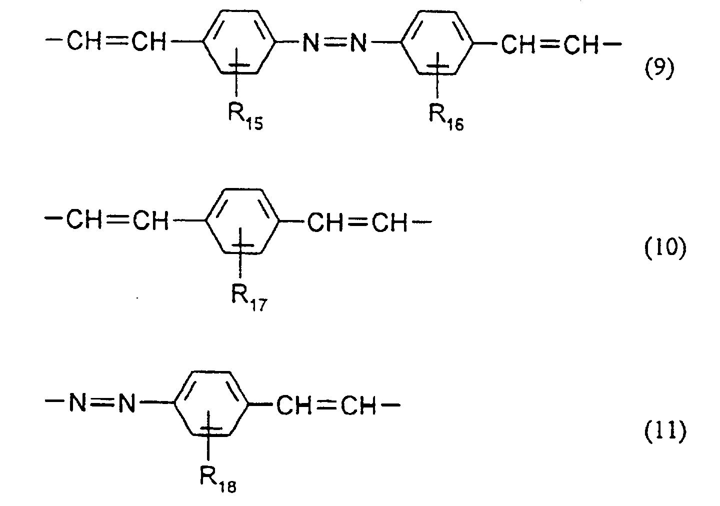 wherein R₁₃ and R₁₄ denote hydrogen or optionally substituted C₁-C₈-alkyl, Y₁ in the radical of the formula (7) and Y₂ in the radical of the formula (8) denote hydroxyl, C₁-C₄-alkoxy, chlorine, bromine, C₁-C₄-alkylthio, amino, N-mono- or N,N-di-C₁-C₄-alkylamino which is unsubstituted or substituted by hydroxyl, sulpho, carboxyl or C₁-C₄-alkoxy in the alkyl part, cyclohexylamino, phenylamino which is unsubstituted or substituted by C₁-C₄-alkyl, C₁-C₄-alkoxy, carboxyl, sulpho and/or halogen in the phenyl part, or N-C₁-C₄-alkyl-N-phenylamino, morpholino or 3-carboxy- or 3-carbamoylpyridin-1-yl, B₁ in the radical of the formula (8) is a bridge member and R₁₅, R₁₆, R₁₇ and R₁₈ denote hydrogen, C₁-C₈-alkyl, C₁-C₈-alkoxy, halogen, carboxyl, sulpho, ureido or C₂-C₆-alkanoylamino which is optionally substituted in the alkyl part.

7. Process according to at least one of the preceding claims, characterized in that the dyestuff of the formulae (3) and (4) used is a dyestuff of the formulae (16) to (25)

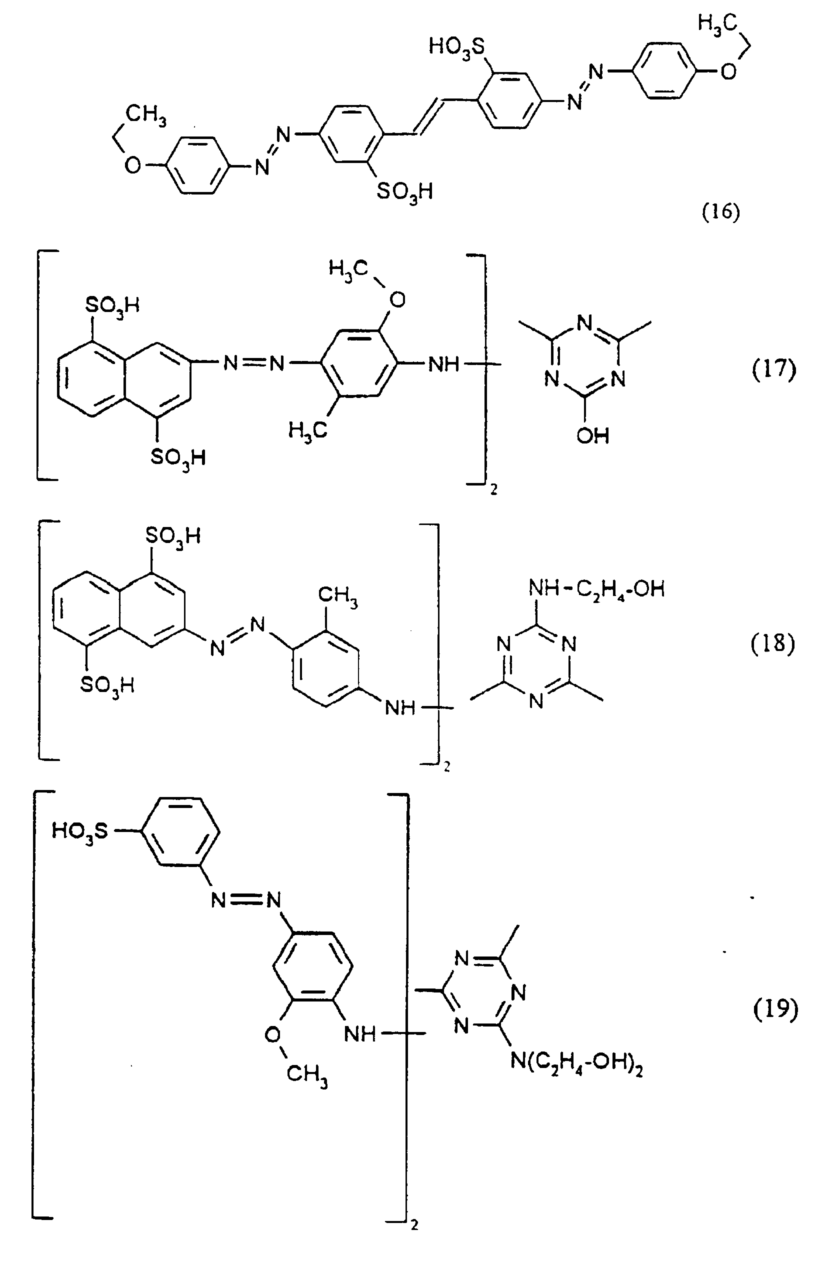

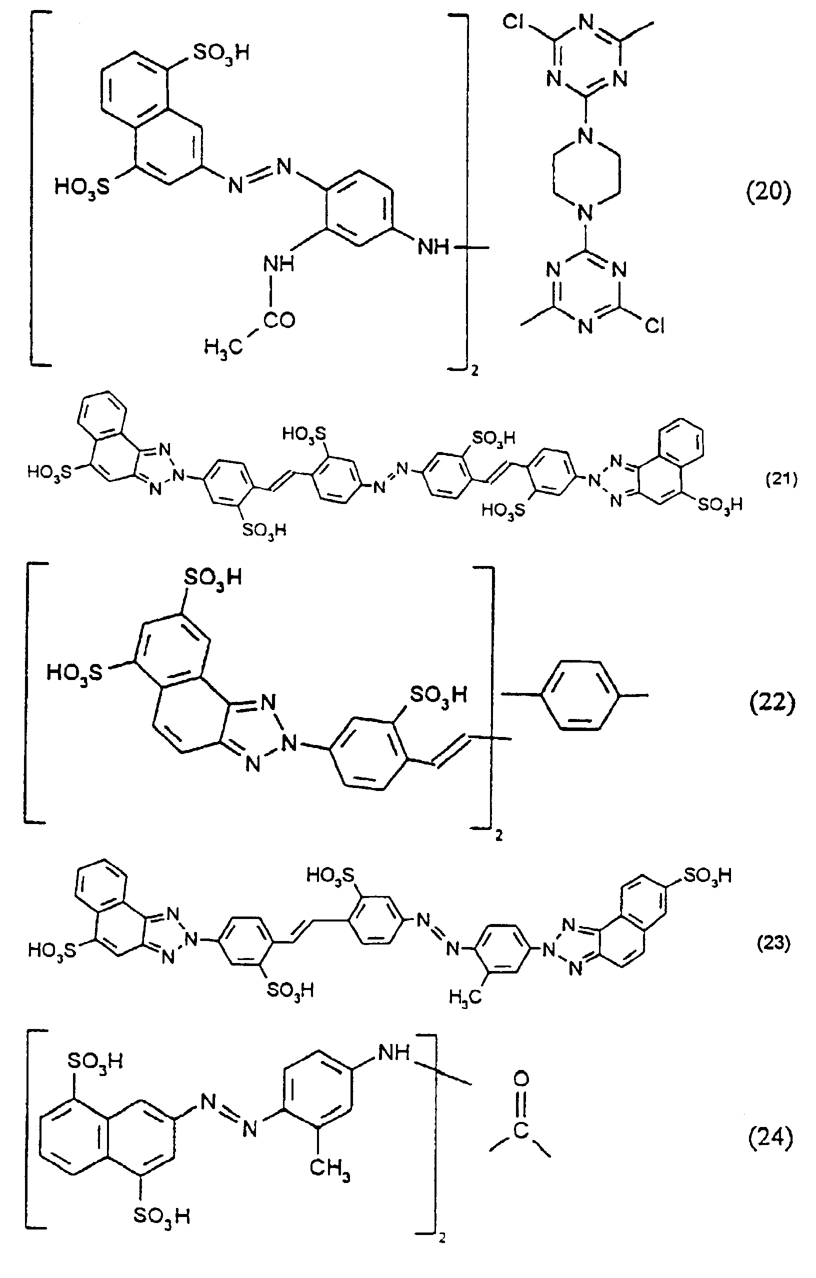

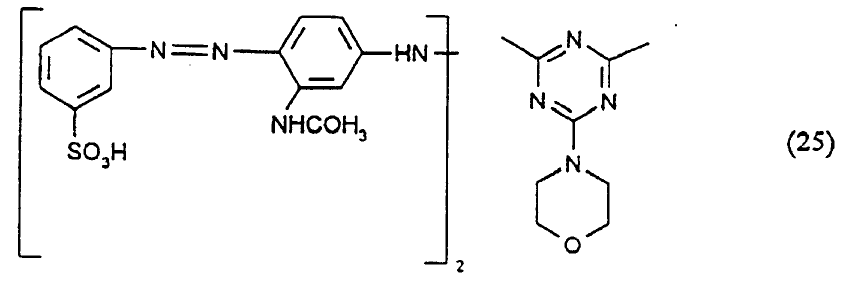

8. Process according to at least one of the preceding claims, characterized in that the red-dyeing dyestuff used is at least one dyestuff of the formulae (26) to (31) 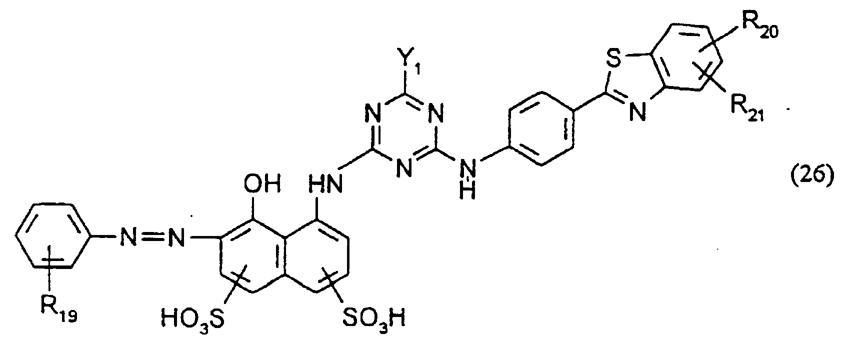 wherein R₁₉, R₂₀ and R₂₁ denote hydrogen, optionally substituted C₁-C₈-alkyl or C₁-C₈-alkoxy, halogen, carboxyl, sulpho, ureido or C₂-C₆-alkanoylamino which is optionally substituted in the alkyl part and Y₁ has the meanings and preferred meanings given in Claim 7, 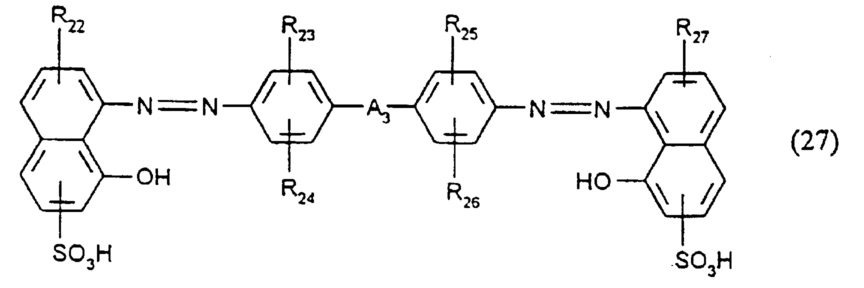 wherein R₂₂, R₂₃, R₂₄, R₂₅, R₂₆ and R₂₇ denote hydrogen, optionally substituted C₁-C₈-alkyl or C₁-C₈-alkoxy, halogen, carboxyl, sulpho, ureido or C₂-C₆-alkanoylamino which is optionally substituted in the alkyl part and A₃ is a radical of the formula
-NH-, 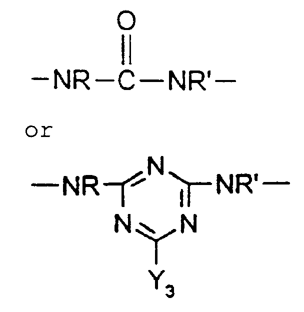 wherein R and R' denote hydrogen or optionally substituted C₁-C₈-alkyl and Y₃ denotes hydroxyl, C₁-C₄-alkoxy, chlorine, bromine, C₁-C₄-alkylthio, amino, N-mono- or N,N-di-C₁-C₄-alkylamino which is unsubstituted or substituted by hydroxyl, sulpho, carboxyl or C₁-C₄-alkoxy in the alkyl part, cyclohexylamino, phenylamino which is unsubstituted or substituted by C₁-C₄-alkyl, C₁-C₄-alkoxy, carboxyl, sulpho and/or halogen in the phenyl part, or N-C₁-C₄-alkyl-N-phenylamino, morpholino or 3-carboxy- or 3-carbamoylpyridin-1-yl, 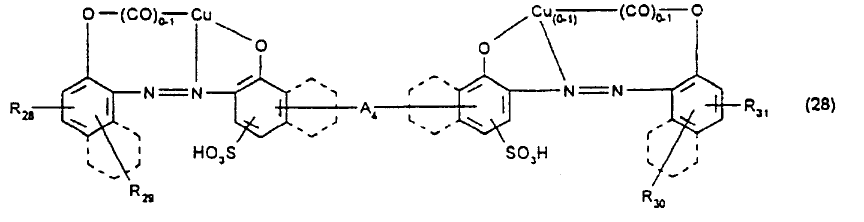 wherein R₂₈, R₂₉, R₃₀ and R₃₁ are hydrogen, optionally substituted C₁-C₄-alkyl or C₁-C₈-alkoxy, halogen, carboxyl, sulpho, ureido, sulphamoyl or C₂-C₆-alkanoylamino which is optionally substituted in the alkyl part and A₄ has the meanings given above for A₃ under formula (27), 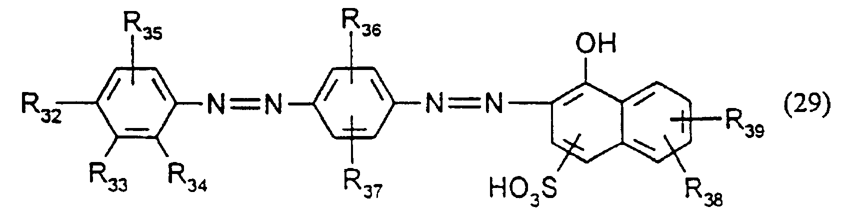 wherein R₃₂, R₃₃, R₃₄, R₃₅, R₃₆, R₃₇, and R₃₈ are hydrogen, optionally substituted C₁-C₈-alkyl or C₁-C₈-alkoxy, halogen, carboxyl, sulpho, ureido or C₂-C₆-alkanoylamino which is optionally substituted in the alkyl part and R₃₉ is benzoylamino which is optionally substituted in the phenyl ring or a radical of the formula 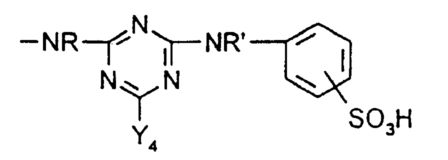 which is optionally further substituted in the phenyl ring and wherein R and R' are hydrogen or optionally substituted C₁-C₈-alkyl and Y₄ has the 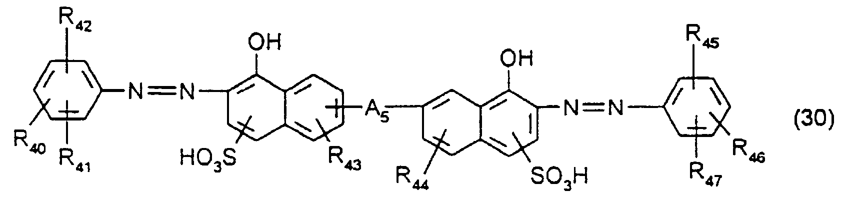 meanings given above for Y₃ under formula (27), wherein R₄₀, R₄₁, R₄₂, R₄₃, R₄₄, R₄₅, R₄₆ and R₄₇ are hydrogen, optionally substituted C₁-C₈-alkyl or C₁-C₈-alkoxy, halogen, carboxyl, sulpho, ureido or C₂-C₆-alkanoylamino which is optionally substituted in the alkyl part, and wherein R₄₂ and R₄₆ can additionally denote phenylazo which is optionally substituted in the phenyl ring, and A₅ has the meanings given above for A₃ under formula (27), or is a radical of the formula 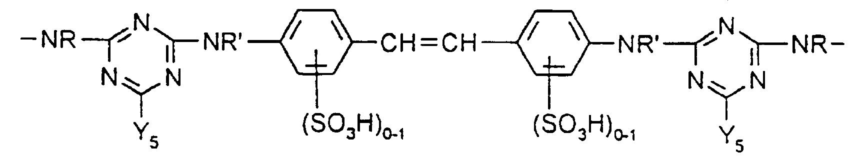 wherein R and R' are hydrogen or optionally substituted C₁-C₈-alkyl and Y₅ has the meanings given above for Y₃ under formula (27), 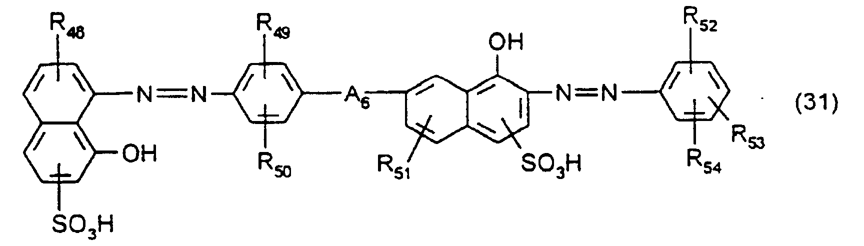 wherein R₄₈, R₄₉, R₅₀, R₅₁, R₅₂, R₅₃ and R₅₄ are hydrogen, optionally substituted C₁-C₈-alkyl or C₁-C₈-alkoxy, halogen, carboxyl, sulpho, ureido or C₂-C₆-alkanoylamino which is optionally substituted in the alkyl part, and wherein R₅₃ can additionally denote phenylazo which is optionally substituted in the phenyl ring, and A₆ has the meanings given above for A₃ under formula (27).

9. Process according to at least one of the preceding claims, characterized in that the red-dyeing dyestuff used is at least one dyestuff of the formulae (32) to (44)

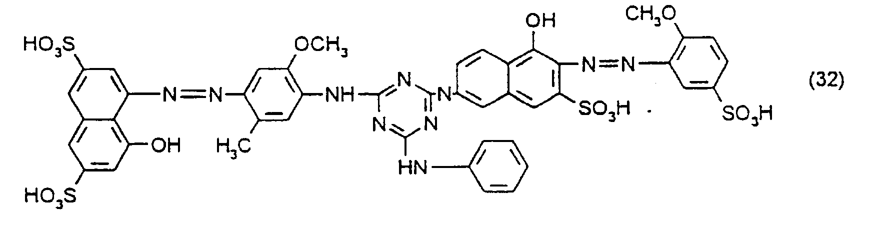

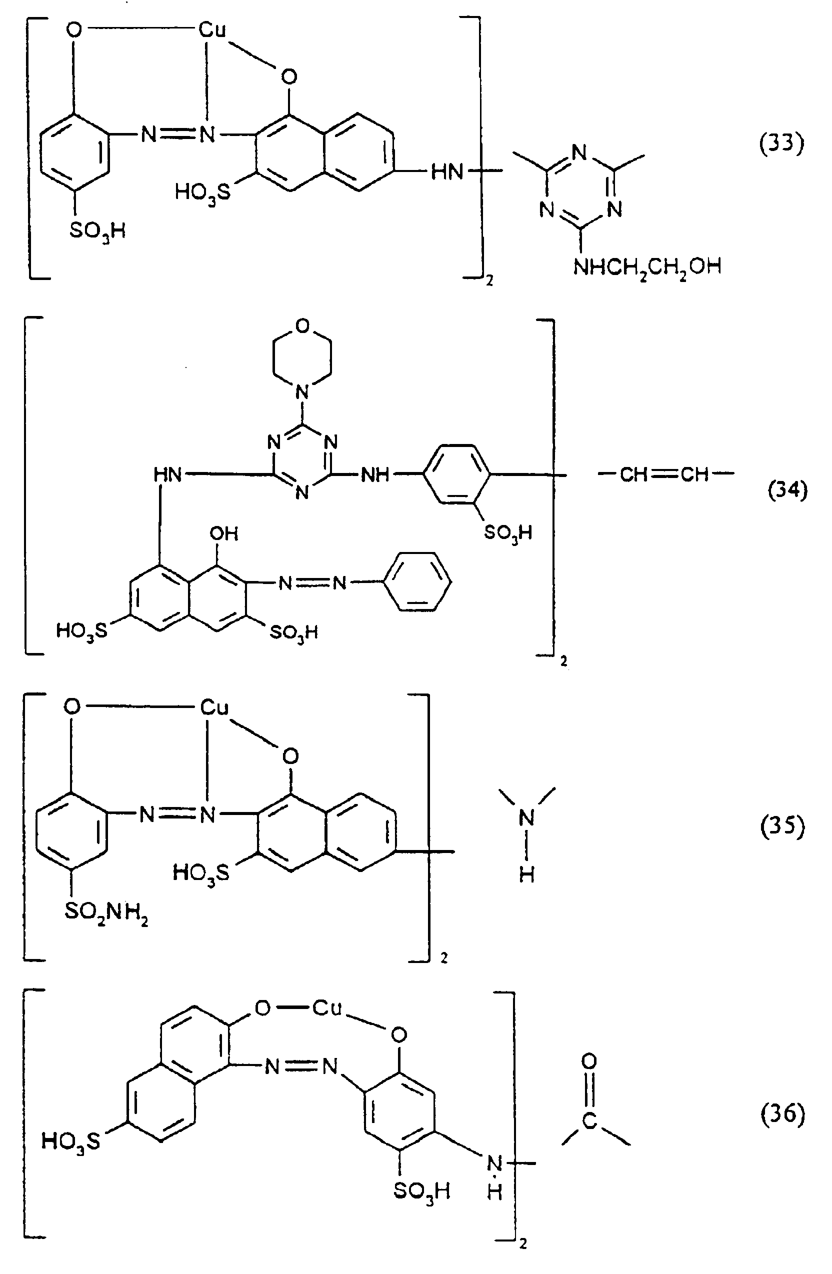

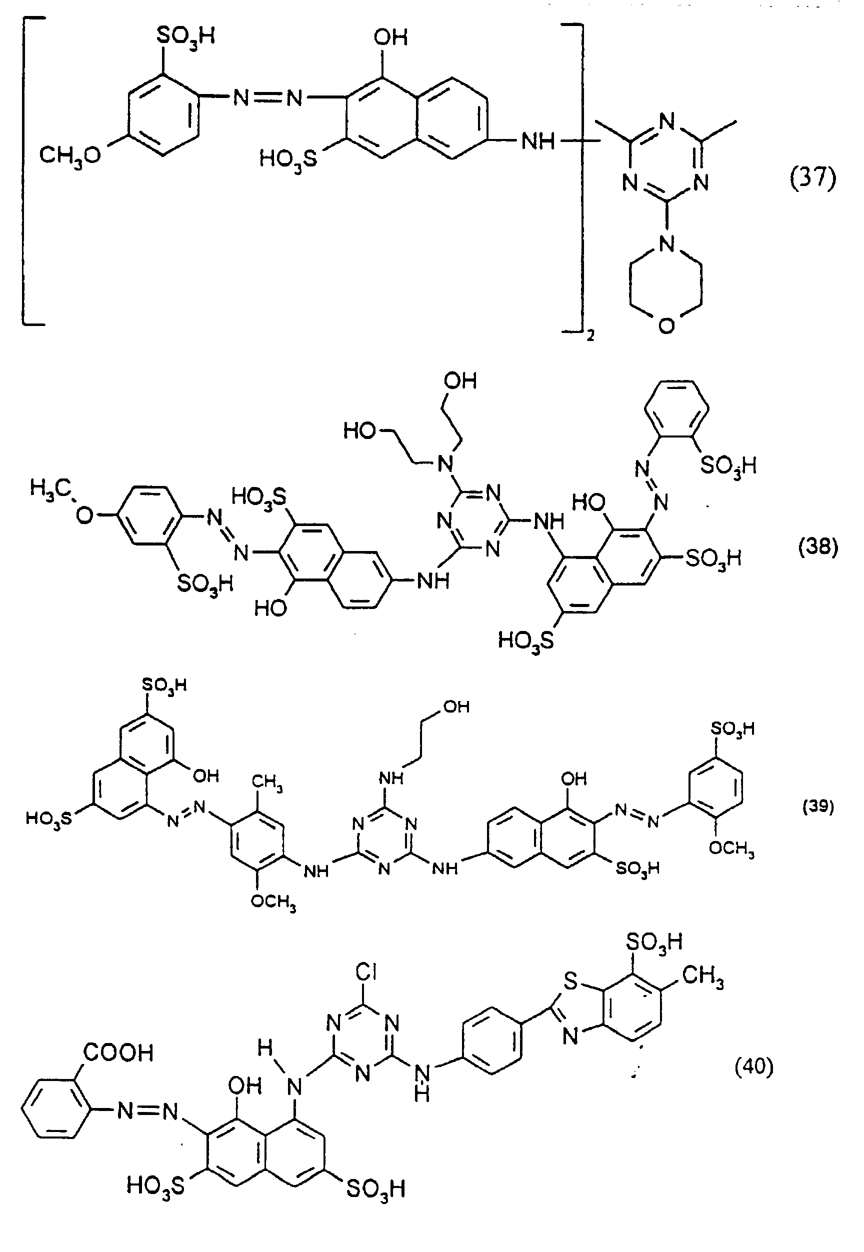

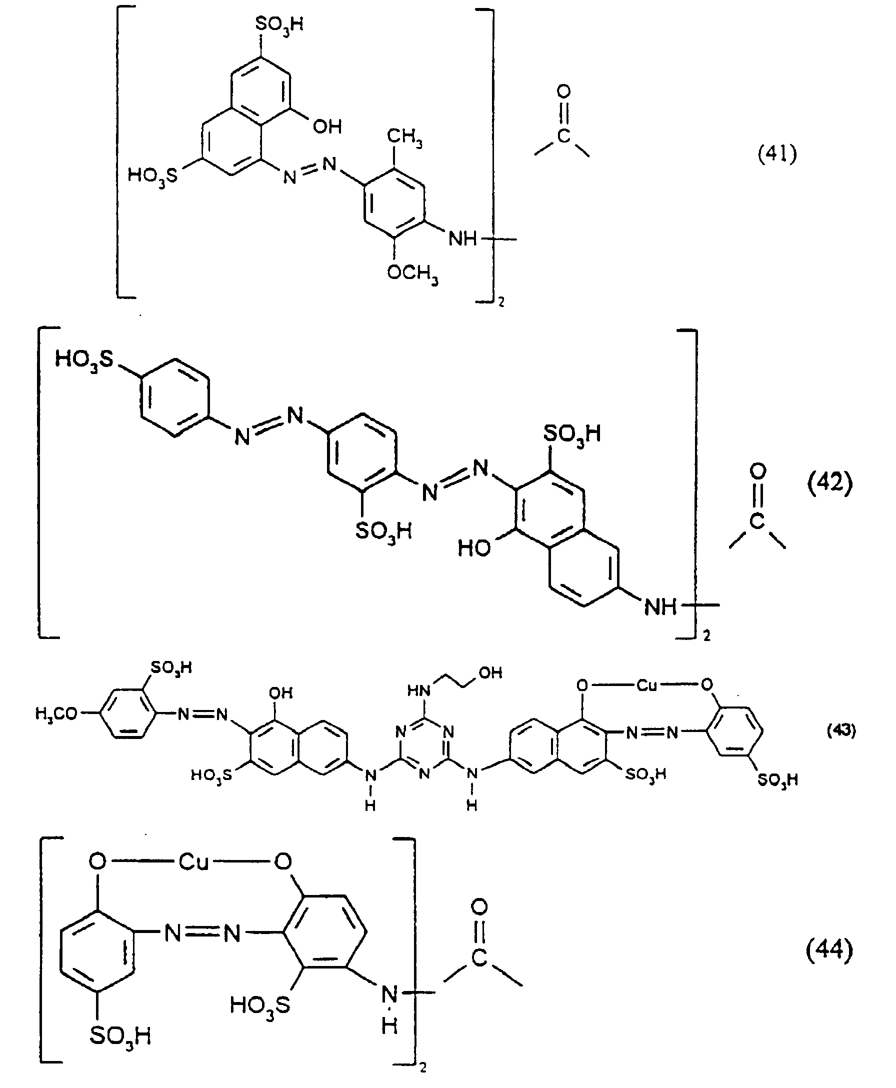

10. Process according to at least one of the preceding claims, characterized in that the navy blue- or black-dyeing dyestuff used is at least one dyestuff of the formulae (45) to (48) 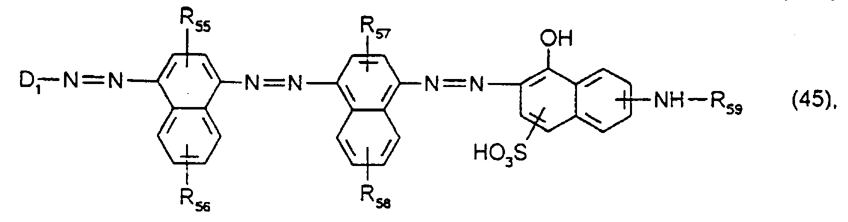 wherein D₁ denotes optionally substituted phenyl or naphthyl, R₅₅, R₅₆, R₅₇ and R₅₈ denote hydrogen, optionally substituted C₁-C₈-alkyl or C₁-C₈-alkoxy, halogen, carboxyl, sulpho, ureido or C₂-C₆-alkanoylamino which is optionally substituted in the alkyl part and R₅₉ denotes hydrogen, optionally substituted C₁-C₈-alkyl, C₂-C₆-alkanoyl which is optionally substituted in the alkyl part or phenyl or benzoyl which is optionally substituted in the phenyl ring, 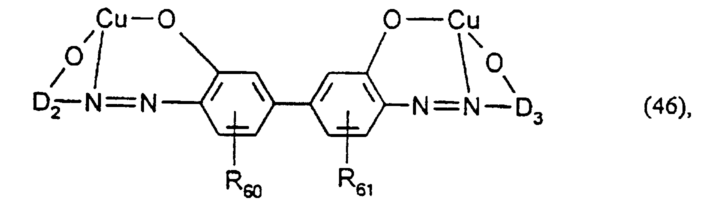 wherein D₂ and D₃ denote optionally substituted naphthyl and R₆₀ and R₆₁ denote hydrogen, optionally substituted C₁-C₈-alkyl or C₁-C₈-alkoxy, halogen, carboxyl, sulpho, ureido or C₂-C₆-alkanoylamino which is optionally substituted in the alkyl part, 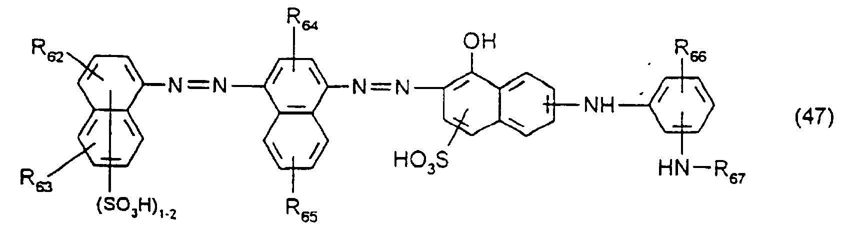 wherein R₆₂, R₆₃, R₆₄, R₆₅ and R₆₆ denote hydrogen, optionally substituted C₁-C₈-alkyl or C₁-C₈-alkoxy, halogen, carboxyl, sulpho, ureido or C₂-C₆-alkanoylamino which is optionally substituted in the alkyl part and R₆₇, denotes hydrogen, optionally substituted C₁-C₈-alkyl, optionally substituted C₂-C₆-alkanoyl or phenyl or benzoyl which is 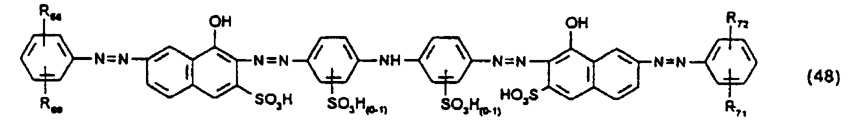 optionally substituted in the phenyl ring, wherein R₆₈, R₆₉, R₇₀ and R₇₁ denote hydrogen, optionally substituted C₁-C₈-alkyl or C₁-C₈-alkoxy, halogen, carboxyl, sulpho, ureido or C₂-C₆-alkanoylamino which is optionally substituted in the alkyl part.

11. Process according to at least one of the preceding claims, characterized in that the navy blue- or black-dyeing dyestuff used is at least one dyestuff of the formulae (49) to (56)

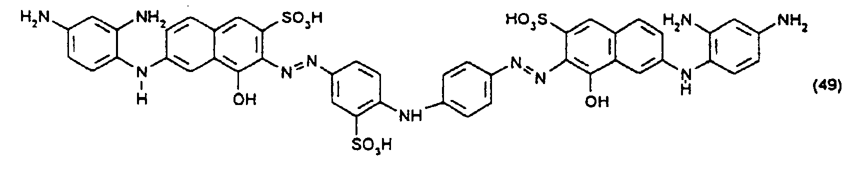

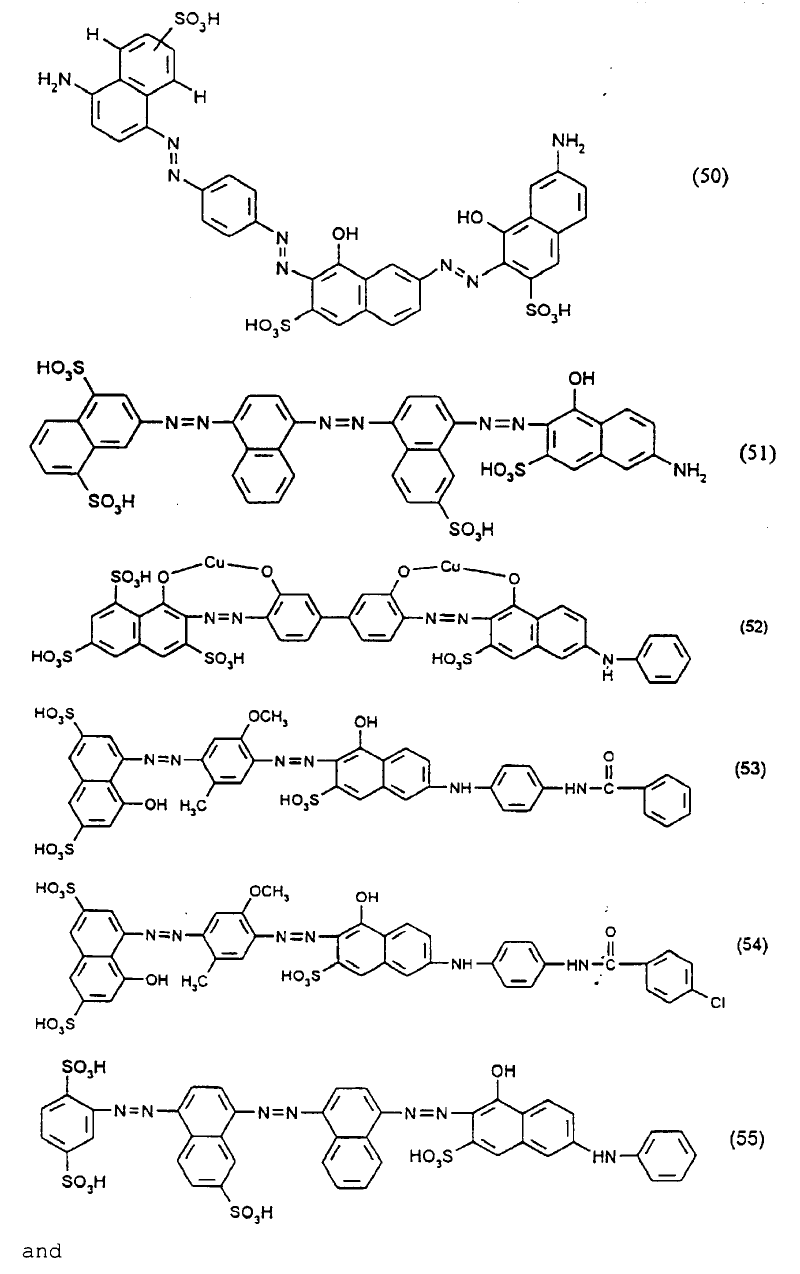

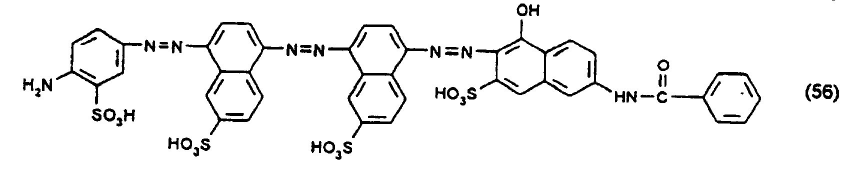

12. Process according to at least one of the preceding claims, characterized in that dyeing is carried out in the presence of a salt, in particular an alkali metal halide or an alkali metal sulphate, the amount of salt being added shortly before or after the dyeing temperature has been reached.

13. Process according to at least one of the preceding claims, characterized in that fibre mixtures of synthetic fibres and cellulosic fibre materials, in particular polyester/cotton blended fabric, are dyed under the dyeing conditions for the synthetic fibres in the presence of a disperse dyestuff for the synthetic fibres.

14. Process according to Claim 13, characterized in that polyester/cotton blended fabric is dyed in a one-stage, one-bath process, a disperse dyestuff being used in addition to a dyestuff mixture according to at least one of the preceding claims and dyeing being carried out from an aqueous liquor at temperatures in the range from 100 to 150°C, preferably 120 to 130°0, and at a pH of between 4 and 7.5.

15. Material which comprises substrates which have been dyed according to at least one of the preceding claims.

16. Dyestuff mixture comprising at least one blue-dyeing dyestuff of the formula 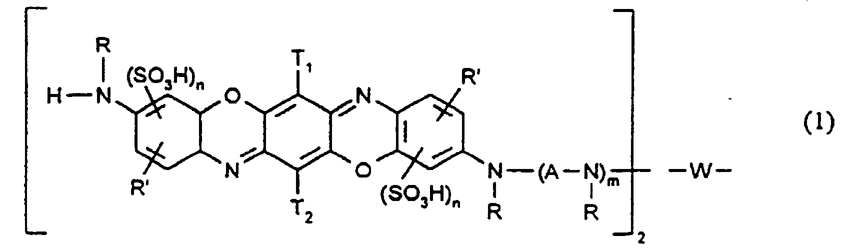 wherein
R = hydrogen or optionally substituted alkyl,
R' = hydrogen or a substituent,
T₁ and T₂ = hydrogen, chlorine, bromine, optionally substituted C₁-C₄-alkyl, C₁-C₄-alkoxy, phenyl or phenoxy,
W = a bridge member of the formula 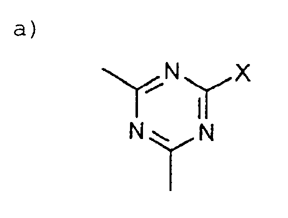 wherein
X = H or a substituent customary in dyestuffs bridged by triazine, 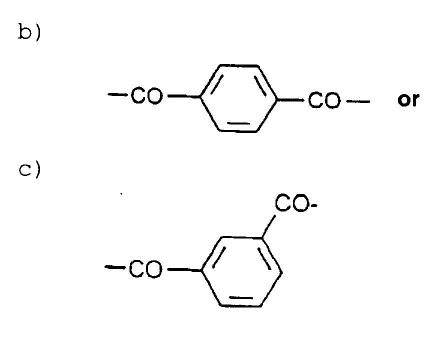
A = an optionally substituted alkylene, cycloalkylene, arylene or aralkylene radical and
m and n = 0 or 1, wherein the sulpho group with the n index, where n = 1, is in the o-position relative to -NR-,
together with at least one yellow-dyeing and/or at least one red-dyeing and/or at least one navy blue- or black-dyeing dyestuff, the substituents and indices which have the same designation having the same or different meanings.

## Revendications

1. Procédé pour teindre ou imprimer des matières fibreuses contenant des groupes hydroxy, caractérisé en ce que l'on utilise au moins un colorant teignant en bleu, de formule 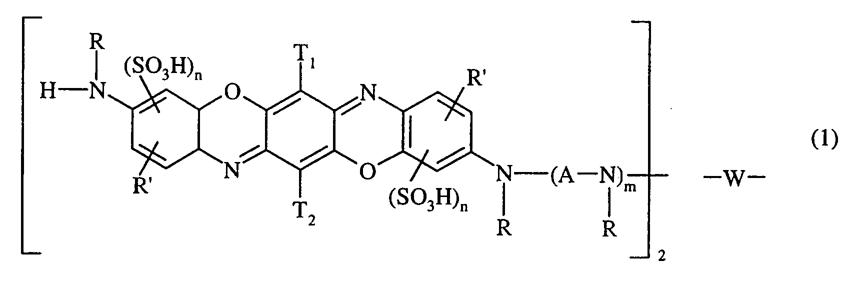 dans laquelle
R = hydrogène ou alkyle éventuellement substitué
R' = hydrogène ou substituant
T₁, T₂ = hydrogène, chlore, brome, alkyle en C₁-C₄ éventuellement substitué, alcoxy en C₁-C₄, phényle ou phénoxy,
W = pont de formule 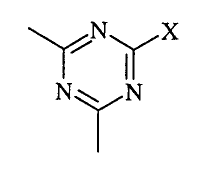 dans laquelle
X = H ou substituant usuel pour les colorants à pont de triazine, 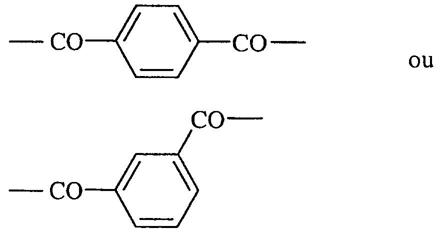
A = alkylène, cycloalkylène, arylène ou aralkylène éventuellement substitué
m, n = 0 ou 1, le groupe sulfo se trouvant, lorsque n = 1, en position ortho de -NR-,
avec au moins un colorant teignant en jaune et/ou au moins un colorant teignant en rouge et/ou au moins un colorant teignant en bleu marine ou noir, les symboles et indices identiques pouvant avoir des significations identiques ou différentes.

2. Procédé selon la revendication 1, caractérisé en ce que le colorant teignant en bleu répond à la formule 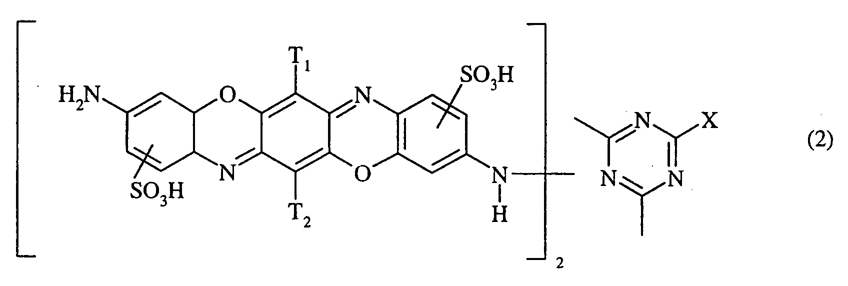 dans laquelle T₁, T₂, R et X ont les significations indiquées dans la revendication 1.

3. Procédé selon au moins une des revendications qui précèdent, caractérisé en ce que, dans le colorant de formule (1), T₁ = T₂ = Cl ou OCH₃.

4. Procédé selon la revendication 2 caractérisé en ce que, dans le colorant de formule (2), X = halogène, sulfo, alkyle en C₁-C₄, groupe thioéther, groupe éther ou groupe amino éventuellement substitué.

5. Procédé selon au moins une des revendications qui précèdent, caractérisé en ce que l'on utile en tant que colorant de formule (1) au moins un colorant de formule

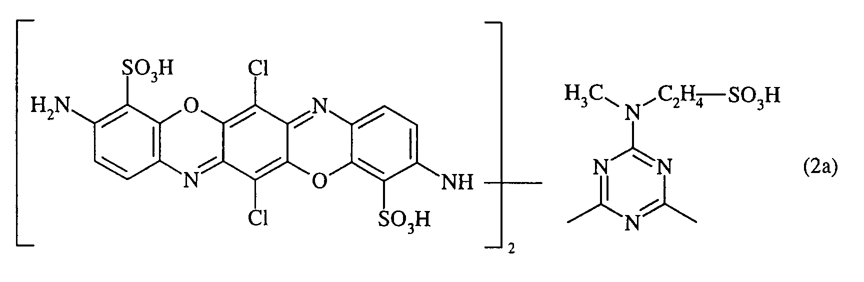

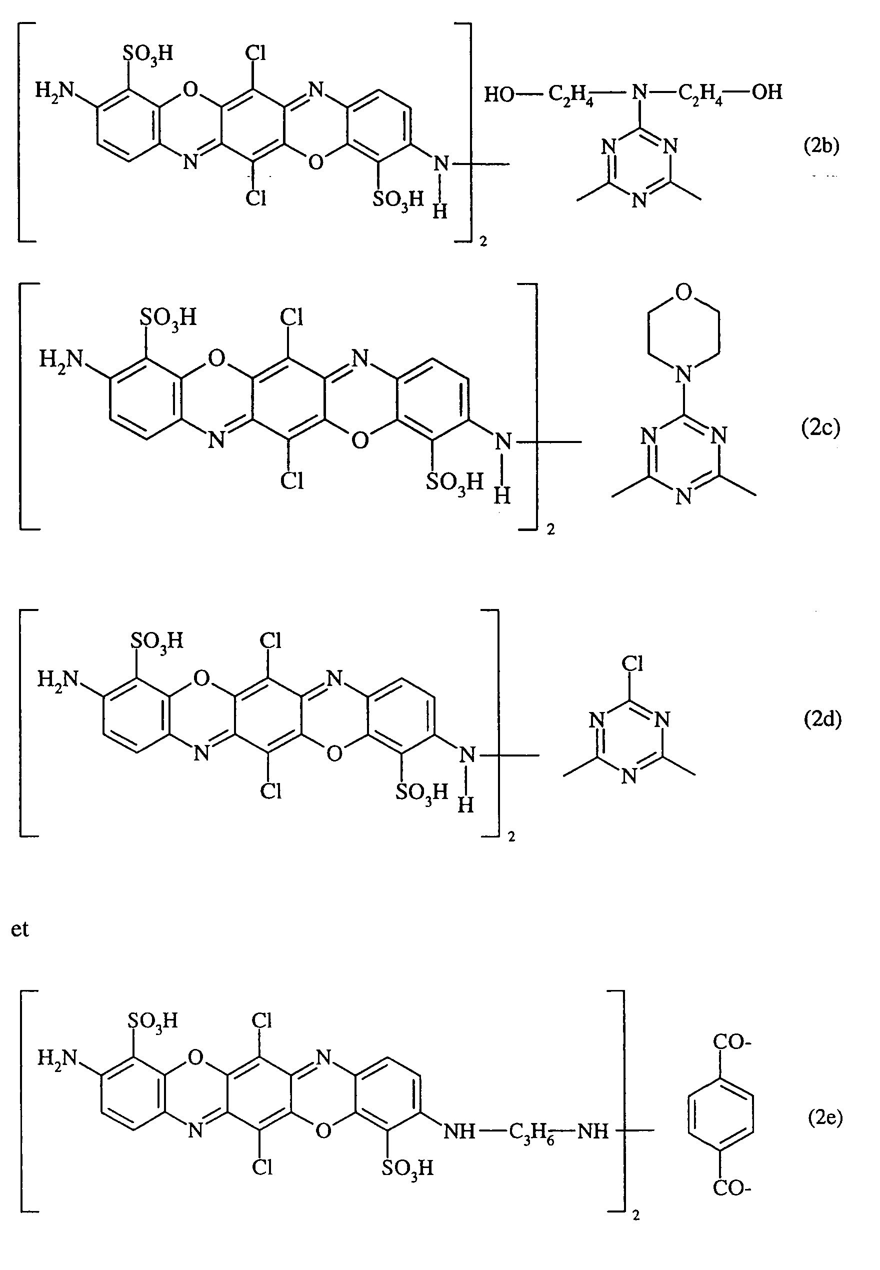

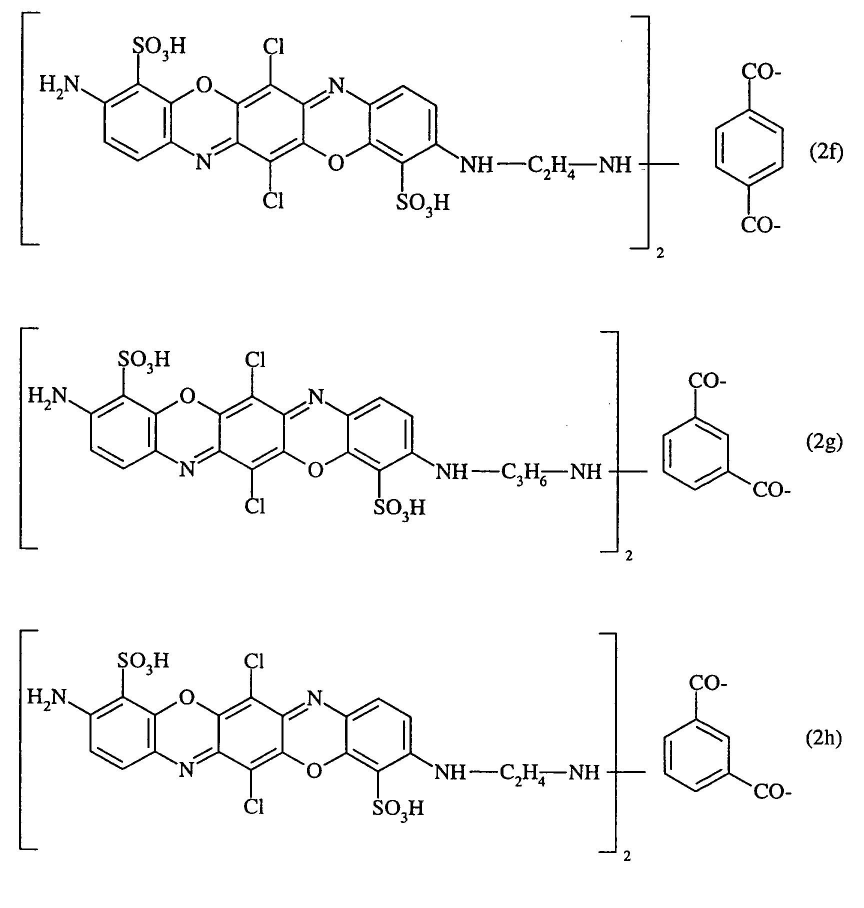

6. Procédé selon au moins une des revendications qui précèdent, caractérisé en ce que l'on utilise en tant que colorant teignant en jaune au moins un colorant de formule (3) ou (4) 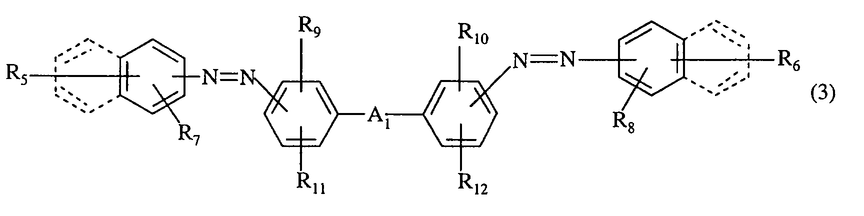 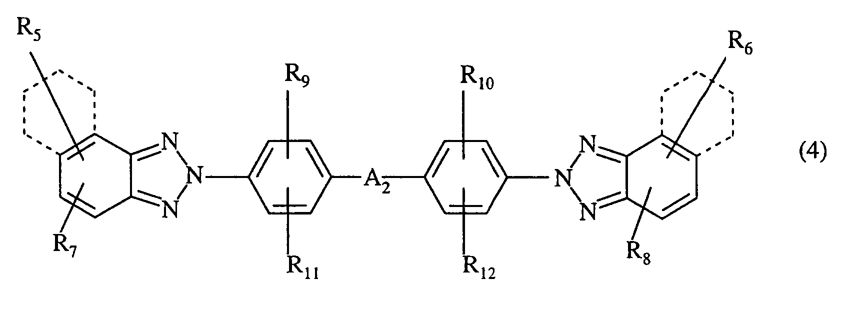 dans lesquelles
R₅ et R₆ représentent l'hydrogène, des groupes alkyle en C₁-C₈, alcoxy en C₁-C₈, des halogènes, des groupes carboxy, sulfo, uréido, alcanoylamino en C₂-C₆ éventuellement substitués dans la partie alkyle ou arylazo éventuellement substitués, R₇, R₈, R₉, R₁₀, R₁₁ et R₁₂ représentent l'hydrogène, des groupes alkyle en C₁-C₈, alcoxy en C₁-C₈, des halogènes, des groupes carboxy, sulfo, uréido ou alcanoylamino en C₂-C₆ éventuellement substitués dans la partie alkyle et A₁ représente un groupe de formule
―CF=CH― (5) 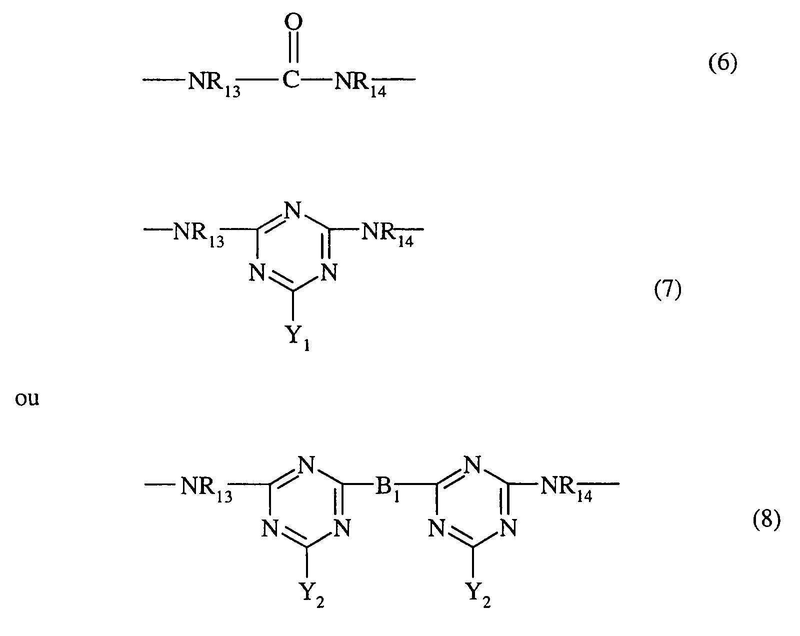
et A₂ un groupe de formule 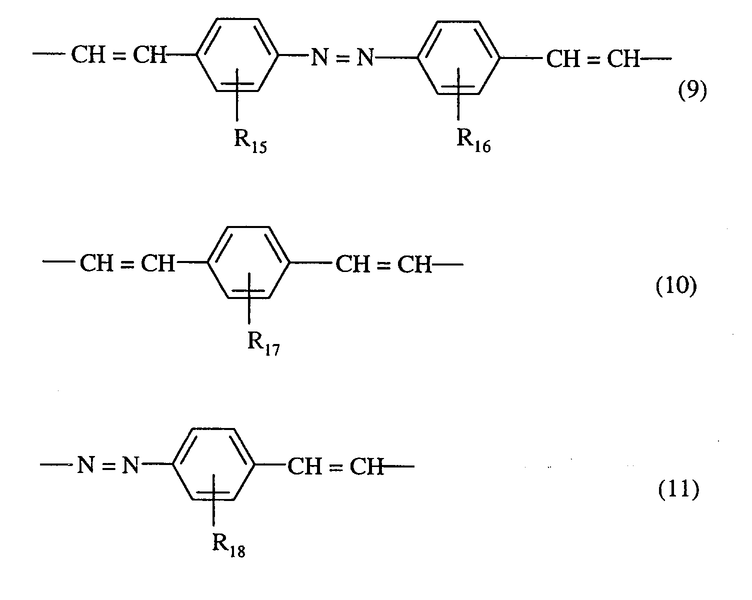 dans lesquelles R₁₃ et R₁₄ représentent l'hydrogène ou des groupes alkyle en C₁-C₈ éventuellement substitués, Y₁ de la formule (7) et Y₂ de la formule (8) représentent des groupes hydroxy, alcoxy en C₁-C₄, le chlore, le brome, des groupes alkylthio en C₁-C₄, amino, N-mono- ou N,N-di-(alkyle en C₁-C₄)-amino non substitués ou substitués dans la partie alkyle par des groupes hydroxy, sulfo, carboxy ou alcoxy en C₁-C₄, cyclohexylamino, phénylamino ou N-(alkyle en C₁-C₄)-N-phénylamino non substitués ou substitués dans la partie phényle par des groupes alkyle en C₁-C₄, alcoxy en C₁-C₄, carboxy, sulfo et/ou des halogènes, morpholino ou 3-carboxy- ou 3-carbamoyl-pyridin-1-yle et B₁ de la formule (8) représente un pont, et R₁₅, R₁₆, R₁₇ et R₁₈ représentent l'hydrogène, des groupes alkyle C₁-C₈, alcoxy en C₁-C₈, des halogènes, des groupes carboxy, sulfo, uréido ou alcanoylamino en C₂-C₆ éventuellement substitués dans la partie alkyle.

7. Procédé selon au moins une des revendications qui précèdent caractérisé en ce que l'on utilise en tant que colorant de formule (3) ou (4) un colorant de formule (16) à (25).

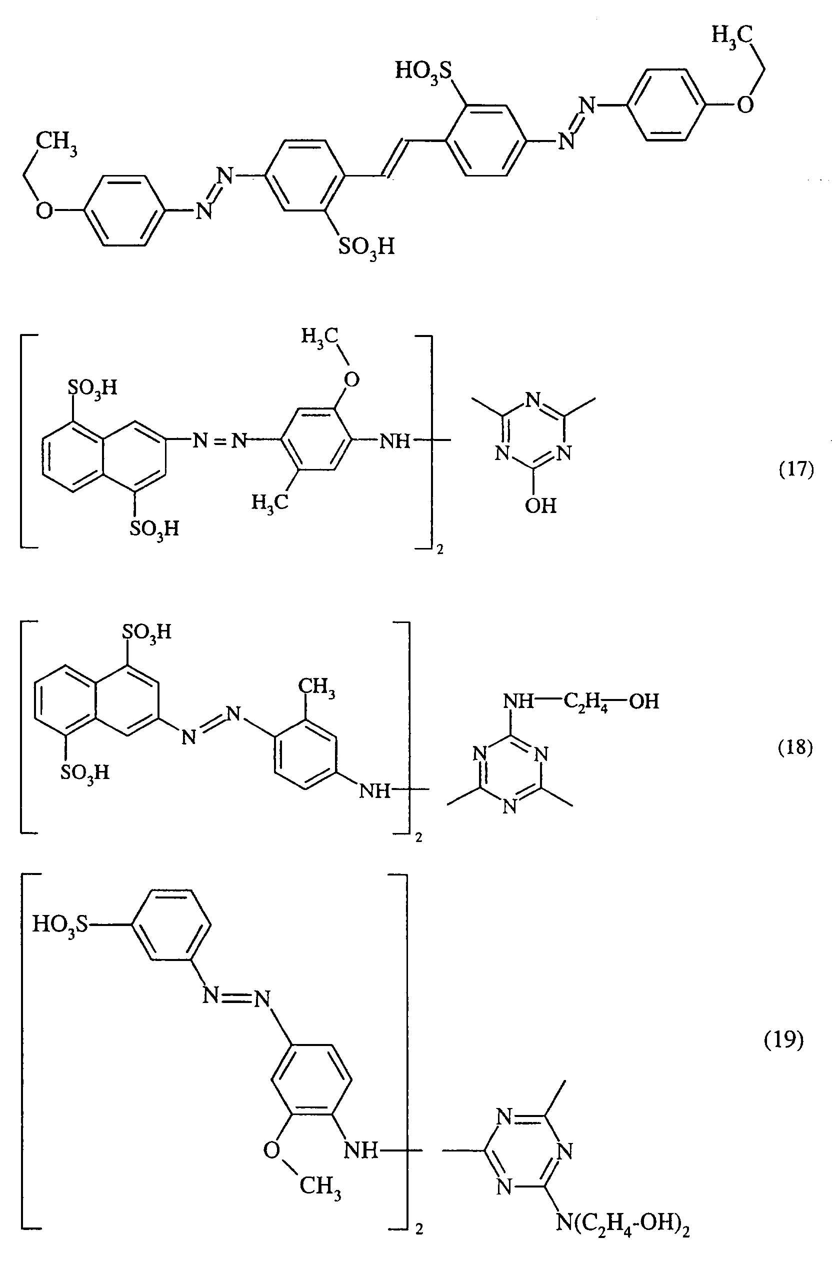

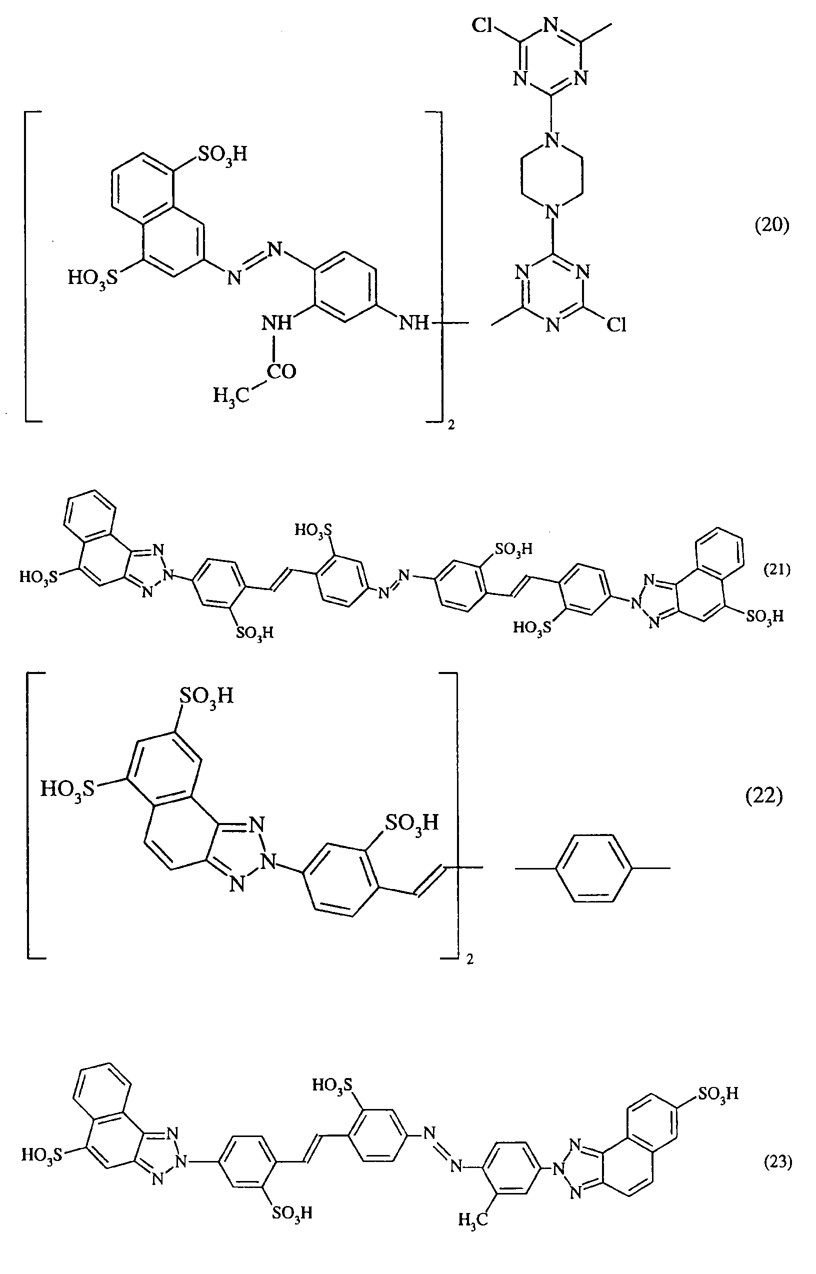

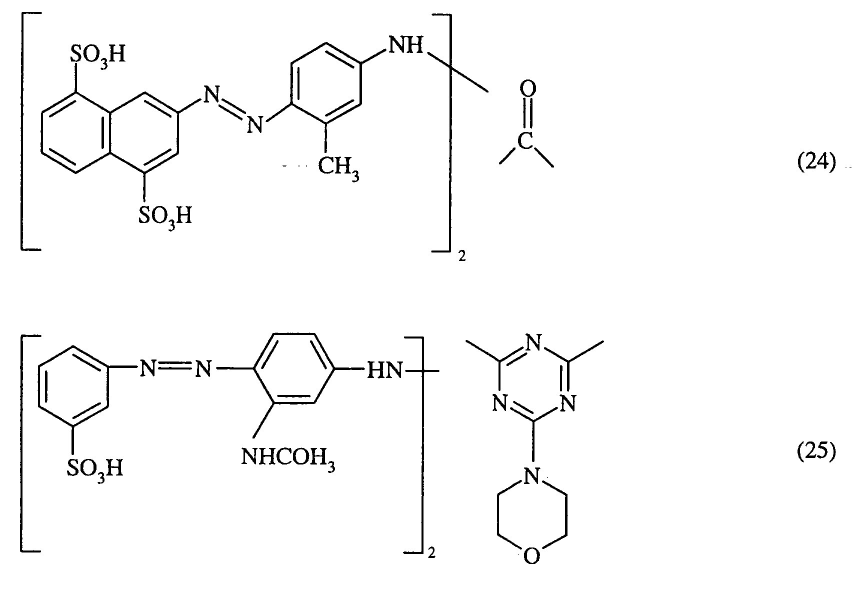

8. Procédé selon au moins des revendications qui précèdent, caractérisé en ce que l'on utilise en tant que colorant teignant en rouge au moins un colorant de formule (26) à (31) 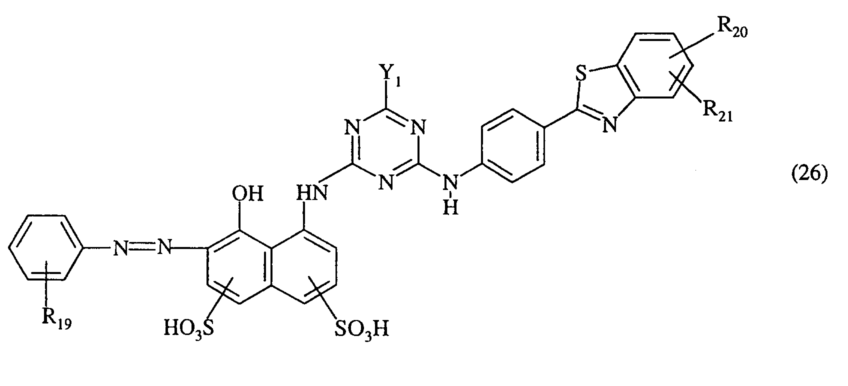 dans laquelle R₁₉, R₂₀ et R₂₁ représentent l'hydrogène, des groupes alkyle en C₁-C₈ ou alcoxy en C₁-C₈ éventuellement substitués, des halogènes, des groupes carboxy, sulfo, uréido ou alcanoylamino en C₂-C₆ éventuellement substitués dans la partie alkyle, et Y₁ a les significations indiquées dans la revendication 7, y compris les significations préférées, 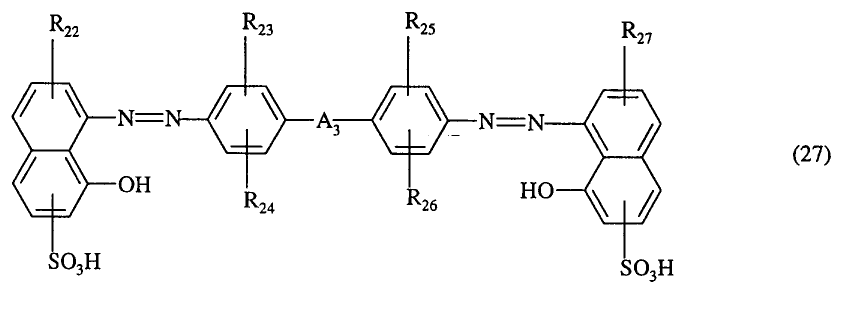 dans laquelle R₂₂, R₂₃, R₂₄, R₂₅, R₂₆ et R₂₇ représentent l'hydrogène, des groupes alkyle en C₁-C₈ ou alcoxy en C₁-C₈ éventuellement substitués, des halogènes, des groupes carboxy, sulfo, uréido ou alcanoylamino éventuellement substitués dans la partie alkyle, et A₃ représente un groupe de formule
-NH-, 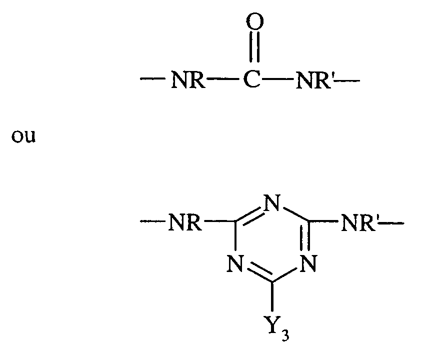 dans lesquelles R et R' représentent l'hydrogène ou des groupes alkyle en C₁-C₈ éventuellement substitués et Y₃ représente un groupe hydroxy, alcoxy en C₁-C₄, le chlore, le brome, un groupe alkylthio en C₁-C₄, amino, N-mono- ou N,N-di-(alkyle en C₁-C₄)-amino non substitués ou substitués dans la partie alkyle par des groupes hydroxy, sulfo, carboxy ou alcoxy en C₁-C₄, cyclohexylamino, phénylamino ou N(alkyle en C₁-C₄)-N-phénylamino substitués dans la partie phényle par des groupes alkyle en C₁-C₄, alcoxy en C₁-C₄, carboxy, sulfo et/ou des halogènes, un groupe morpholino ou 3-carboxy- ou 3-carbamoyl-pyrindin-1-yle, 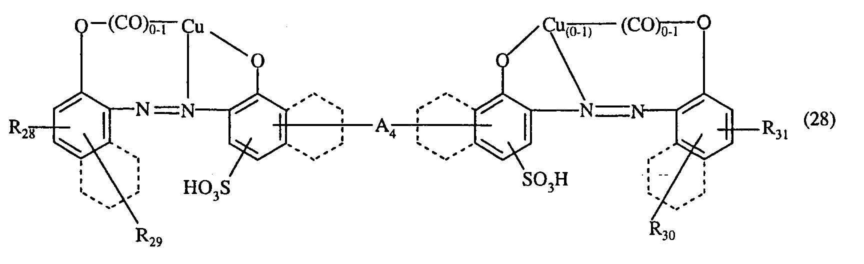 dans laquelle R₂₈, R₂₉, R₃₀ et R₃₁ représentent l'hydrogène, des groupes alkyle en C₁-C₄ ou alcoxy en C₁-C₄ éventuellement substitués, des halogènes, des groupes carboxy, sulfo, uréido, sulfamoyle ou alcanoylamino en C₂-C₆ éventuellement substitués dans la partie alkyle et A₄ a les significations indiquées pour A₃ en référence à la formule (27), 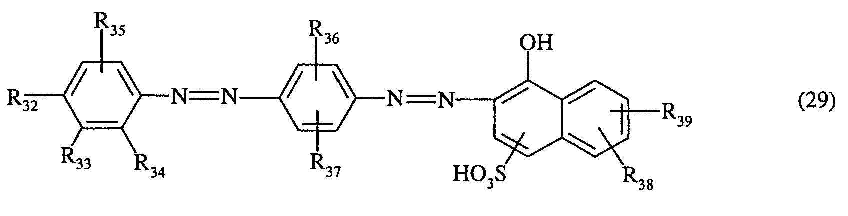 dans laquelle R₃₂, R₃₃, R₃₄, R₃₅, R₃₆, R₃₇ et R₃₈ représentent l'hydrogène, des groupes alkyle en C₁-C₈ ou alcoxy en C₁-C₈ éventuellement substitués, des halogènes, des groupes carboxy, sulfo, uréido, ou alcanoylamino en C₂-C₆ éventuellement substitués dans la partie alkyle et R₃₉ représente un groupe benzoylamino éventuellement substitués dans le cycle phényle ou un groupe, portant éventuellement d'autres substituants dans le cycle phényle, qui répond à la formule 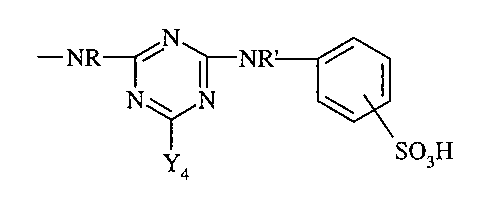 dans laquelle R et R' représentent l'hydrogène ou des groupes alkyle en C₁-C₈ éventuellement substitués et Y₄ a les significations indiquées pour Y₃ en référence à la formule (27), 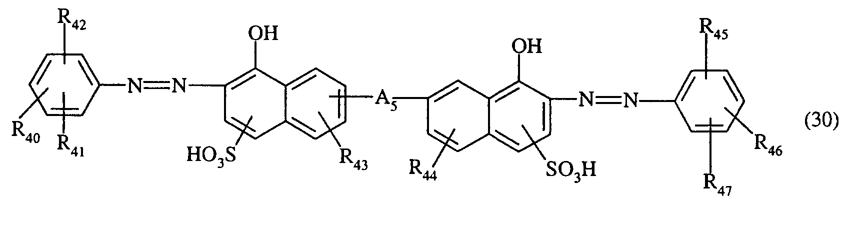 dans laquelle R₄₀, R₄₁, R₄₂, R₄₃, R₄₄, R₄₅, R₄₆ et R₄₇ représentent l'hydrogène, des groupes alkyle en C₁-C₈ ou alcoxy en C₁-C₈ éventuellement substitués, des halogènes, des groupes carboxy, sulfo, uréido, ou alcanoylamino en C₂-C₆ éventuellement substitués dans la partie alkyle, R₄₀ et R₄₆ pouvant en outre représenter des groupes phénylazo éventuellement substitués dans le cycle phényle, et A₅ a les significations indiquées pour A₃ en référence à la formule (27) ou représente un groupe de formule 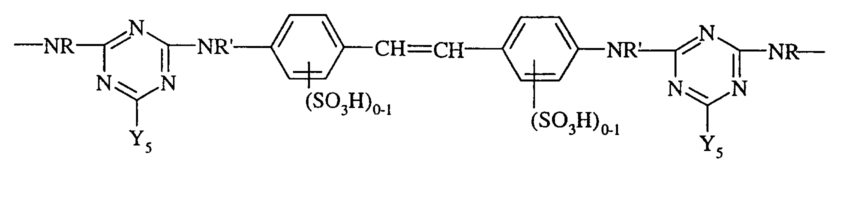 dans laquelle R et R' représentent l'hydrogène ou des groupes alkyle en C₁-C₈ éventuellement substitués et Y₅ a les significations indiquées pour Y₃ en référence à la formule (27), 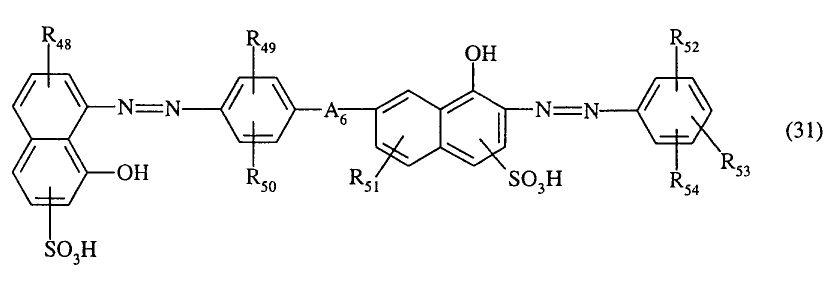 dans laquelle R₄₈, R₄₉, R₅₀, R₅₁, R₅₂, R₅₃ et R₅₄ représentent l'hydrogène, des groupes alkyle en C₁-C₈ ou alcoxy en C₁-C₈ éventuellement substitués, des halogènes, des groupes carboxy, sulfo, uréido ou alcanoylamino en C₂-C₆ éventuellement substitués dans la partie alkyle, R₅₃ pouvant en outre représenter un groupe phénylazo éventuellement substitué dans le cycle phényle, et A₆ a les significations indiquées pour A₃ en référence à la formule (27).

9. Procédé selon au moins une des revendications qui précèdent caractérisé en ce que l'on utilise en tant que colorant teignant en rouge au moins un colorant de formule (32) à (44)

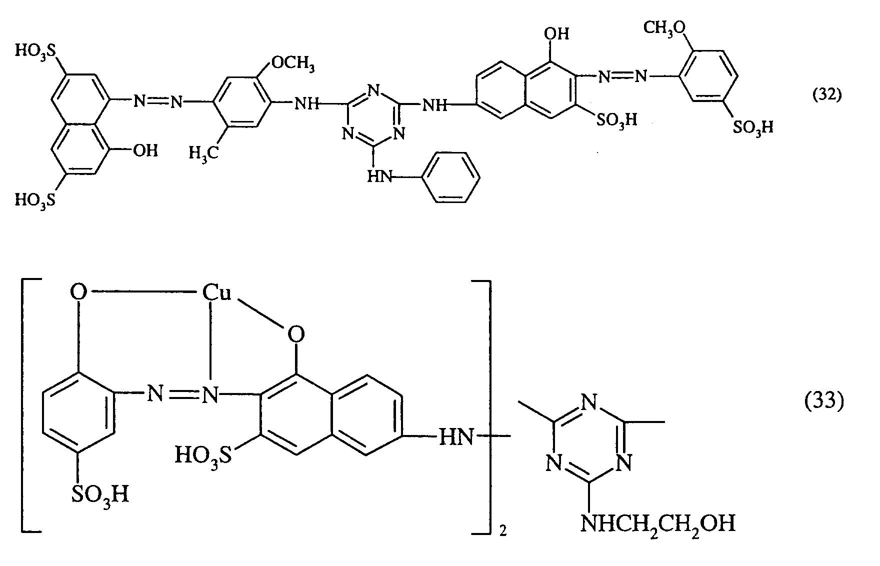

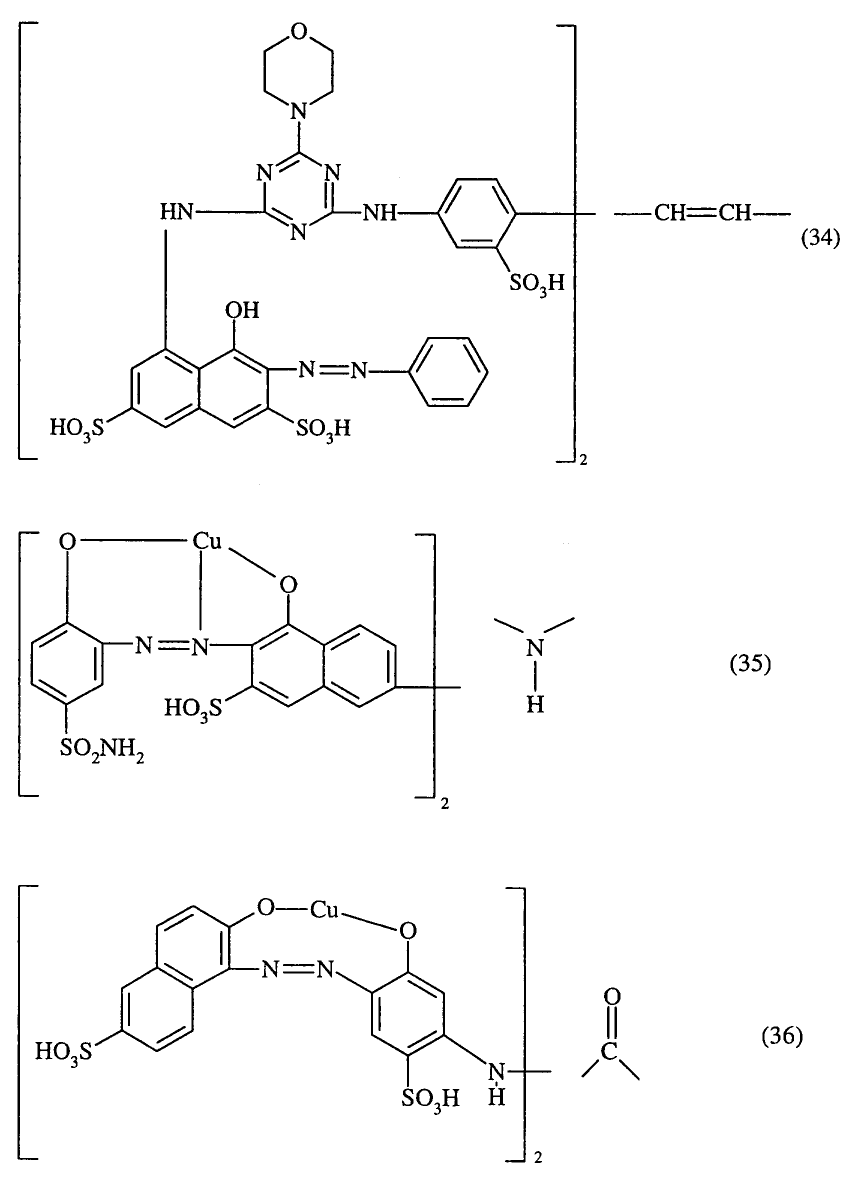

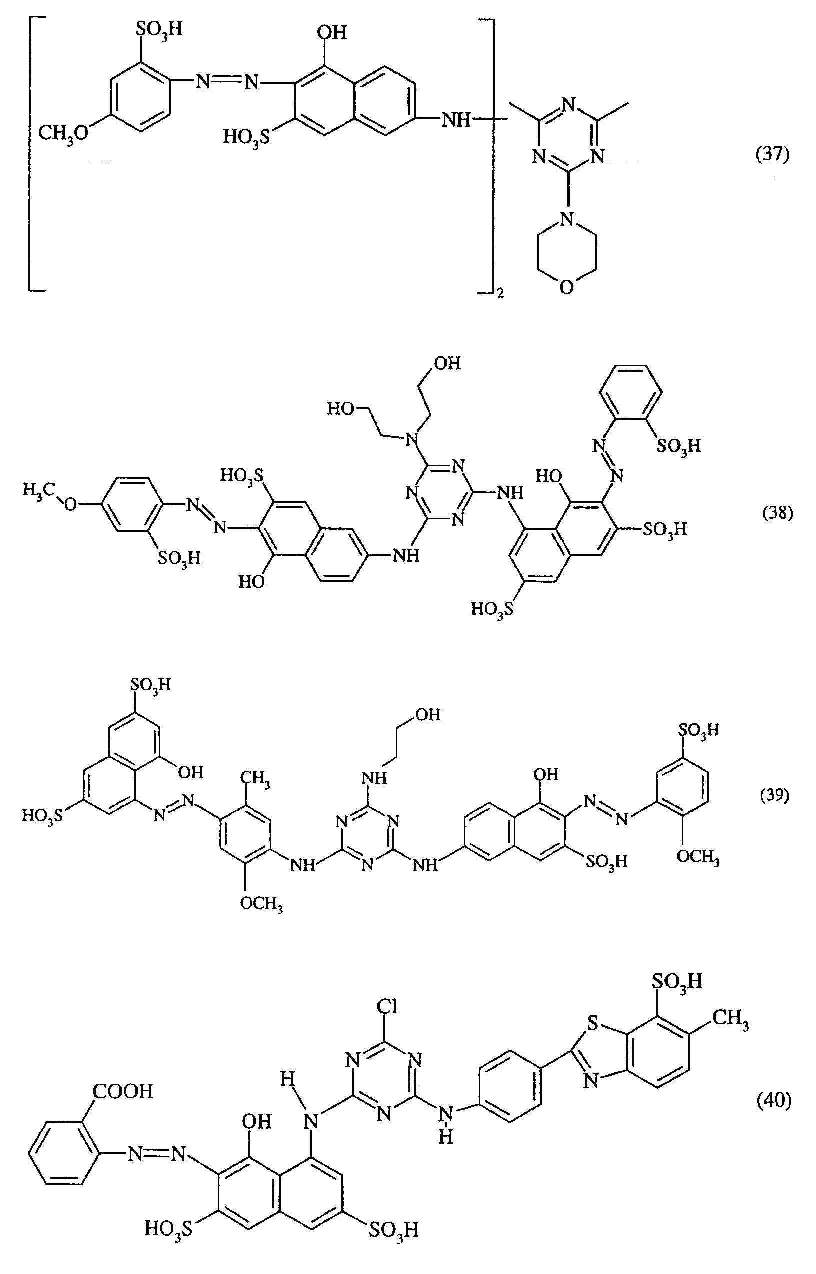

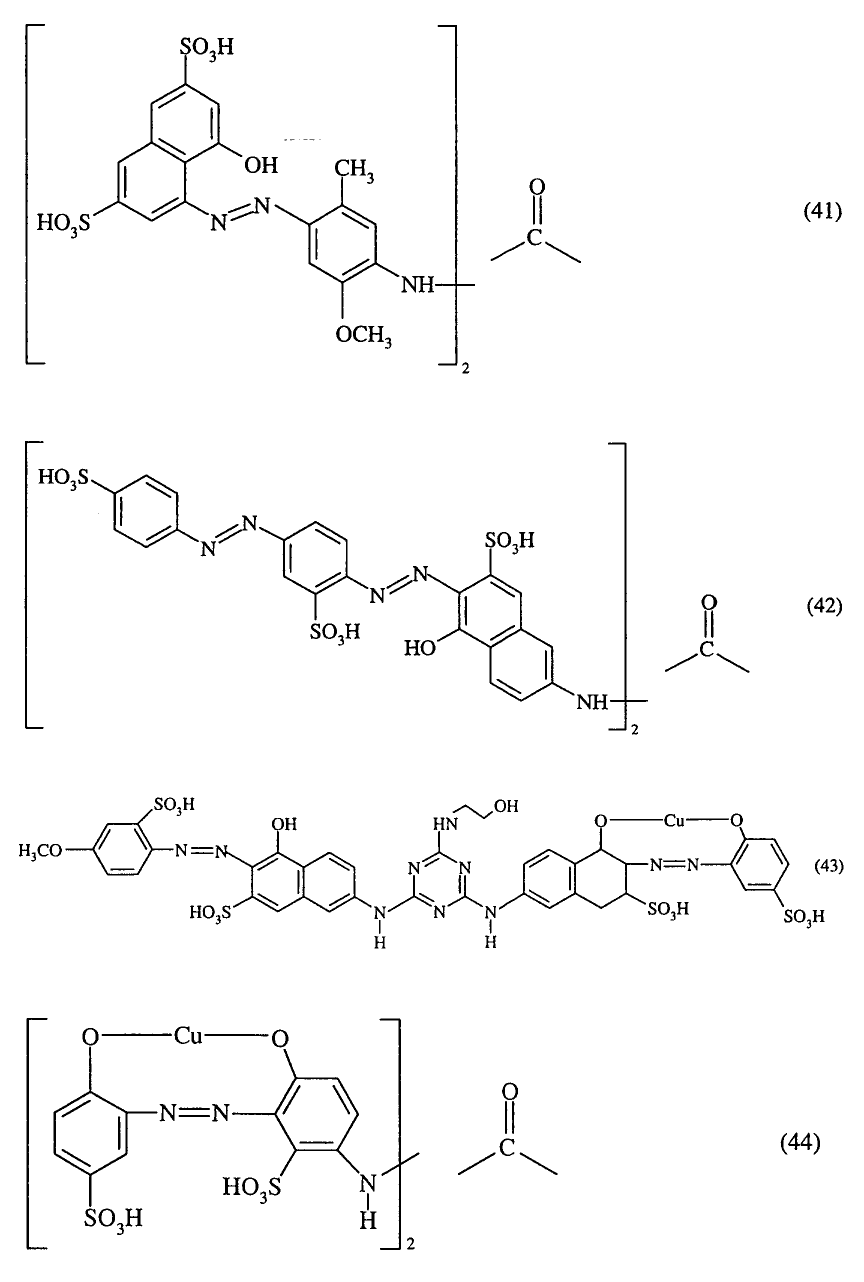

10. Procédé selon au moins une des revendications qui précèdent, caractérisé en ce que l'on utilise en tant que colorant teignant en bleu marine ou en noir, au moins un colorant de formule (45) à (48) 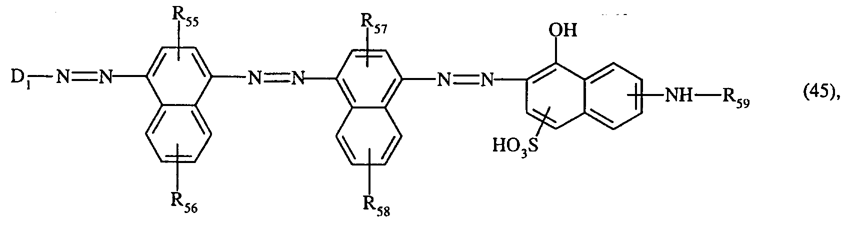 dans laquelle D₁ représente un groupe phényle ou naphtyle éventuellement substitué, R₅₅, R₅₆, R₅₇ et R₅₈ représentent l'hydrogène, des groupes alkyle en C₁-C₈ ou alcoxy en C₁-C₈ éventuellement substitué, des halogènes, des groupes carboxy, sulfo, uréido, ou alcanoylamino en C₂-C₆ éventuellement substitué dans la partie alkyle et R₅₉ représente l'hydrogène, un groupe alkyle en C₁-C₈ éventuellement substitué, un groupe alcanoyle en C₂-C₆ éventuellement substitué dans la partie alkyle ou un groupe phényle ou benzoyle éventuellement substitué dans le cycle phényle, 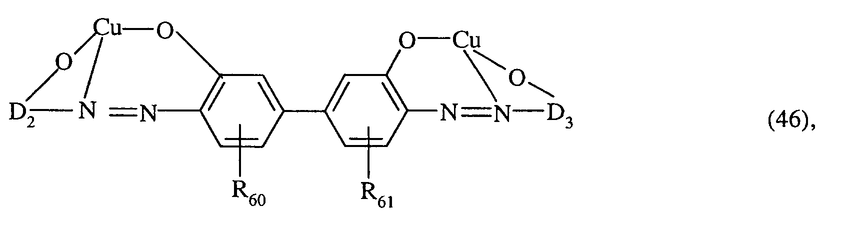 dans laquelle D₂ et D₃ représentent des groupes naphtyle éventuellement substitués et R₆₀ et R₆₁ représentent l'hydrogène, des groupes alkyle en C₁-C₈ ou alcoxy en C₁-C₈ éventuellement substitué, des halogènes, des groupes carboxy, sulfo, uréido ou alcanoylamino en C₂-C₆ éventuellement substitués dans la partie alkyle, 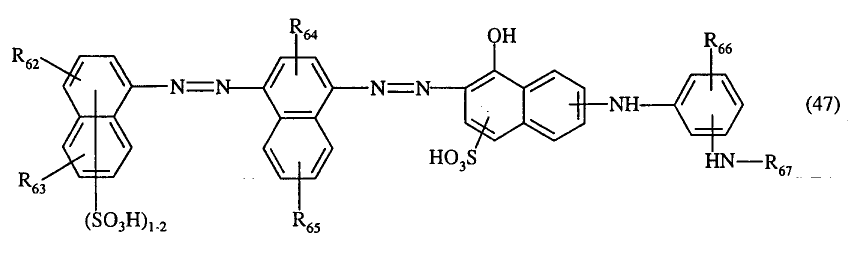 dans laquelle R₆₂, R₆₃, R₆₄, R₆₅ et R₆₆ représentent l'hydrogène, des groupes alkyle en C₁-C₈ ou alcoxy en C₁-C₈ éventuellement substitués, des halogènes, des groupes carboxy, sulfo, uréido ou alcanoylamino éventuellement substitués dans partie alkyle et R₆₇ représente l'hydrogène, un groupe alkyle en C₁-C₈ éventuellement substitué, alcanoyle en C₂-C₆ éventuellement substitué ou phényle ou benzoyle éventuellement substitué dans le cycle phényle, 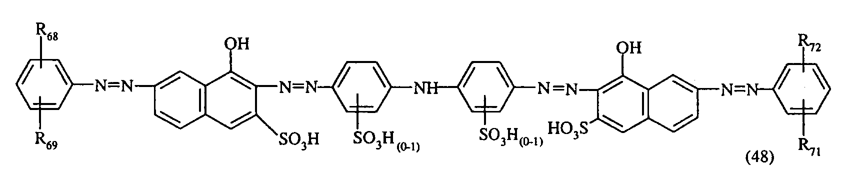 dans laquelle R₆₈, R₆₉, R₇₀ et R₇₁ représentent l'hydrogène, des groupes alkyle en C₁-C₈ ou alcoxy en C₁-C₈ éventuellement substitués, des halogènes, des groupes carboxy, sulfo, uréido ou alcanoylamino en C₂-C₆ éventuellement substitués dans partie alkyle.

11. Procédé selon au moins une des revendications qui précèdent, caractérisé en ce que l'on utilise en tant que colorant teignant en bleu marine ou en noir au moins un colorant de formule (49) à (56)

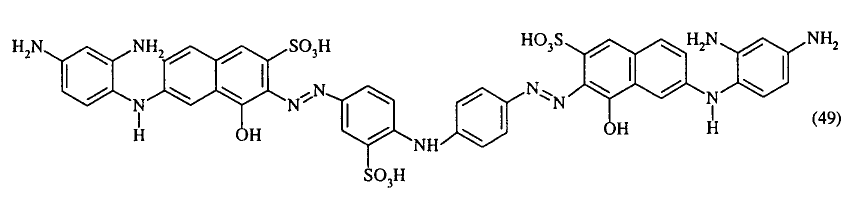

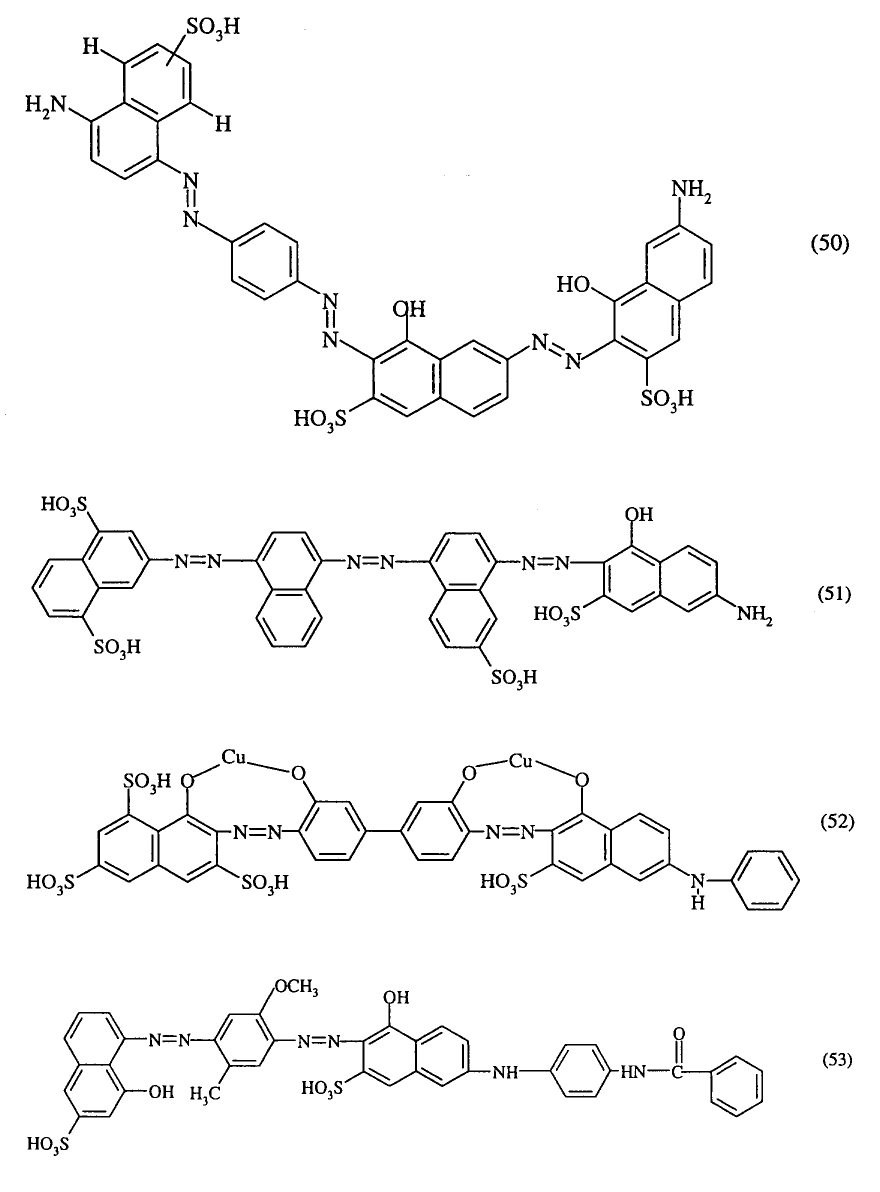

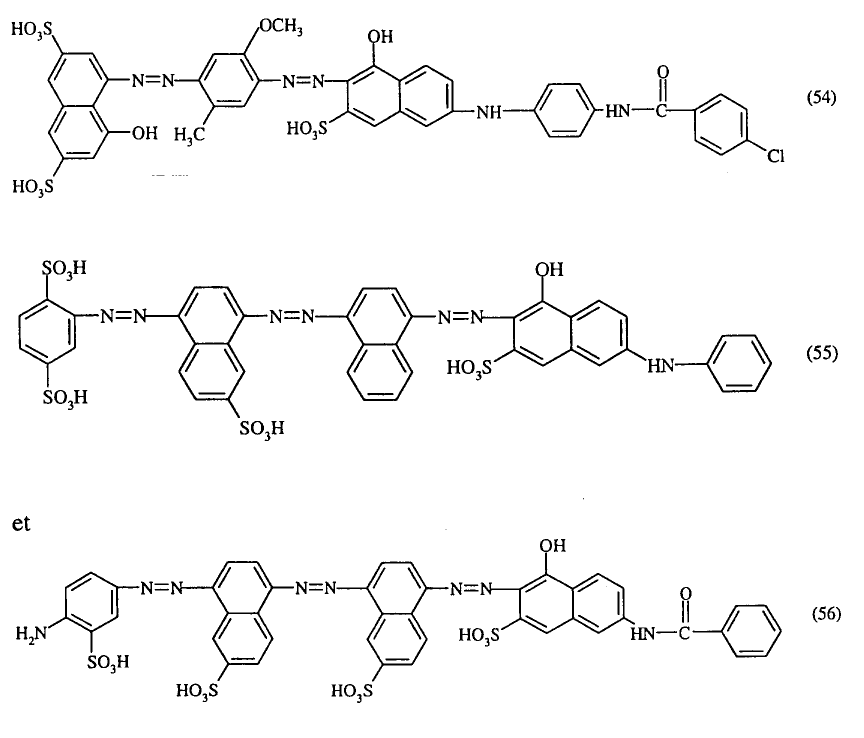

12. Procédé selon au moins une des revendications qui précèdent, caractérisé en ce que l'on teint en présence d'un sel, en particulier un halogénure alcalin ou un sulfate alcalin, ce sel étant ajouté peu avant d'atteindre la température de teinture ou après avoir atteint la température de teinture.

13. Procédé selon au moins une des revendications qui précèdent, caractérisé en ce que l'on teint des mélanges de fibres consistant en fibres synthétiques et matières fibreuses cellulosiques, en particulier tissus mélangés polyester/coton, en présence d'un colorant dispersé pour les fibres synthétiques, dans les conditions de teinture des fibres synthétiques.

14. Procédé selon la revendication 13, caractérisé en ce que l'on teint les tissus mélangés polyester/coton en un seul stade opératoire et en un seul bain, en utilisant, en plus d'un mélange de colorants selon au moins une des revendications qui précèdent, un colorant dispersé et en teignant en bain aqueux à des températures dans l'intervalle de 100 à 150°C, de préférence de 120 à 130°C, et à un pH de 4 à 7,5.

15. Matière contenant des substrats qui ont été teints selon au moins une des revendications qui précèdent.

16. Mélange de colorants contenant au moins un colorant teignant en bleu, de formule 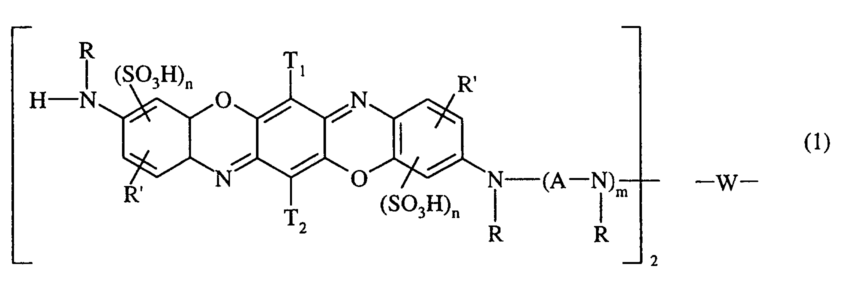 dans laquelle
R = hydrogène ou alkyle éventuellement substitué
R' = hydrogène ou substituant
T₁, T₂ = hydrogène, chlore, brome, alkyle en C₁-C₄ éventuellement substitué, alcoxy en C₁-C₄, phényle ou phénoxy,
W = pont de formule 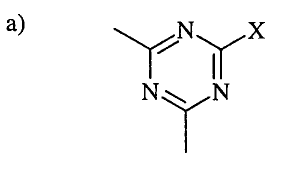 dans laquelle
X = H ou substituant usuel pour les colorants à ponts de triazine, 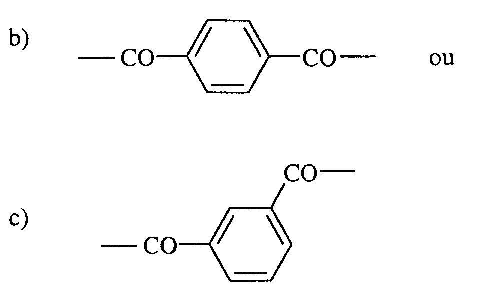
A = alkylène, cycloalkylène, arylène ou aralkylène éventuellement substitué
m, n = 0 ou 1, le groupe sulfo étant en position ortho de -NR- lorsque n = 1,
avec au moins un colorant teignant en jaune et/ou au moins un colorant teignant en rouge et/ou au moins un colorant teignant en bleu marine ou noir, les symboles et indices identiques pouvant avoir des significations identiques ou différentes.
